# EUROPEAN PATENT APPLICATION

(11) **EP 4 319 461 A1**
(43) Date of publication of application: **07.02.2024**
(21) Application number: 21933901.7
(22) Date of filing: 31.03.2021
(51) Int. Cl.: H04W 76/20

(54) **SESSION MANAGEMENT METHOD AND APPARATUS FOR CROSS-DOMAIN COMPUTING-AWARE NETWORK**

(71) Applicant: Huawei Technologies Co., Ltd., Longgang Shenzhen, Guangdong 518129 (CN)
(72) Inventor: WANG, Yan, Shenzhen, Guangdong 518129 (CN); HU, Weihua, Shenzhen, Guangdong 518129 (CN)
(74) Representative: Gill Jennings & Every LLP
(86) International application number: PCT/CN2021/084770
(87) International publication number: WO 2022/205241

(57) **Abstract**

This application discloses a session management method for a cross-domain computing-aware network and an apparatus. The method includes: A first session management function network element in a first domain may interact with a second session management function network element in a second domain to establish a first session between the first domain and the second domain, where one end of the first session is connected to a first border computing-aware user plane function network element in the first domain, and the other end is connected to a second border computing-aware user plane function network element in the second domain. In this way, the first domain and the second domain may create a cross-domain computing-aware network based on the inter-domain first session, to implement cross-domain extension of computing-aware routing, and resolve a problem that coverage and a user group of an edge application of a singledomain computing-aware network are limited.

## Description

### TECHNICAL FIELD

This application relates to the field of communication technologies, and in particular, to a session management method for a cross-domain computing-aware network and an apparatus.

### BACKGROUND

Currently, a computing-aware network mainly implements a scale-up dense deployment scenario of multi-access edge computing (multi-access edge computing, MEC) for a single operator. However, in a scenario in which the single operator independently deploys the computing-aware network, each operator provides a mobile computing power service, which limits coverage and a user group of an edge application to some extent. This is because an application developer of the edge application chooses to target only a customer group of a specific operator, or needs to develop versions that adapt to a plurality of operators for a same application. This causes extra development costs and affects commercial interests of the application developer.

To resolve a problem of deploying a cross-operator computing-aware network, the global system for mobile communications association (global system for mobile communications association, GSMA) proposed an operator platform (operator platform, OP) architecture. The OP architecture is a group of functional modules that enable operators to deploy solutions or applications of enterprise users at the nearest place to customers, aggregate infrastructure capabilities of the plurality of operators, and provide a unified capability exposure interface for application providers. However, the OP architecture defines only a coordination interface on a management plane and is not related to definitions of a control plane and a user plane. In consideration that a computing-aware network has a computing-aware capability and dynamic routing, cross-operator computing power coordination still depends on user plane interconnection and routing relationship establishment, which cannot be implemented directly by using the OP architecture on the management plane.

Therefore, it is an urgent problem to be solved that how to implement cross-operator computing-aware routing and packet forwarding on the user plane.

### SUMMARY

This application provides a session management method for a cross-domain computing-aware network and an apparatus, to implement cross-domain deployment and session management of a computing-aware network in an environment of a plurality of operators, and resolve a problem that coverage and a user group of an edge application of a single-operator computing-aware network are limited.

According to a first aspect, an embodiment of this application provides a session management method for a cross-domain computing-aware network. The method may be performed by a first session management function network element in a first domain, or may be performed by a component (for example, a chip or a circuit) configured in the first session management function network element.

The method includes: The first session management function network element in the first domain receives a first request message from a second session management function network element in a second domain, where the first request message requests to establish a first session between the first domain and the second domain of a cross-domain computing-aware network; the first session management function network element sends a second request message to a first border computing-aware user plane function network element in the first domain, where the second request message requests to establish the first session, one end of the first session is connected to the first border computing-aware user plane function network element in the first domain, and the other end is connected to a second border computing-aware user plane function network element in the second domain; the first session management function network element receives a second response message from the first border computing-aware user plane function network element, where the second response message indicates that the first session is established on the first border computing-aware user plane function network element side; and the first session management function network element sends a first response message to the second session management function network element, where the first response message indicates that the first session is established on the first domain side.

In the foregoing technical solution, the first session management function network element in the first domain may interact with the second session management function network element in the second domain to establish the first session between the first domain and the second domain, so that the first domain and the second domain may create the cross-domain computing-aware network based on the inter-domain first session, to implement cross-domain extension of computing-aware routing, and resolve a problem that coverage and a user group of an edge application of a single-domain computing-aware network are limited.

In a possible design of the first aspect, the first request message includes first inter-domain tunnel information, and the second request message includes the first inter-domain tunnel information, where the first inter-domain tunnel information is used for establishing a tunnel through which the first border computing-aware user plane function network element sends a packet to the second border computing-aware user plane function network element.

In a possible design of the first aspect, the first request message includes identification information of the second border computing-aware user plane function network element, and the second request message includes the identification information of the second border computing-aware user plane function network element.

In a possible design of the first aspect, the first response message includes second inter-domain tunnel information, and the second inter-domain tunnel information is used for establishing a tunnel through which the second border computing-aware user plane function network element sends a packet to the first border computing-aware user plane function network element.

In a possible design of the first aspect, the method further includes: The first session management function network element generates the second inter-domain tunnel information; or The second response message includes the second inter-domain tunnel information.

In a possible design of the first aspect, the method further includes: The first session management function network element receives a third request message from a first computing management function network element in the first domain, where the third request message requests to establish a second session in the first domain of the cross-domain computing-aware network; the first session management function network element sends a fourth request message to the first border computing-aware user plane function network element, where the fourth request message requests to establish the second session; the first session management function network element receives a fourth response message from the first border computing-aware user plane function network element, where the fourth response message indicates that the second session is established on the first border computing-aware user plane function network element side; and the first session management function network element sends a third response message to the first computing management function network element, where the third response message indicates that the second session is established. In this way, the first session management function network element in the first domain may further establish the second session in the first domain based on the request of the first computing management function network element in the first domain, so that the first domain may create or update an intra-domain part of the cross-domain computing-aware network in the first domain based on the second session in the domain.

According to a second aspect, an embodiment of this application provides a session management method for a cross-domain computing-aware network. The method may be performed by a second session management function network element in a second domain, or may be performed by a component (for example, a chip or a circuit) configured in the second session management function network element.

The method includes: The second session management function network element in the second domain sends a first request message to a first session management function network element in a first domain, where the first request message requests to establish a first session between the first domain and the second domain of a cross-domain computing-aware network; the second session management function network element receives a first response message from the first session management function network element, where the first response message indicates that the first session is established on the first domain side; the second session management function network element sends a fifth request message to a second border computing-aware user plane function network element in the second domain, where the fifth request message requests to establish the first session, one end of the first session is connected to the second border computing-aware user plane function network element in the second domain, and the other end is connected to a first border computing-aware user plane function network element in the first domain; and the second session management function network element receives a fifth response message from the second border computing-aware user plane function network element, where the fifth response message indicates that the first session is established on the second border computing-aware user plane function network element side.

In the foregoing technical solution, the second session management function network element in the second domain may interact with the first session management function network element in the first domain to establish the first session between the first domain and the second domain, so that the first domain and the second domain may create the cross-domain computing-aware network based on the inter-domain first session, to implement cross-domain extension of computing-aware routing, and resolve a problem that coverage and a user group of an edge application of a single-domain computing-aware network are limited.

In a possible design of the second aspect, the first request message includes first inter-domain tunnel information, and the first inter-domain tunnel information is used for establishing a tunnel through which the first border computing-aware user plane function network element sends a packet to the second border computing-aware user plane function network element.

In a possible design of the second aspect, the method further includes: The second session management function network element generates the first inter-domain tunnel information; or The second session management function network element receives the first inter-domain tunnel information from the second border computing-aware user plane function network element.

In a possible design of the second aspect, the first request message includes identification information of the second border computing-aware user plane function network element.

In a possible design of the second aspect, the first response message includes second inter-domain tunnel information, and the fifth request message includes the second inter-domain tunnel information; and the second inter-domain tunnel information is used for establishing a tunnel through which the second border computing-aware user plane function network element sends a packet to the first border computing-aware user plane function network element.

In a possible design of the second aspect, the fifth request message includes identification information of the first border computing-aware user plane function network element.

In a possible design of the second aspect, the method further includes: The second session management function network element receives a sixth request message from a second computing management function network element in the second domain, where the sixth request message requests to establish the first session; and the second session management function network element sends a sixth response message to the second computing management function network element, where the sixth response message indicates that the first session is established.

In the foregoing technical solution, the second session management function network element in the second domain may interact with the first session management function network element in the first domain based on the request of the second computing management function network element in the second domain, to establish the first session between the first domain and the second domain.

In a possible design of the second aspect, the sixth request message includes one or more of the following information: identification information of the first session management function network element, identification information of the first border computing-aware user plane function network element, identification information of the second border computing-aware user plane function network element, and identification information of the cross-domain computing-aware network.

In a possible design of the second aspect, the method further includes: The second session management function network element receives a seventh request message from the second computing management function network element in the second domain, where the seventh request message requests to establish a third session in the second domain of the cross-domain computing-aware network; the second session management function network element sends an eighth request message to the second border computing-aware user plane function network element, where the eighth request message requests to establish the third session; the second session management function network element receives an eighth response message from the second border computing-aware user plane function network element, where the eighth response message indicates that the third session is established on the second border computing-aware user plane function network element side; and the second session management function network element sends a seventh response message to the second computing management function network element, where the seventh response message indicates that the third session is established. In this way, the second session management function network element in the second domain may further establish the third session in the second domain based on the request of the second computing management function network element in the second domain, so that the second domain may create or update an intra-domain part of the cross-domain computing-aware network in the second domain based on the third session in the domain.

According to a third aspect, an embodiment of this application provides a session management method for a cross-domain computing-aware network. The method may be performed by a first computing management function network element in a first domain, or may be performed by a component (for example, a chip or a circuit) configured in the first computing management function network element.

The method includes: The first computing management function network element in the first domain sends a ninth request message to a second computing management function network element in a second domain, where the ninth request message requests to create a cross-domain computing-aware network, and the cross-domain computing-aware network includes the first domain and the second domain; and the first computing management function network element receives a ninth response message from the second computing management function network element, where the ninth response message indicates that the cross-domain computing-aware network is created on the second domain side.

In the foregoing technical solution, to create the cross-domain computing-aware network, the first computing management function network element in the first domain may send the request to the second computing management function network element in the second domain. In this way, after subsequently creating the cross-domain computing-aware network on the second domain side, the second computing management function network element may return the response to the first computing management function network element, so that the first computing management function network element continues to create the cross-domain computing-aware network on the first domain side, so as to create the cross-domain computing-aware network.

In a possible design of the third aspect, the ninth request message includes one or more of the following information: identification information of a first session management function network element in the first domain, identification information of a first border computing-aware user plane function network element in the first domain, and identification information of the cross-domain computing-aware network.

In a possible design of the third aspect, the method further includes: The first computing management function network element sends a third request message to the first session management function network element in the first domain, where the third request message requests to establish a second session in the first domain of the cross-domain computing-aware network; and the first computing management function network element receives a third response message from the first session management function network element, where the third response message indicates that the second session is established.

According to a fourth aspect, an embodiment of this application provides a session management method for a cross-domain computing-aware network. The method may be performed by a second computing management function network element in a second domain, or may be performed by a component (for example, a chip or a circuit) configured in the second computing management function network element.

The method includes: The second computing management function network element in the second domain receives a ninth request message from a first computing management function network element in a first domain, where the ninth request message requests to create a cross-domain computing-aware network, and the cross-domain computing-aware network includes the first domain and the second domain; the second computing management function network element sends a sixth request message to a second session management function network element in the second domain, where the sixth request message requests to establish a first session between the first domain and the second domain of the cross-domain computing-aware network, one end of the first session is connected to a second border computing-aware user plane function network element in the second domain, and the other end is connected to a first border computing-aware user plane function network element in the first domain; the second computing management function network element receives a sixth response message from the second session management function network element, where the sixth response message indicates that the first session is established; and the second computing management function network element sends a ninth response message to the first computing management function network element, where the ninth response message indicates that the cross-domain computing-aware network is created on the second domain side.

In the foregoing technical solution, the second computing management function network element in the second domain may receive the request that is from the first computing management function network element in the first domain and that requests to create the cross-domain computing-aware network, to further establish the first session between the first domain and the second domain by interacting with the second session management function in the second domain, and return the response to the first computing management function network element. In this way, the first computing management function network element may subsequently continue to create the cross-domain computing-aware network on the first domain side, to create the cross-domain computing-aware network.

In a possible design of the fourth aspect, the ninth request message includes one or more of the following information: identification information of a first session management function network element in the first domain, identification information of the first border computing-aware user plane function network element in the first domain, and identification information of the cross-domain computing-aware network.

In a possible design of the fourth aspect, the sixth request message includes one or more of the following information: identification information of the first session management function network element in the first domain, identification information of the first border computing-aware user plane function network element in the first domain, identification information of the second border computing-aware user plane function network element, and identification information of the cross-domain computing-aware network.

In a possible design of the fourth aspect, the method further includes: The second computing management function network element sends a seventh request message to the second session management function network element, where the seventh request message requests to establish a third session in the second domain of the cross-domain computing-aware network; and the second computing management function network element receives a seventh response message from the second session management function network element, where the seventh response message indicates that the third session is established.

According to a fifth aspect, an embodiment of this application provides a session management method for a cross-domain computing-aware network. The method may be performed by a first border computing-aware user plane function network element in a first domain, or may be performed by a component (for example, a chip or a circuit) configured in the first border computing-aware user plane function network element.

The method includes: The first border computing-aware user plane function network element in the first domain receives a second request message from a first session management function network element in the first domain, where the second request message requests to establish a first session between the first domain and a second domain of a cross-domain computing-aware network, one end of the first session is connected to the first border computing-aware user plane function network element in the first domain, and the other end is connected to a second border computing-aware user plane function network element in the second domain, and the second request message includes first inter-domain tunnel information; the first border computing-aware user plane function network element establishes, based on the first inter-domain tunnel information, a tunnel through which the first border computing-aware user plane function network element sends a packet to the second border computing-aware user plane function network element; and the first border computing-aware user plane function network element sends a second response message to the first session management function network element, where the second response message indicates that the first session is established on the first border computing-aware user plane function network element side.

In a possible design of the fifth aspect, the method further includes: The first border computing-aware user plane function network element establishes an inter-domain forwarding neighbor relationship with the second border computing-aware user plane function network element, where the inter-domain forwarding neighbor relationship is used by the first border computing-aware user plane function network element to send a service request packet to the second border computing-aware user plane function network element.

In the foregoing technical solution, the first border computing-aware user plane function network element in the first domain may determine, based on the request of the first session management function network element in the first domain, the inter-domain forwarding neighbor relationship with the second border computing-aware user plane function network element in the second domain, and establish the tunnel for sending the packet to the second border computing-aware user plane function network element, to establish the first session between the first domain and the second domain on the first border computing-aware user plane function network element side, and return the response to the first session management function network element.

The first border computing-aware user plane function network element is introduced into the first domain, and the first session is established between the first border computing-aware user plane function network element and the second border computing-aware user plane function network element in the second domain, so that a computing-aware network in the first domain can be interconnected to a computing-aware network in the second domain, to form the cross-domain computing-aware network, so as to implement cross-domain extension of computing-aware routing, and resolve a problem that coverage and a user group of an edge application of a single-domain computing-aware network are limited.

In a possible design of the fifth aspect, the second request message includes identification information of the second border computing-aware user plane function network element.

In a possible design of the fifth aspect, the method further includes: The first border computing-aware user plane function network element generates second inter-domain tunnel information, where the second inter-domain tunnel information is used for establishing a tunnel through which the second border computing-aware user plane function network element sends a packet to the first border computing-aware user plane function network element, and the second response message includes the second inter-domain tunnel information.

In a possible design of the fifth aspect, the method further includes: The first border computing-aware user plane function network element receives a fourth request message from the first session management function network element, where the fourth request message requests to establish a second session in the first domain of the cross-domain computing-aware network; and the first border computing-aware user plane function network element sends a fourth response message to the first session management function network element, where the fourth response message indicates that the second session is established on the first border computing-aware user plane function network element side.

According to a sixth aspect, an embodiment of this application provides a session management method for a cross-domain computing-aware network. The method may be performed by a second border computing-aware user plane function network element in a second domain, or may be performed by a component (for example, a chip or a circuit) configured in the second border computing-aware user plane function network element.

The method includes: The second border computing-aware user plane function network element in the second domain receives a fifth request message from a second session management function network element in the second domain, where the fifth request message requests to establish a first session between a first domain and the second domain of a cross-domain computing-aware network, one end of the first session is connected to the second border computing-aware user plane function network element in the second domain, and the other end is connected to a first border computing-aware user plane function network element in the first domain; and the fifth request message includes second inter-domain tunnel information; the second border computing-aware user plane function network element establishes, based on the second inter-domain tunnel information, a tunnel through which the second border computing-aware user plane function network element sends a packet to the first border computing-aware user plane function network element; and the second border computing-aware user plane function network element sends a fifth response message to the second session management function network element, where the fifth response message indicates that the first session is established on the second border computing-aware user plane function network element side.

In a possible design of the sixth aspect, the method further includes: The second border computing-aware user plane function network element establishes an inter-domain announcement neighbor relationship with the first border computing-aware user plane function network element, where the inter-domain announcement neighbor relationship is used by the second border computing-aware user plane function network element to announce domain-level service capability information of the second domain to the first border computing-aware user plane function network element.

In the foregoing technical solution, the second border computing-aware user plane function network element in the second domain may determine, based on the request of the second session management function network element in the second domain, the inter-domain announcement neighbor relationship with the first border computing-aware user plane function network element in the first domain, and establish the tunnel for sending the packet to the first border computing-aware user plane function network element, so as to establish the first session between the first domain and the second domain on the second border computing-aware user plane function network element side, and return the response to the second session management function network element.

The second border computing-aware user plane function network element is introduced into the second domain, and the first session is established between the second border computing-aware user plane function network element and the first border computing-aware user plane function network element in the first domain, so that a computing-aware network in the first domain can be interconnected to a computing-aware network in the second domain, to form the cross-domain computing-aware network, so as to implement cross-domain extension of computing-aware routing, and resolve a problem that coverage and a user group of an edge application of a single-domain computing-aware network are limited.

In a possible design of the sixth aspect, the fifth request message includes identification information of the first border computing-aware user plane function network element.

In a possible design of the sixth aspect, the method further includes: The second border computing-aware user plane function network element generates first inter-domain tunnel information, where the first inter-domain tunnel information is used for establishing a tunnel through which the first border computing-aware user plane function network element sends a packet to the second border computing-aware user plane function network element; and the second border computing-aware user plane function network element sends the first inter-domain tunnel information to the second session management function network element.

In a possible design of the sixth aspect, the method further includes: The second border computing-aware user plane function network element receives an eighth request message from the second session management function network element, where the eighth request message requests to establish a third session in the second domain of the cross-domain computing-aware network; and the second border computing-aware user plane function network element sends an eighth response message to the second session management function network element, where the eighth response message indicates that the third session is established on the second border computing-aware user plane function network element side.

According to a seventh aspect, an embodiment of this application provides a session management method for a cross-domain computing-aware network. The method may be performed by a first border computing-aware user plane function network element in a first domain, or may be performed by a component (for example, a chip or a circuit) configured in the first border computing-aware user plane function network element.

The method includes: The first border computing-aware user plane function network element in the first domain receives a first announcement message from a second border computing-aware user plane function network element in a second domain, where the first announcement message includes domain-level service capability information, and the domain-level service capability information indicates a capability of the second domain to provide a first computing service to the outside; and the first border computing-aware user plane function network element sends a second announcement message to a first intra-domain computing-aware user plane function network element in the first domain, where the second announcement message includes the domain-level service capability information.

In the foregoing technical solution, the first border computing-aware user plane function network element in the first domain may receive domain-level service capability information announced by the second border computing-aware user plane function network element in the second domain, and announce the domain-level service capability information to the first intra-domain computing-aware user plane function network element in the first domain. In this way, a user who accesses the first intra-domain computing-aware user plane function network element may also access the first computing service provided by the second domain, to extend a service range of the computing service in the second domain, and effectively improve user experience.

In a possible design of the seventh aspect, the first announcement message includes identification information of the second border computing-aware user plane function network element; and the method further includes: The first border computing-aware user plane function network element generates or updates computing-aware routing information of the first computing service in the first border computing-aware user plane function network element based on the domain-level service capability information and the identification information of the second border computing-aware user plane function network element.

In a possible design of the seventh aspect, the second announcement message includes identification information of the first border computing-aware user plane function network element.

In a possible design of the seventh aspect, the domain-level service capability information includes computing service information of the first computing service corresponding to the second domain and/or load information of the second domain.

In a possible design of the seventh aspect, the method further includes: The first border computing-aware user plane function network element receives a service request packet from the first intra-domain computing-aware user plane function network element, where the service request packet requests the first computing service, and the service request packet includes a service identifier of the first computing service; and the first border computing-aware user plane function network element sends the service request packet to the second border computing-aware user plane function network element based on computing-aware routing information of the first computing service.

According to an eighth aspect, an embodiment of this application provides a session management method for a cross-domain computing-aware network. The method may be performed by a second border computing-aware user plane function network element in a second domain, or may be performed by a component (for example, a chip or a circuit) configured in the second border computing-aware user plane function network element.

The method includes: The second border computing-aware user plane function network element in the second domain receives a third announcement message from a second intra-domain computing-aware user plane function network element in the second domain, where the third announcement message includes service capability information of an edge computing node associated with the second intra-domain computing-aware user plane function network element, and the service capability information indicates a capability of the edge computing node to provide a first computing service to the outside; the second border computing-aware user plane function network element generates domain-level service capability information based on the service capability information of the edge computing node, where the domain-level service capability information indicates a capability of the second domain to provide the first computing service to the outside; and the second border computing-aware user plane function network element sends a first announcement message to a first border computing-aware user plane function network element in a first domain, where the first announcement message includes the domain-level service capability information.

In the foregoing technical solution, the second border computing-aware user plane function network element in the second domain may receive the service capability information announced by the second intra-domain computing-aware user plane function network element in the second domain, generate the domain-level service capability information based on the service capability information, and announce the domain-level service capability information to the first intra-domain computing-aware user plane function network element in the first domain. In this way, a user in the first domain can also access the first computing service provided by the second domain, to extend a service range of the computing service deployed in the second domain, and effectively improve user experience.

In addition, the second border computing-aware user plane function network element perceives, based on the service capability information provided by the single-domain computing-aware user plane function network element, to construct the domain-level service capability information, so that specific details of providing the computing service in the second domain can be effectively shielded, so as to protect information security of the second domain.

In a possible design of the eighth aspect, the third announcement message includes identification information of the second intra-domain computing-aware user plane function network element; and the method further includes: The second border computing-aware user plane function network element generates or updates computing-aware routing information of the first computing service in the second border computing-aware user plane function network element based on the service capability information of the edge computing node and the identification information of the second intra-domain computing-aware user plane function network element.

In a possible design of the eighth aspect, the first announcement message includes the identification information of the second border computing-aware user plane function network element.

In a possible design of the eighth aspect, the service capability information of the edge computing node includes computing service information of a first computing service corresponding to the edge computing node and/or load information of the edge computing node; and the domain-level service capability information includes computing service information of a first computing service corresponding to a second domain and/or load information of a second domain.

In a possible design of the eighth aspect, the method further includes: The second border computing-aware user plane function network element receives a service request packet from the first border computing-aware user plane function network element, where the service request packet requests the first computing service, and the service request packet includes a service identifier of the first computing service; and the second border computing-aware user plane function network element sends the service request packet to the second intra-domain computing-aware user plane function network element based on the computing-aware routing information of the first computing service.

According to a ninth aspect, an embodiment of this application provides a communication apparatus. The communication apparatus may have a function of implementing the first session management function network element in any one of the foregoing aspects or the possible designs of the foregoing aspects, or have a function of implementing the first session management function network element in any one of the foregoing aspects or the possible designs of the foregoing aspects, or have a function of implementing the first computing management function network element in any one of the foregoing aspects or the possible designs of the foregoing aspects, or have a function of implementing the second computing management function network element in any one of the foregoing aspects or the possible designs of the foregoing aspects, or have a function of implementing the first border computing-aware user plane function network element in any one of the foregoing aspects or the possible designs of the foregoing aspects, or have a function of implementing the second border computing-aware user plane function network element in any one of the foregoing aspects or the possible designs of the foregoing aspects. The apparatus may be a network device; or may be a chip included in a network device.

The function of the communication apparatus may be implemented by hardware, or may be implemented by hardware executing corresponding software. The hardware or the software includes one or more modules, units, or means (means) corresponding to the functions.

In a possible design, a structure of the communication apparatus includes a processing module and a transceiver module. The processing module is configured to support the communication apparatus in performing a corresponding function of the first session management function network element in any one of the foregoing aspects or the designs of the foregoing aspects, or performing a corresponding function of the second session management function network element in any one of the foregoing aspects or the designs of the foregoing aspects, or performing a corresponding function of the first computing management function network element in any one of the foregoing aspects or the designs of the foregoing aspects, or performing a corresponding function of the second computing management function network element in any one of the foregoing aspects or the designs of the foregoing aspects, or performing a corresponding function of the first computing-aware user plane function network element in any one of the foregoing aspects or the designs of the foregoing aspects, or performing a corresponding function of the second computing-aware user plane function network element in any one of the foregoing aspects or the designs of the foregoing aspects. The transceiver module is configured to support communication between the communication apparatus and another communication device. For example, when the communication apparatus is a first session management function network element, the communication apparatus may receive a first request message from a second session management function network element. The communication apparatus may further include a storage module. The storage module is coupled to the processing module, and stores program instructions and data that are necessary for the apparatus. In an example, the processing module may be a processor, the transceiver module may be a transceiver, and the storage module may be a memory. The memory may be integrated with the processor, or may be disposed separately from the processor.

In another possible design, a structure of the communication apparatus includes a processor, and may further include a memory. The processor is coupled to the memory, and may be configured to execute computer program instructions stored in the memory, so that the apparatus performs the method in any one of the foregoing aspects or the possible designs of the foregoing aspects. Optionally, the communication apparatus further includes a communication interface, and the processor is coupled to the communication interface. When the apparatus is a network device, the communication interface may be a transceiver or an input/output interface. When the apparatus is a chip included in a network device, the communication interface may be an input/output interface of the chip. Optionally, the transceiver may be a transceiver circuit, and the input/output interface may be an input/output circuit.

According to a tenth aspect, an embodiment of this application provides a chip system, including a processor. The processor is coupled to a memory, and the memory is configured to store a program or instructions. When the program or the instructions is/are executed by the processor, the chip system is enabled to implement the method in any one of the foregoing aspects or the possible designs of the foregoing aspects.

Optionally, the chip system further includes an interface circuit, and the interface circuit is configured to exchange code instructions to the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory. The memory and the processor may be integrated on a same chip, or may be separately disposed on different chips.

According to an eleventh aspect, an embodiment of this application provides a computer-readable storage medium. The computer-readable storage medium stores a computer program or instructions. When the computer program or the instructions is/are executed, a computer is enabled to perform the method in any one of the foregoing aspects or the possible designs of the foregoing aspects.

According to a twelfth aspect, an embodiment of this application provides a computer program product. When a computer reads and executes the computer program product, the computer is enabled to perform the method in any one of the foregoing aspects or the possible designs of the foregoing aspects.

According to a thirteenth aspect, an embodiment of this application provides a communication system. The communication system includes one or more of the following communication apparatuses: a first session management function network element in a first domain, a first computing management function network element in the first domain, a first border computing-aware user plane function network element in the first domain, a second session management function network element in a second domain, a second computing management function network element in the second domain, or a second border computing-aware user plane function network element in the second domain.

The first session management function network element is configured to implement the method in any one of the first aspect or the possible designs of the first aspect, the second session management function network element is configured to implement the method in any one of the second aspect or the possible designs of the second aspect, the first computing management function network element is configured to implement the method in any one of the third aspect or the possible designs of the third aspect, the second computing management function network element is configured to implement the method in any one of the fourth aspect or the possible designs of the fourth aspect, the first border computing-aware user plane function network element is configured to implement the method in any one of the fifth aspect or the possible designs of the fifth aspect, and the second border computing-aware user plane function network element is configured to implement the method in any one of the sixth aspect or the possible designs of the sixth aspect.

Optionally, the communication system further includes a first intra-domain computing-aware user plane function network element in the first domain and a second intra-domain computing-aware user plane function network element in the second domain.

Optionally, the communication system further includes a terminal device and an edge computing node associated with one or more computing-aware user plane functions of the first border computing-aware user plane function network element, the second border computing-aware user plane function network element, the first intra-domain computing-aware user plane function network element, and the second intra-domain computing-aware user plane function network element.

According to a fourteenth aspect, an embodiment of this application provides a communication system. The communication system includes a first border computing-aware user plane function network element in a first domain and a second border computing-aware user plane function network element in a second domain.

The first border computing-aware user plane function network element may be further configured to implement the method in any one of the seventh aspect or the possible designs of the seventh aspect, and the second border computing-aware user plane function network element may be further configured to implement the method in any one of the eighth aspect or the possible designs of the eighth aspect.

Optionally, the communication system further includes a first intra-domain computing-aware user plane function network element in the first domain and a second intra-domain computing-aware user plane function network element in the second domain.

Optionally, the communication system further includes a terminal device and an edge computing node associated with one or more computing-aware user plane functions of the first border computing-aware user plane function network element, the second border computing-aware user plane function network element, the first intra-domain computing-aware user plane function network element, and the second intra-domain computing-aware user plane function network element.

### BRIEF DESCRIPTION OF DRAWINGS

FIG. 1 is a network architecture of a communication system supporting a computing-aware network according to an embodiment of this application;
FIG. 2 is a specific example of a cross-domain computing-aware network according to an embodiment of this application;
FIG. 3 is a network architecture of a communication system supporting a cross-domain computing-aware network according to an embodiment of this application;
FIG. 4a and FIG. 4b are another specific example of a cross-domain computing-aware network according to an embodiment of this application;
FIG. 5A and FIG. 5B are a schematic flowchart of a session management method for a cross-domain computing-aware network according to Embodiment 1 of this application;
FIG. 6A and FIG. 6B are an implementation 1 of an inter-domain session creation procedure according to Embodiment 1 of this application;
FIG. 7A and FIG. 7B are an implementation 2 of an inter-domain session creation procedure according to Embodiment 1 of this application;
FIG. 8 is a schematic diagram of a session creation or update process of a cross-domain computing-aware network in a second domain according to Embodiment 1 of this application;
FIG. 9 is a schematic diagram of a process in which a second SMF establishes or updates a third session on a second border CA-UPF side according to Embodiment 1 of this application;
FIG. 10 is a schematic diagram of a process in which a second SMF establishes or updates a third session on a second intra-domain CA-UPF side according to Embodiment 1 of this application;
FIG. 11 is a schematic diagram of a session establishment or update process of a cross-domain computing-aware network in a first domain according to Embodiment 1 of this application;
FIG. 12 is a schematic diagram of a process in which a first SMF establishes or updates a second session on a first border CA-UPF side according to Embodiment 1 of this application;
FIG. 13 is a schematic diagram of a process in which a first SMF establishes or updates a second session on a first intra-domain CA-UPF side according to Embodiment 1 of this application;
FIG. 14A and FIG. 14B are a schematic flowchart of a session management method for a cross-domain computing-aware network according to Embodiment 2 of this application;
FIG. 15A and FIG. 15B are an implementation 3 of an inter-domain session creation procedure according to Embodiment 2 of this application;
FIG. 16A and FIG. 16B are an implementation 4 of an inter-domain session creation procedure according to Embodiment 2 of this application;
FIG. 17 is a schematic flowchart of a session management method for a cross-domain computing-aware network according to Embodiment 3 of this application;
FIG. 18 is a schematic flowchart of interaction between a second intra-domain CA-UPF and an associated edge computing node according to Embodiment 3 of this application;
FIG. 19 is a schematic flowchart of a session management method for a cross-domain computing-aware network according to Embodiment 4 of this application; and
FIG. 20 and FIG. 21 each are a schematic diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, a future communication system, or another similar communication system.

In the following descriptions, some terms in this application are described, to help a person skilled in the art have a better understanding.
(1) A terminal device is a device having wireless sending and receiving functions. The terminal device may communicate with a core network or an Internet by using a radio access network (for example, a radio access network, RAN), and exchange a voice and/or data with the RAN.

The terminal device may include user equipment (user equipment, UE), a wireless terminal device, a mobile terminal device, a D2D terminal device, a vehicle to everything (vehicle to everything, V2X) terminal device, a machine-to-machine/machine type communication (machine-to-machine/machine type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may be a mobile phone, a tablet computer, a computer having wireless sending and receiving functions, or a portable, pocket-sized, handheld, or computer built-in mobile apparatus. For another example, the terminal device may alternatively be a virtual reality (virtual reality, VR) terminal device, an augmented reality (augmented reality, AR) terminal device, a wireless terminal in industrial control (industrial control), a wireless terminal in self driving (self driving), a wireless terminal in remote surgery (remote surgery), a wireless terminal in a smart grid (smart grid), a wireless terminal in transportation safety (transportation safety), a wireless terminal in a smart city (smart city), a wireless terminal in a smart home (smart home), a terminal device in a future evolved public land mobile communication network (public land mobile network, PLMN), a vehicle device in V2X, or a customer premises equipment (customer premises equipment, CPE). For another example, the terminal device may alternatively be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). A specific technology used by the terminal device and a specific device form of the terminal device are not limited in embodiments of this application.

By way of example rather than limitation, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not merely a hardware device, but also implements a powerful function through software support, data exchange, and cloud interaction. Generalized wearable intelligent devices include full-featured and large-size devices, such as smart watches or smart glasses, that can implement complete or partial functions without depending on smartphones; and devices, such as various smart bands, smart helmets, or smart jewelry for monitoring physical signs, that focus on only one type of application functions and need to work with other devices such as smartphones. If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on board units (on board units, OBUs).

(2) A radio access network device is a device that is in a communication system and that is configured to connect a terminal device to a wireless network. The radio access network device may generally be connected to a core network through a wired link (for example, an optical fiber cable). The radio access network device may be a node in a RAN, may be referred to as a base station (base station), or may be referred to as a RAN node (or device).

The radio access network device may include a base station, an evolved NodeB (evolved NodeB, eNodeB) in an LTE system or an LTE-Advanced system (LTE-Advanced, LTE-A), a next generation NodeB (next generation NodeB, gNB) in a 5G communication system, a transmission reception point (transmission reception point, TRP), a baseband unit (baseband unit, BBU), an access point (access point, AP) in a wireless local area network (wireless local area network, WLAN), an integrated access and backhaul (integrated access and backhaul, IAB) node, a base station in a future mobile communication system, an access node in a Wi-Fi system, or the like. The radio access network device may alternatively be a module or a unit that completes some functions of the base station, for example, a central unit (central unit, CU) or a distributed unit (distributed unit, DU). A specific technology used by the radio access network device and a specific device form of the radio access network device are not limited in embodiments of this application.

For example, in a network structure, the radio access network device may be a CU node, a DU node, or a radio access network device including a CU node and a DU node. The CU node is configured to support protocols such as the radio resource control (radio resource control, RRC) protocol, the packet data convergence protocol (packet data convergence protocol, PDCP), and the service data adaptation protocol (service data adaptation protocol, SDAP). The DU node is configured to support a radio link control (radio link control, RLC) layer protocol, a medium access control (medium access control, MAC) layer protocol, and a physical layer protocol.

The radio access network device and the terminal device may be deployed on land, where the deployment includes indoor, outdoor, handheld, or vehicle-mounted deployment; may be deployed on water; or may be deployed on an airplane, a balloon, and a satellite in the air. Application scenarios of the radio access network device and the terminal device are not limited in embodiments of this application. In embodiments of this application, the radio access network device may be referred to as an access network device for short. Unless otherwise specified, all access network devices below are radio access network devices.

(3) A core network device is a device on a core network (core network, CN) that provides service support for a terminal device. The core network device may include network elements or functional entities such as an access and mobility management function (access and mobility management function, AMF), a session management function (session management function, SMF), a user plane function (user plane function, UPF), a network exposure function (network exposure function, NEF), a unified data management (unified data management, UDM), and an application function (application function, AF).

The AMF is mainly configured to implement access management and mobility management of the terminal device, such as user location update, network registration, and cell handover. The SMF is mainly configured to implement session management, such as user session establishment, modification, and release. The UPF is a functional entity of a user plane, and is mainly configured to be responsible for connecting to an external network and processing a user packet, such as forwarding, charging, and lawful interception. The NEF is configured to expose some functions of a network to an application in a controlled manner. The UDM is configured to manage subscription information of the terminal device. The AF is configured to: provide service data of various applications for a control plane network element in a communication network of an operator; or obtain data information and control information of a network from a control plane network element in a communication network.

The core network device may further include another network element or functional entity related to multi-access edge computing (multi-access edge computing, MEC). Details are described in the following descriptions of this application.

It should be noted that the foregoing network elements or functional entities may be network elements in a hardware device, software functions running on dedicated hardware, or virtualized functions instantiated on a platform (for example, a cloud platform). Optionally, the foregoing network elements or functional entities may be implemented by one device, or may be implemented by a plurality of devices together, or may be different functional modules in one device. This is not specifically limited in embodiments of this application.

(4) The terms "system" and "network" may be used interchangeably in embodiments of this application. "A plurality of" means two or more. In view of this, "a plurality of" may also be understood as "at least two" in embodiments of this application. "At least one" may be understood as one or more, for example, one, two, or more. For example, "including at least one" means including one, two, or more, and does not limit items that are included. For example, if at least one of A, B, and C is included, A; B; C; A and B; A and C; B and C; or A, B, and C may be included. Similarly, understanding of the descriptions such as "at least one type" is similar. "At least one of the following items (pieces)" or a similar expression thereof means any combination of these items, including a singular item (piece) or any combination of a plurality of items (pieces). For example, "at least one of A, B, and C" includes A, B, C, AB, AC, BC, or ABC. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise stated, in embodiments of this application, ordinal numbers such as "first" and "second" are used for distinguishing between a plurality of objects, and not intended to limit an order, a time sequence, a priority, or importance of the plurality of objects. In addition, descriptions of "first" and "second" do not indicate that objects are definitely different.

The following describes in detail a network architecture to which embodiments of this application are applicable and related technical features.

### I. Computing-aware network

To enable a 3rd generation partnership project (3rd generation partnership project, 3GPP) network to adapt to MEC dense deployment and high dynamic scheduling of edge microservices/functions, improve addressing efficiency of edge service discovery and access, and implement connection and computing end-to-end unified session and mobility management, a computing-aware network emerges.

The computing-aware network is also referred to as a computing-aware virtual network (computing-aware virtual network, CA-VN) or a mobile computing power network. Based on an existing 3GPP network architecture, a computing management function (computing management function, CMF) and a computing-aware user plane function (computing-aware user plane function, CA-UPF) are introduced to implement, through information announcement between CA-UPFs, computing-aware and service identifier-based dynamic computing-aware routing and packet forwarding.

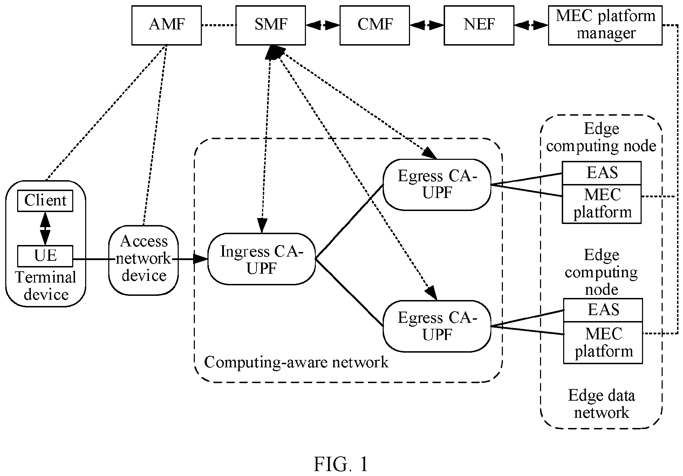

FIG. 1 shows a network architecture of a communication system supporting a computing-aware network according to an embodiment of this application. The network architecture includes a terminal device, an access network device, an AMF, an SMF, a CMF, an NEF, an MEC platform manager (manager), a computing-aware network, and an edge data network (edge data network). The computing-aware network may include at least one CA-UPF, the edge data network may include at least one edge computing node, and the edge computing node may also be referred to as an MEC node (or site).

Main features of the foregoing computing-aware network may be summarized as follows:
(1) Functional roles of the CA-UPF are classified into an ingress (Ingress) CA-UPF and an egress (Egress) CA-UPF. The ingress CA-UPF is a CA-UPF that can be used as an access anchor for a terminal device to access the computing-aware network, and the egress CA-UPF is a CA-UPF associated with the edge computing node in the edge data network.

Each CA-UPF in the computing-aware network may be selected by the terminal device as the access anchor. In addition, based on a dynamic change of a network deployment status, each CA-UPF in the computing-aware network may also establish or remove an association relationship with the edge computing node in the edge data network. Therefore, the function roles of the CA-UPF may be relative and dynamically changed. One CA-UPF may exist only as an ingress CA-UPF; may exist only as an egress CA-UPF; or may exist as both an ingress CA-UPF and an egress CA-UPF. This is not limited.

(2) An egress CA-UPF may establish an association relationship with the edge computing node in the edge data network, receive service binding information reported by the edge computing node, record a mapping relationship between a service identifier (service ID) and a server IP address (server IP) of a computing service based on the service binding information, receive computing service information and load information that are reported by the edge computing node, and announce the computing service information and the load information to a corresponding ingress CA-UPF based on an announcement neighbor list.

In the computing-aware network, one egress CA-UPF may correspond to one or more ingress CA-UPFs. A neighbor relationship between the egress CA-UPF and the one or more ingress CA-UPFs corresponding to the egress CA-UPF is referred to as an announcement neighbor relationship, indicating that the egress CA-UPF needs to announce, to the corresponding ingress CA-UPF, information such as computing service information and load information that represent that an edge computing node associated with the egress CA-UPF provides a computing service capability to the outside, so that the ingress CA-UPF constructs computing-aware routing information based on the information. Correspondingly, the announcement neighbor list is configured for the egress CA-UPF, and the announcement neighbor list includes identification information of the one or more ingress CA-UPFs corresponding to the egress CA-UPF.

It can be understood that in embodiments of this application, the computing service information and the load information of the edge computing node associated with the egress CA-UPF may be collectively referred to as service capability information, and the one or more ingress CA-UPFs corresponding to the egress CA-UPF may be considered as an announcement object to which the egress CA-UPF announces the service capability information.

(3) An ingress CA-UPF may aggregate computing service information and load information that are received from an egress CA-UPF corresponding to the ingress CA-UPF, construct corresponding computing-aware routing information for each computing service based on a forwarding neighbor list, the computing service information, and the load information, and forward a service request packet of the terminal device to one of corresponding egress CA-UPFs based on the computing-aware routing information.

In the computing-aware network, one ingress CA-UPF may correspond to one or more egress CA-UPFs. A neighbor relationship between the ingress CA-UPF and the one or more egress CA-UPFs corresponding to the ingress CA-UPF is referred to as a forwarding neighbor relationship, indicating that the ingress CA-UPF needs to forward a service request packet of the terminal device to one of the egress CA-UPFs corresponding to the ingress CA-UPF, so that the service request packet of the terminal device can be dynamically forwarded to a proper edge computing node for processing. Correspondingly, the forwarding neighbor list is configured for the ingress CA-UPF, and the forwarding neighbor list includes identification information of the one or more egress CA-UPFs corresponding to the ingress CA-UPF.

It may be understood that, in embodiments of this application, the one or more egress CA-UPFs corresponding to the ingress CA-UPF may be considered as a plurality of optional forwarding objects to which the ingress CA-UPF forwards the service request packet. The service request packet may also be referred to as a service request packet, or has another name. This is not limited.

(4) Based on existing UPF protocol data unit (protocol data unit, PDU) session processing unit, a computing-aware processing unit, a regional dynamic session processing unit, and a network address translation unit are added to the CA-UPF.

Specifically, a computing-aware processing unit located in an egress CA-UPF is responsible for obtaining service capability information from an edge computing node, storing a mapping relationship between a service identifier (Service ID) and a server IP address (Server IP address) of a computing service, and announcing the service capability information of the edge computing node to an ingress CA-UPF in the announcement neighbor list. The service capability information of the edge computing node may include computing service information and/or load information of the edge computing node. The computing service information indicates computing services supported by the edge computing node, and may specifically include one or more of information such as a service identifier, a service attribute, a running status, or computing resource information of each computing service. The load information represents a current load status of the edge computing node.

A computing-aware processing unit located in the ingress CA-UPF is responsible for receiving the service capability information from the egress CA-UPF, and generating or updating a computing-aware routing information base in the ingress CA-UPF. The computing-aware routing information base includes computing-aware routing information of one or more computing services. Computing-aware routing information of a computing service includes one or more of information such as a service identifier of the computing service, identification information of one or more egress CA-UPFs that can provide the computing service, service capability information corresponding to each egress CA-UPF (including computing service information and/or load information of the associated edge computing node), and network cost information (for example, a latency, bandwidth, and jitter between an ingress CA-UPF and the egress CA-UPF). The computing-aware processing unit may select, based on the computing-aware routing information, of the computing service, in the computing-aware routing information base, a proper forwarding tunnel for a service request packet received by the regional dynamic session processing unit, and generate a corresponding packet matching and forwarding rule.

A main function of the regional dynamic session processing unit is establishing a forwarding tunnel between an ingress CA-UPF and an egress CA-UPF based on forwarding tunnel information delivered by the SMF, and implementing real-time packet forwarding according to a packet matching and forwarding rule generated by the computing-aware processing unit. After the regional dynamic session processing unit in an ingress CA-UPF receives a service request packet from the terminal device, if there is no corresponding packet matching and forwarding rule for matching the packet with a corresponding forwarding tunnel, the computing-aware processing unit may select an egress CA-UPF for the service request packet based on the computing-aware routing information base, and generate a corresponding packet matching and forwarding rule.

A main function of the network address translation unit is completing mutual replacement between a service identifier and a server IP address, of a computing service, in a packet based on the mapping relationship that is between the service identifier and the server IP address of the computing service and that is provided by the computing-aware processing unit. The network address translation unit may replace a destination IP address in an uplink packet sent to the edge computing node with the server IP address from the service identifier of the computing service, and replace a source IP address in a downlink packet returned to the terminal device with the service identifier of the computing service from the server IP address.

(5) The CMF is configured to create and manage a computing-aware network instance, and specifically includes: managing CA-UPF members included in the computing-aware network, determining a functional role of each CA-UPF member (to be specific, an ingress CA-UPF; an egress CA-UPF; or both an ingress CA-UPF and an egress CA-UPF), establishing and updating a forwarding neighbor relationship and/or an announcement neighbor relationship between the CA-UPF members, and the like. In addition, the CMF may be further configured to record information such as a service identifier and a service status of a computing service deployed in the edge data network, so that the terminal device performs query before initiating a service request packet.

The computing-aware network exists in a form of an internal virtual interface in the CA-UPF, and may have a plurality of instances. Each computing-aware network corresponds to a different network slice instance (network slice instance, NSI) and/or data network name (data network name, DNN). CA-UPF members included in different computing-aware networks may be completely different, may partially overlap, or may be completely the same. This is not limited in this application.

The CMF may send, to the SMF, a request for creating the computing-aware network, to create the computing-aware network between the CA-UPFs, establish a neighbor relationship between adjacent CA-UPFs in the computing-aware network, and perform, based on computing-aware, dynamic session management for the CA-UPFs that form the neighbor relationship. In this way, a regional computing power group may be formed between edge computing nodes associated with the adjacent CA-UPFs, so that a computing service may be dynamically deployed in the regional computing power group, and service capability information of the edge computing nodes may be quickly announced between the CA-UPFs, to ensure that a service request of the terminal device can be quickly responded, and can be forwarded to an optimal edge computing node based on dynamic computing-aware routing information, so as to implement resource load balancing of the system and improve user experience.

It may be understood that, in embodiments of this application, a forwarding neighbor list and/or an announcement neighbor list of each CA-UPF may be added, modified, and deleted as required. Because the forwarding neighbor relationship and the announcement neighbor relationship are relative, the CMF may determine that an announcement neighbor list of each egress CA-UPF in a forwarding neighbor list of an ingress CA-UPF includes the ingress CA-UPF.

(6) The SMF may receive the request for creating the computing-aware network from the CMF, establish a virtual network-level forwarding tunnel between the CA-UPFs based on the forwarding neighbor relationship and the announcement neighbor relationship between the CA-UPFs, and deliver the corresponding forwarding neighbor list and/or announcement neighbor list to each CA-UPF.

(7) Each type of computing service corresponds to a unique service identifier (service ID) in a network management domain of an operator, and the computing-aware network dynamically routes and forwards, based on the service identifier, a packet for requesting the computing service by the terminal device.

For example, each type of computing service has a service name (service name), representing the type of computing service. A service name of a computing service corresponds one-to-one to a service identifier. The service name can be described in a form of a uniform resource identifier (uniform resource identifier, URI) or a uniform resource locator (uniform resource locator, URL).

One computing service may be deployed on different edge computing nodes in the edge data network. This is equivalent to that a plurality of copies of the computing service are distributed in the edge data network. The plurality of copies correspond to different server IP addresses, but still have a same service identifier. For example, the plurality of copies may be a plurality of service instances of the same computing service running on edge application servers (edge application servers, EASs) of the different edge computing nodes.

Correspondingly, the computing-aware network implements computing-aware routing information of the computing service based on the service identifier, and maps the server IP addresses of the plurality of copies of the same computing service deployed on the different edge computing nodes to the same service identifier, to indicate that the plurality of edge computing nodes can provide the same computing service, so as to implement route consistency.

To reuse an existing IP protocol stack as much as possible, a service identifier of a computing service may be an IP anycast address. The terminal device may initiate a service request by using the service identifier of the computing service, without considering specific details such as an EAS on which a service instance of the computing service specifically runs and a server IP address of the EAS. Specifically, the terminal device may translate a service name in the service request into the service identifier, and use the service identifier as a destination IP address to construct a corresponding IP packet (namely, a service request packet). The CA-UPF may route and forward the service request packet based on the service identifier of the computing service, and perform mutual replacement between the service identifier and the server IP address during packet sending or receiving to or from the EAS in the edge computing node.

The computing service mentioned in embodiments of this application is also referred to as an edge computing service or an edge application, and is not a monotonous application in a conventional client-server mode, but a lightweight service, for example, a microservice or a function instance. The lightweight computing services are deployed and run on the EAS in the edge computing node. Optionally, the computing service may be a stateless short-life cycle microservice or function instance.

(8) Each edge computing node in the edge data network may be associated with a CA-UPF in the computing-aware network, and the CA-UPF serves as the last hop before a service request packet of the terminal device is forwarded to the edge computing node, to ensure that an end-to-end data forwarding path is controlled by a mobile network. An interface between the edge computing node and the CA-UPF is an N6 interface defined in 3GPP, and an interface between the CA-UPFs is an N19 interface defined in 3GPP.

A group including a plurality of adjacent edge computing nodes in the edge data network is referred to as a regional computing power group. CA-UPFs associated with the edge computing nodes in the regional computing power group are in neighbor relationships with each other. The plurality of adjacent edge computing nodes form the regional computing power group, so that the edge data network can use a load balancing technology to break through a resource bottleneck of a single site, so as to increase an applicable scale of the edge computing service. It should be noted that the "regional" and "adjacent" herein are obtained through division based on a network latency between the edge computing nodes. In this application, edge computing nodes whose interaction latency is within a specified range may form a regional computing power group, so as to improve response efficiency of the edge computing service.

The edge computing node may include an MEC platform and an EAS. The MEC platform is configured to be responsible for local computing, storage, network resource scheduling, and the like. The EAS is configured to deploy or run a computing service. A specific computing service that is specifically run in the EAS may be referred to as a service instance of the computing service. One edge computing node may include one or more EASs, and a different server IP address (that is, a server IP address) is allocated to each EAS. A physical form of the EAS may be a physical bare-metal server, a virtual machine, a container, or the like. This is not limited in this application.

The MEC platform manager is configured to manage the MEC platforms and EAS resources in the edge computing nodes, and interact with the MEC platforms in the edge computing nodes, to implement dynamic deployment, orchestration, and life cycle management of computing services at different granularities such as a virtual machine, a microservice, and a function instance on EASs in the plurality of edge computing nodes.

It should be noted that the foregoing network architecture is for an MEC scale-up dense deployment scenario implemented by a single operator. In other words, the computing-aware network is independently deployed and managed by a single operator, and may be understood as a single-domain computing-aware network implemented within a management range of the single operator. The CA-UPF in the computing-aware network, the access network device in the communication system supporting the computing-aware network, and various types of core network devices (such as the AMF, the SMF, and the CMF) are all controlled and managed by the same operator.

### II. Cross-domain computing-aware network

To resolve a problem that coverage and a user group of an edge application of a computing-aware network of a single operator are limited, a border computing-aware user plane function (border computing-aware user plane function, border CA-UPF) is further introduced in this application based on the network architecture of the computing-aware network shown in FIG. 1. Computing-aware networks of different operators that have a confederation relationship establish computing-aware routings and forwarding tunnels between each other through the border CA-UPF, to create a cross-domain computing-aware network.

By introducing the border CA-UPF, edge computing services can be flexibly deployed on edge computing nodes connected to a plurality of operator networks that have a confederation relationship, so that a user of an operator can access the edge computing service in an operator network in a local domain, or access the edge computing service in the operator network in a confederation domain through the border CA-UPF.

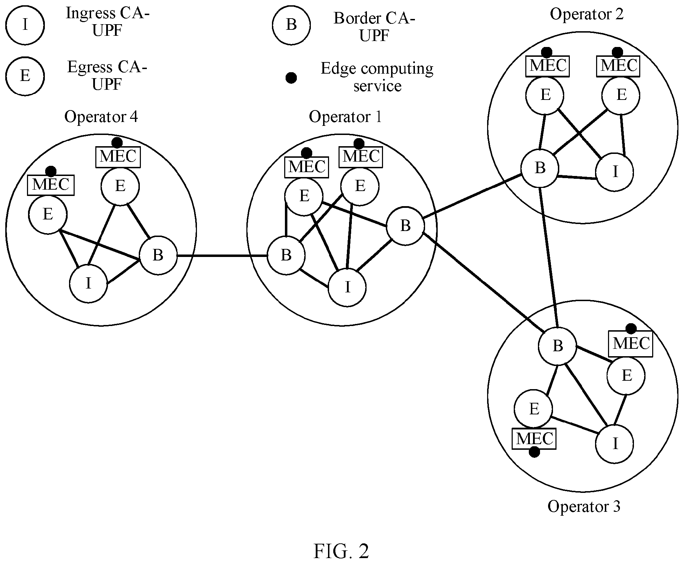

FIG. 2 is a specific example of a cross-domain computing-aware network according to an embodiment of this application. In this application, concepts of a local domain and a confederation domain in the cross-domain computing-aware network are described by using the example.

In a confederation, a computing-aware network of each operator may be referred to as a local domain, and a computing-aware network directly connected to a terminal device belongs to the local domain regardless of whether the network is a home network or a visited network. A computing-aware network that is of another operator and that is interconnected to the local domain through a border CA-UPF may be referred to as a confederation domain, and the confederation domain may be further divided into a direct confederation domain and an indirect confederation domain. The direct confederation domain is a confederation domain that is directly connected to the local domain through a border CA-UPF, and the indirect confederation domain is a confederation domain that is reachable by the local domain through multiple border CA-UPFs. For example, as shown in FIG. 2, the cross-domain computing-aware network includes computing-aware networks that are of four operators having a confederation relationship and that are connected. From the perspective of an operator 1, a computing-aware network of the operator 1 is a local domain, and computing-aware networks of an operator 2, an operator 3, and an operator 4 are direct confederation domains of the computing-aware network of the operator 1. From the perspective of the operator 4, the computing-aware network of the operator 4 is a local domain, the computing-aware network of the operator 1 is a direct confederation domain of the computing-aware network of the operator 4, and the computing-aware networks of the operator 2 and the operator 3 are indirect confederation domains of the computing-aware network of the operator 4.

Optionally, to ensure a latency, a terminal user may be limited to accessing only edge computing services in a local domain and a direct confederation domain. In this way, compared with a computing-aware network in the local domain, a maximum of two-hop latency is introduced. For example, a terminal user of an operator 4 can access only edge computing services provided by the operator 4 and the operator 1. If the terminal user accesses edge computing services provided by the operator 2 and the operator 3, an excessively long latency is introduced, and service experience deteriorates.

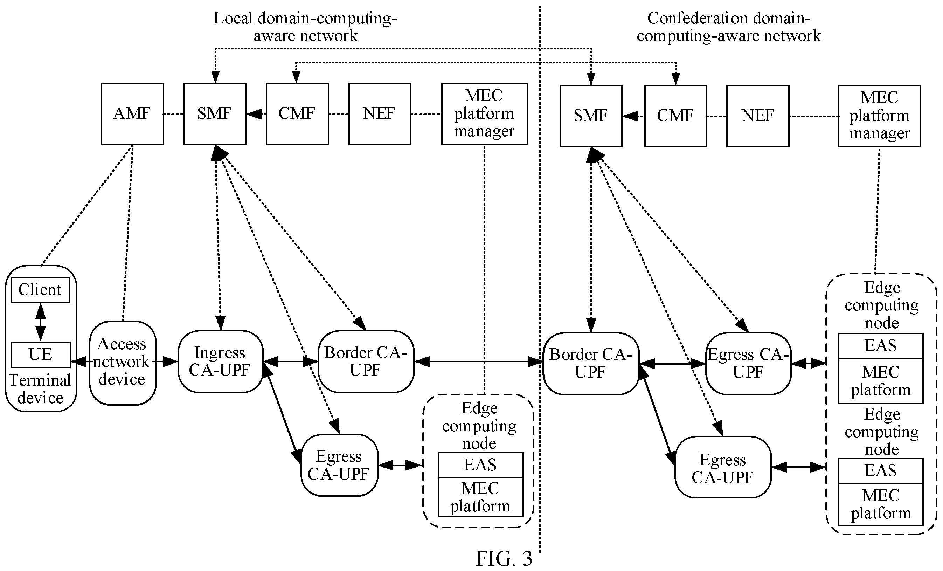

FIG. 3 is a diagram of a network architecture of a communication system supporting a cross-domain computing-aware network according to an embodiment of this application. The network architecture shows a connection relationship between a computing-aware network in a local domain and a computing-aware network in a confederation domain.

On a user plane, a border CA-UPF in the local domain is directly connected to a border CA-UPF in the confederation domain, to implement packet forwarding of a service request message and a response message between the two domains and announcement of service capability information. For example, as shown in FIG. 3, the border CA-UPF in the local domain and the border CA-UPF in the confederation domain may be directly connected through an N19 interface defined in 3 GPP.

On a control plane, a connection relationship is configured between a CMF in the local domain and a CMF in the confederation domain, so that the CMF in the local domain and the CMF in the confederation domain may interact with each other to create a cross-domain computing-aware network. A connection relationship is further configured between an SMF in the local domain and an SMF in the confederation domain. The SMF in the local domain and the SMF in the confederation domain may interact with each other to establish an inter-domain forwarding neighbor relationship and an inter-domain announcement neighbor relationship between the border CA-UPFs and establish a forwarding tunnel.

It should be noted that the border CA-UPF is a special CA-UPF. In the local domain, the border CA-UPF is equivalent to an egress CA-UPF for an ingress CA-UPF in the domain, but a packet received by the border CA-UPF is not directly sent to an associated edge computing node, but is sent to the border CA-UPF of the computing-aware network in the peer confederation domain. Between the border CA-UPFs, the border CA-UPF in the local domain is equivalent to an ingress CA-UPF, and the border CA-UPF in the confederation domain is equivalent to an egress CA-UPF. In the confederation domain, the border CA-UPF is equivalent to an ingress CA-UPF for an egress CA-UPF in the domain.

In this embodiment of this application, each CA-UPF (including the border CA-UPF in the local domain) in the cross-domain computing-aware network may be used as an ingress CA-UPF, and a CA-UPF associated with an edge computing node and the border CA-UPF in the local domain may be used as egress CA-UPFs.

In addition, it should be further understood that the network architecture shown in FIG. 3 is merely an example. In an actual deployment scenario, there may be one or more border CA-UPFs in a local domain, and there may also be one or more border CA-UPFs in a confederation domain. In addition, a cross-domain computing-aware network may be created between the local domain and the one or more confederation domains. This is not limited.

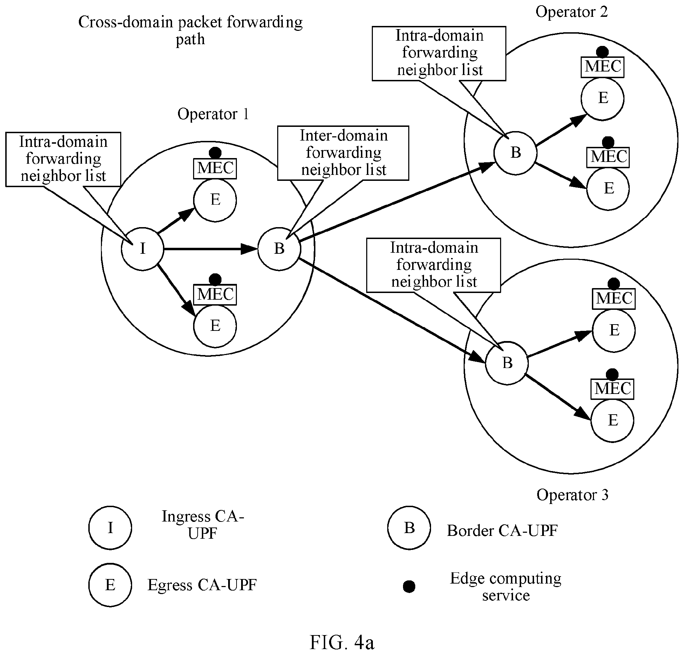

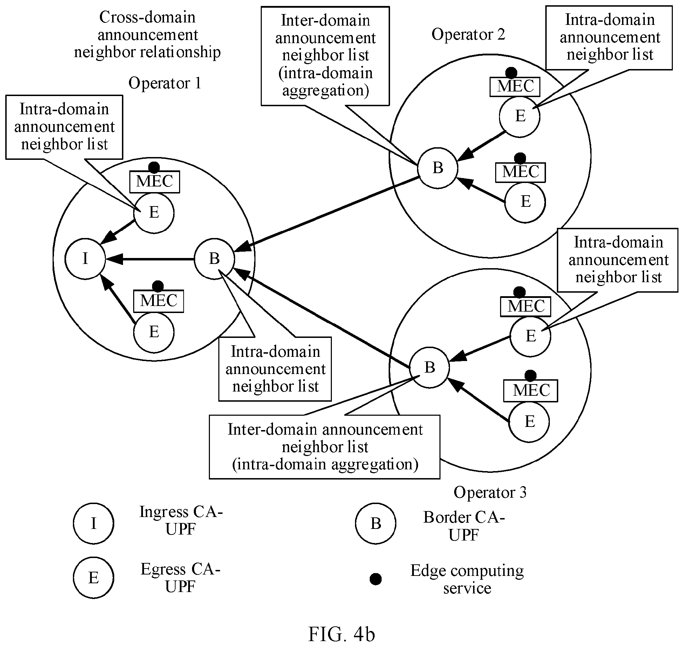

FIG. 4a and FIG. 4b are another specific example of a cross-domain computing-aware network according to an embodiment of this application. The example shows connection and forwarding relationships between a local domain and a confederation domain on a user plane. In this example, an operator 1, an operator 2, and an operator 3 have a confederation relationship. The cross-domain computing-aware network is created by using the operator 1 as a local domain, and the operator 2 and the operator 3 as confederation domains. An edge computing service is distributedly deployed on edge computing nodes of three operator networks.

FIG. 4a shows an inter-domain packet forwarding path. An ingress CA-UPF in the local domain establishes intra-domain forwarding neighbor relationships and intra-domain forwarding tunnels with an egress CA-UPF and a border CA-UPF that are adjacent to the ingress CA-UPF . An inter-domain forwarding neighbor relationship and an inter-domain forwarding tunnel are established between the border CA-UPF in the local domain and a border CA-UPF in a direct confederation domain. An intra-domain forwarding neighbor relationship and an intra-domain forwarding tunnel are established between a border CA-UPF in the confederation domain and an intra-domain egress CA-UPF adjacent to the border CA-UPF.

FIG. 4b shows an inter-domain announcement neighbor relationship. In the confederation domain, an egress CA-UPF announces service capability information of an associated edge computing node to a border CA-UPF in the confederation domain based on an intra-domain announcement neighbor list, and the border CA-UPF in the confederation domain generates or updates an intra-domain computing-aware routing information base of the border CA-UPF. The border CA-UPF in the confederation domain aggregates service capability information that is from different egress CA-UPFs in the domain and that is for a same computing service into one piece of domain-level service capability information, and then announces the domain-level service capability information in the confederation domain to a border CA-UPF in the local domain based on an inter-domain announcement neighbor list, and the border CA-UPF in the local domain generates or updates an inter-domain computing-aware routing information base of the border CA-UPF. The border CA-UPF in the local domain further announces the service capability information to an ingress CA-UPF in the local domain based on the intra-domain neighbor list, and the ingress CA-UPF in the local domain generates or updates an intra-domain computing-aware routing information base of the ingress CA-UPF.

The network architecture and service scenarios described in embodiments of this application are intended to describe the technical solutions in embodiments of this application more clearly, and do not constitute a limitation on the technical solutions provided in embodiments of this application. A person of ordinary skill in the art may know that, with evolution of the communication network architecture and emergence of new service scenarios, the technical solutions provided in embodiments of this application are also applicable to similar technical problems.

For brevity of description, the following embodiments are described by using a CMF, an SMF, a border CA-UPF, and an intra-domain CA-UPF as an example. It should be understood that, in the following embodiments, the CMF may be replaced with a computing management function network element, the SMF may be replaced with a session management function network element, the border CA-UPF may be replaced with a border computing-aware user plane function network element, and the intra-domain CA-UPF may be replaced with an intra-domain computing-aware user plane function network element.

Based on the network architecture and related technical features described above, embodiments of this application provide a method for creating a cross-domain computing-aware network between a plurality of operators that have a confederation relationship and performing session management for the cross-domain computing-aware network.

It may be understood that, because the local domain and the confederation domain are relative concepts, when a cross-domain computing-aware network is created between a plurality of operators having a confederation relationship, each operator may initiate a request for creating a cross-domain computing-aware network by using itself as a local domain, to establish the cross-domain computing-aware network with a direct confederation domain.

However, it should be noted that, before the cross-domain computing-aware network is created, it may be first determined that a border CA-UPF has been deployed in a domain of each operator in the confederation, and a physical network connection exists between border CA-UPFs that have a forwarding relationship and the border CA-UPFs are reachable via IP addresses. In addition, a CMF of each operator may further configure an intra-domain CA-UPF member and a connection relationship in the local domain, a connection relationship between a border CA-UPF in the local domain and a CA-UPF in another domain, a connection relationship between the border CA-UPF in the local domain and a border CA-UPF in a peer confederation domain, and a CMF ID and an SMF ID in the confederation domain, so that a CMF and an SMF in the local domain interact with a CMF and an SMF in the peer confederation domain.

Further, based on different manners of establishing an inter-domain session between the local domain and the confederation domain, the method for creating a cross-domain computing-aware network provided in this application may include two possible technical solutions in specific implementations. For ease of description, the two solutions are respectively referred to as a solution 1 and a solution 2.
(1) Solution 1: The CMF in the local domain requests the CMF in the confederation domain to trigger an inter-domain session establishment procedure in the cross-domain computing-aware network. The inter-domain session establishment procedure is initiated by the SMF in the confederation domain to the SMF in the local domain to implement a creation of an inter-domain forwarding neighbor relationship and an inter-domain announcement neighbor relationship, and to implement a creation of an inter-domain forwarding tunnel. The inter-domain forwarding neighbor relationship, the inter-domain announcement neighbor relationship and the inter-domain forwarding tunnel are between the border CA-UPF in the local domain and the border CA-UPF in the confederation domain. Then, the local domain and the confederation domain separately create a computing-aware network in their respective domains.
(2) Solution 2: The CMF in the local domain requests the SMF in the local domain to initiate an inter-domain session establishment procedure in the cross-domain computing-aware network to the SMF in the confederation domain, to establish an inter-domain forwarding neighbor relationship and an inter-domain announcement neighbor relationship between the border CA-UPF in the local domain and the border CA-UPF in the confederation domain, and create an inter-domain forwarding tunnel. Then, the local domain and the confederation domain separately create a computing-aware network in their respective domains.

It should be noted that if each operator in the confederation initiates creation of a cross-domain computing-aware network, a terminal user in each operator domain may access the cross-domain computing-aware network and access an edge computing service in a peer domain, and computing-aware networks of different operators supplement and extend computing power of each other. If an operator does not actively initiate creation of a cross-domain computing-aware network, but passively accepts an inter-domain session establishment request of a peer domain, a computing-aware network in a domain of the operator can only provide computing power extension for the peer domain, and a terminal user in the local domain cannot access the cross-domain computing-aware network, and cannot access an edge computing service in the peer domain.

For ease of understanding, in the following embodiments, an example in which a first domain is a local domain, a second domain is a confederation domain, and the first domain initiates a request for creating a cross-domain computing-aware network between the first domain and the second domain is used for description.

Further, related terms in the following embodiments are explained and described as follows:
The first domain is the local domain, and the second domain is the confederation domain, that is, a direct confederation domain of the first domain. Network elements or functional entities (such as an access network device and a core network device such as an AMF, an SMF, a CMF, and a CA-UPF) in the first domain and the second domain are separately controlled and managed by different operators.

A first CMF, a first SMF, a first intra-domain CA-UPF, and a first border CA-UPF belong to the first domain, a second CMF, a second SMF, a second intra-domain CA-UPF, and a second border CA-UPF belong to the second domain, and the first intra-domain CA-UPF, the first border CA-UPF, the second intra-domain CA-UPF, and the second border CA-UPF are all members of a cross-domain computing-aware network to be created between the first domain and the second domain.

The first intra-domain CA-UPF is an intra-domain CA-UPF (namely, a non-border CA-UPF) in the first domain of the cross-domain computing-aware network. The first intra-domain CA-UPF may be an ingress CA-UPF, or may be an egress CA-UPF, or may be both an ingress CA-UPF and an egress CA-UPF. This is not limited.

The second intra-domain CA-UPF is an intra-domain CA-UPF (namely, a non-border CA-UPF) in the second domain of the cross-domain computing-aware network. The second intra-domain CA-UPF may be an ingress CA-UPF, or may be an egress CA-UPF, or may be both an ingress CA-UPF and an egress CA-UPF. This is not limited.

The first border CA-UPF is a border CA-UPF in the first domain of the cross-domain computing-aware network, and the second border CA-UPF is a border CA-UPF in the second domain of the cross-domain computing-aware network. The first border CA-UPF and the second border CA-UPF are jointly used to implement interconnection between the first domain and the second domain. The first border CA-UPF corresponds to the second border CA-UPF, or there is an association relationship between the first border CA-UPF and the second border CA-UPF. The correspondence or the association relationship may be preconfigured after negotiation between the first CMF and the second CMF. In this way, a forwarding neighbor relationship and a forwarding tunnel between the first border CA-UPF and the second border CA-UPF are established, and a corresponding virtual network-level session is created, so that the first domain and the second domain may be interconnected, to implement cross-domain extension of a computing-aware network.

From the perspective of a cross-domain computing-aware network, the cross-domain computing-aware network may include N intra-domain CA-UPFs and the first border CA-UPF in the first domain, and M intra-domain CA-UPFs and the second border CA-UPF in the second domain, where both N and M are positive integers. The N intra-domain CA-UPFs are N intra-domain CA-UPFs (namely, non-border CA-UPFs) in the first domain, and the first intra-domain CA-UPF is one of the N intra-domain CA-UPFs in the first domain of the cross-domain computing-aware network. The M intra-domain CA-UPFs are M intra-domain CA-UPFs (namely, non-border CA-UPFs) in the second domain, and the second intra-domain CA-UPF is one of the M intra-domain CA-UPFs in the second domain of the cross-domain computing-aware network.

It may be understood that there may be one or more border CA-UPFs in the first domain, and different border CA-UPFs may be separately used for implementing interconnection between the first domain and different confederation domains. Optionally, a plurality of border CA-UPFs in the first domain are logically independent of each other, but may be physically deployed together. Border CA-UPFs in the second domain are similar to the border CA-UPFs in the first domain.

In addition, the first domain may further include a network element or a functional entity such as a first management plane (operation, administration and management, OAM) on a management plane and a first UDM on a control plane, and the second domain may further include a network element or a functional entity such as a second OAM on a management plane and a second UDM on a control plane. This is not limited.

The following describes in detail the foregoing two solutions for creating a cross-domain computing-aware network by using Embodiment 1 and Embodiment 2 respectively.

### Embodiment 1

Embodiment 1 of this application provides a session management method for a cross-domain computing-aware network. The method is specifically a method for creating a cross-domain computing-aware network between a first domain and a second domain, and corresponds to the solution 1 mentioned above.

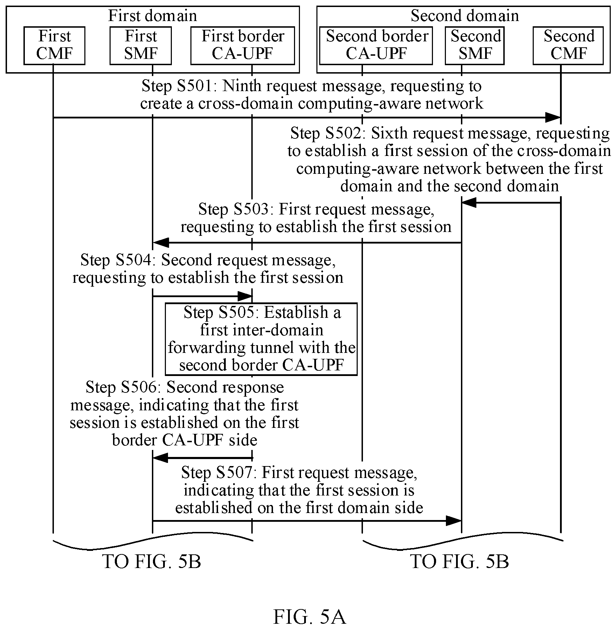

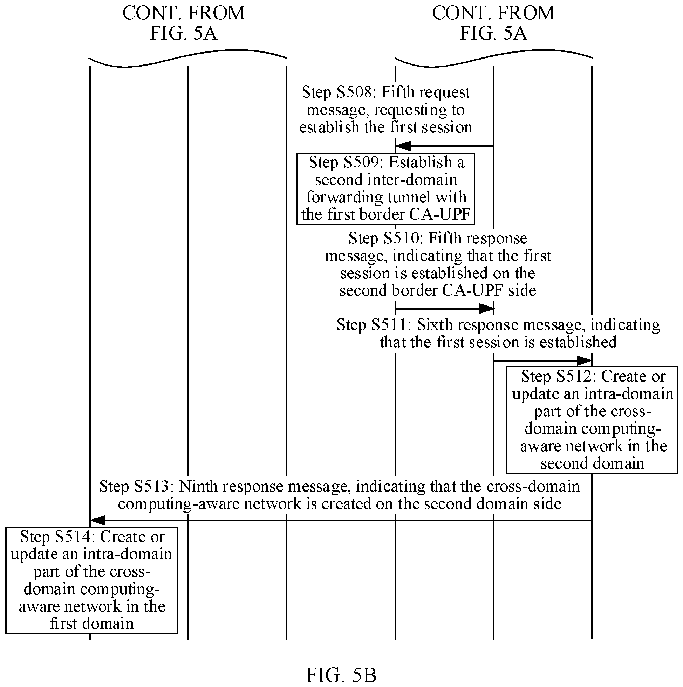

FIG. 5A and FIG. 5B are a schematic flowchart of the session management method for a cross-domain computing-aware network according to Embodiment 1 of this application. The method includes the following steps.

Step S501: A first CMF sends a ninth request message to a second CMF, where the ninth request message requests to create the cross-domain computing-aware network, and the cross-domain computing-aware network includes the first domain and the second domain.

Correspondingly, the second CMF receives the ninth request message from the first CMF.

That the cross-domain computing-aware network includes a first domain and a second domain means that the cross-domain computing-aware network is a computing-aware network created between the first domain and the second domain, or the cross-domain computing-aware network includes a computing-aware network in the first domain and a computing-aware network in the second domain, or the cross-domain computing-aware network covers the first domain and the second domain.

The ninth request message includes one or more of the following information: identification information of the cross-domain computing-aware network, identification information of a first border CA-UPF in the first domain, or identification information of a first SMF. The identification information of the cross-domain computing-aware network may include one or more of information such as an identity (identity, ID) of the cross-domain computing-aware network, a corresponding DNN, network slice information, or an application descriptor (application descriptor). Different cross-domain computing-aware networks may correspond to different DNNs, correspond to different network slice information, or correspond to different application descriptors. This is not limited.

The ninth request message may be referred to as a cross-domain computing-aware network creation request message, or has another name. This is not limited in this application.

In Embodiment 1 of this application, the first CMF may receive, from a first OAM or a first UDM in the first domain, a request message for creating the cross-domain computing-aware network, determine, based on the request message, that the cross-domain computing-aware network needs to be created, and determine CA-UPF members in the first domain of the cross-domain computing-aware network, for example, including N intra-domain CA-UPFs and the first border CA-UPF.

The request message may include the identification information of the to-be-created cross-domain computing-aware network, an intra-domain member list of the local domain, and a border member list of the local domain. The member list of the local domain includes identification information of the N intra-domain CA-UPFs in the first domain of the cross-domain computing-aware network, indicating the intra-domain CA-UPF members in the first domain of the to-be-created cross-domain computing-aware network. The border member list of the local domain includes identification information of the first border CA-UPF in the first domain, indicating a specific border CA-UPF member in the first domain of the to-be-created cross-domain computing-aware network.

It may be understood that the border member list of the local domain may further include identification information of one or more other border CA-UPFs, indicating that in addition to the second domain, a cross-domain computing-aware network further needs to be created between the first domain and another confederation domain. In this case, the first CMF may separately send, to a CMF in a confederation domain corresponding to each border CA-UPF, a request message for requesting to create a cross-domain computing-aware network, and repeatedly perform steps of the method shown in FIG. 5A and FIG. 5B, so as to create the cross-domain computing-aware network with each confederation domain.

For example, if the border member list of the local domain further includes identification information of a third border CA-UPF, the third border CA-UPF corresponds to a fourth border CA-UPF in a third domain, and the third domain is also a confederation domain of the first domain, it indicates that the first CMF further needs to create a cross-domain computing-aware network between the first domain and the third domain, to implement interconnection between the computing-aware network in the first domain and a computing-aware network in the third domain through the third border CA-UPF and the fourth border CA-UPF. For a process in which the first CMF creates the cross-domain computing-aware network between the first domain and the third domain, refer to the implementation of the method for creating the cross-domain computing-aware network between the first domain and the second domain described in this specification, and details are not described again.

Further, for an inter-domain creation part, the first CMF may generate an inter-domain forwarding neighbor list of the first border CA-UPF, where the inter-domain forwarding neighbor list includes identification information of a second border CA-UPF. It may be understood that, in a process in which the first CMF generates the corresponding inter-domain forwarding neighbor list for the first border CA-UPF, the first CMF may determine that an inter-domain forwarding neighbor relationship exists between the first border CA-UPF and the second border CA-UPF that is in the second domain and that corresponds to the first border CA-UPF.

The first CMF may further determine identification information of the second CMF in a confederation domain (namely, the second domain) connected to the first border CA-UPF, so as to send the ninth request message to the second CMF, to request the second CMF to create the cross-domain computing-aware network, including creating an inter-domain part of the cross-domain computing-aware network between the first domain and the second domain and an intra-domain part of the cross-domain computing-aware network in the second domain.

Step S502: The second CMF sends a sixth request message to a second SMF, where the sixth request message requests to establish a first session between the first domain and the second domain of the cross-domain computing-aware network, one end of the first session is connected to the first border CA-UPF in the first domain, and the other end is connected to the second border CA-UPF in the second domain.

Correspondingly, the second SMF receives the sixth request message from the second CMF.

The sixth request message includes one or more of the following information: the identification information of the cross-domain computing-aware network, the identification information of the first border CA-UPF, the identification information of the second border CA-UPF, or the identification information of the first SMF.

The sixth request message may be understood as being used for requesting to establish an inter-domain session or an inter-domain forwarding path of the cross-domain computing-aware network. Therefore, the sixth request message may be referred to as a request message for establishing an inter-domain session in a cross-domain computing-aware network, or has another name. This is not limited in this application.

Optionally, the first session (namely, the inter-domain session) is a virtual network-level session. The virtual network-level session is a shared session for communication between CA-UPFs, and is used for forwarding a session packet of a terminal device accessing the computing-aware network. The virtual network-level session is different from an existing terminal device-level session, and the existing terminal device-level session can only be used for forwarding a packet of the terminal device.

In Embodiment 1 of this application, after the second CMF receives the ninth request message from the first CMF, the second CMF may determine, based on the identification information that is of the first border CA-UPF and that is provided by the first CMF, the second border CA-UPF that is in the second domain and that corresponds to the first border CA-UPF, and generate an inter-domain announcement neighbor list of the second border CA-UPF, where the inter-domain announcement neighbor list includes the identification information of the first border CA-UPF. It may be understood that, in a process in which the second CMF generates the inter-domain announcement neighbor list of the second border CA-UPF, the second CMF may determine, based on the identification information of the first border CA-UPF in the first request message, that an inter-domain announcement neighbor relationship exists between the second border CA-UPF and the first border CA-UPF in the first domain.

Further, the second CMF may carry one or more of information such as the identification information of the to-be-created cross-domain computing-aware network, the identification information of the second border CA-UPF, the inter-domain announcement neighbor list, and the identification information of the first SMF, and send the sixth request message to the second SMF, to request the second SMF to establish the first session between the first domain and the second domain of the cross-domain computing-aware network, so as to trigger an inter-domain session establishment procedure of the cross-domain computing-aware network. It may be understood that the foregoing information is used for interaction between the second SMF and the first SMF, to separately establish the first session on the first border CA-UPF side and establish the first session on the second border CA-UPF side.

Step S503: The second SMF sends a first request message to the first SMF, where the first request message requests to establish the first session.

Correspondingly, the first SMF receives the first request message from the second SMF.

In Embodiment 1 of this application, after receiving the sixth request message from the second CMF, the second SMF may determine, based on the identification information of the cross-domain computing-aware network, the identification information of the second border CA-UPF, and the inter-domain announcement neighbor list in the sixth request message, that the first session between the second border CA-UPF in the second domain of the cross-domain computing-aware network and the first border CA-UPF in the first domain of the cross-domain computing-aware network needs to be established, then determine the first SMF based on the identification information of the first SMF, and send the first request message to the first SMF.

The first request message includes one or more of the following information: the identification information of the cross-domain computing-aware network, the identification information of the first border CA-UPF, the identification information of the second border CA-UPF, or first inter-domain tunnel information.

The first inter-domain tunnel information is used for establishing a tunnel between the first border CA-UPF and the second border CA-UPF. In consideration of a case in which forwarding tunnels in two directions exist between the first border CA-UPF and the second border CA-UPF, the first inter-domain tunnel information herein is specifically used for establishing a tunnel through which the first border CA-UPF sends a packet to the second border CA-UPF, or a forwarding tunnel from the first border CA-UPF to the second border CA-UPF. For clear description, the tunnel is denoted as a first inter-domain forwarding tunnel below.

It may be understood that, because the first border CA-UPF and the second border CA-UPF are in the inter-domain forwarding neighbor relationship and the announcement neighbor relationship, the inter-domain forwarding neighbor list of the first border CA-UPF includes the identification information of the second border CA-UPF, and the inter-domain announcement neighbor list of the second border CA-UPF includes the identification information of the first border CA-UPF. Therefore, it may also be considered that the first request message includes the identification information of the first border CA-UPF, the inter-domain forwarding neighbor list of the first border CA-UPF, and/or the identification information of the second border CA-UPF and the inter-domain announcement neighbor list of the second border CA-UPF.

The first request message may also be understood as a request for establishing the cross-domain virtual network-level session. Therefore, the first request message may be referred to as a cross-domain virtual network-level session establishment request message, or has another name. This is not limited.

Step S504: The first SMF sends a second request message to the first border CA-UPF, where the second request message requests to establish the first session.

Correspondingly, the first border CA-UPF receives the second request message from the first SMF.

In Embodiment 1 of this application, after receiving the first request message from the second SMF, the first SMF may determine, based on the identification information of the cross-domain computing-aware network, the identification information of the first border CA-UPF, and the identification information of the second border CA-UPF in the first request message, that the first session between the first border CA-UPF in the first domain of the cross-domain computing-aware network and the second border CA-UPF in the second domain of the cross-domain computing-aware network needs to be established, then determine the first border CA-UPF based on the identification information of the first border CA-UPF, and send the second request message to the first border CA-UPF.

The second request message may also be understood as being used for requesting to establish an inter-domain virtual network-level session on the first border CA-UPF side. Therefore, the second request message may be referred to as an inter-domain virtual network-level session establishment request message, or has another name. This is not limited.

Step S505: The first border CA-UPF establishes the first inter-domain forwarding tunnel with the second border CA-UPF.

In Embodiment 1 of this application, both the first request message and the second request message include the first inter-domain tunnel information. In this way, after receiving the second request message from the first SMF, the first border CA-UPF may establish the first inter-domain tunnel forwarding tunnel based on the first inter-domain tunnel information.

Further, the first request message and the second request message further include the identification information of the second border CA-UPF, namely, the inter-domain forwarding neighbor list of the first border CA-UPF. In this way, after receiving the second request message from the first SMF, the first border CA-UPF may establish an inter-domain forwarding neighbor relationship with the second border CA-UPF based on the inter-domain forwarding neighbor list corresponding to the first border CA-UPF, where the inter-domain forwarding neighbor relationship is used by the first border CA-UPF to send an inter-domain service request packet to the second border CA-UPF. To be specific, the first border CA-UPF may determine, based on the identification information that is of the second border CA-UPF and that is included in the inter-domain forwarding neighbor list, that the second border CA-UPF is an inter-domain forwarding neighbor corresponding to the first border CA-UPF.

Optionally, the second request message further includes the identification information of the cross-domain computing-aware network.

Step S506: The first border CA-UPF sends a second response message to the first SMF, where the second response message indicates that the first session is established on the first border CA-UPF side.

Correspondingly, the first SMF receives the second response message from the first border CA-UPF.

Optionally, the second response message includes the identification information of the cross-domain computing-aware network.

The second response message may also be understood as being used for indicating that the inter-domain virtual network-level session is established on the first border CA-UPF side. Therefore, the second response message may be referred to as an inter-domain virtual network-level session establishment response message, or has another name. This is not limited.

It may be understood that, that the first session is established on the first border CA-UPF side indicates that the first session is established on the first domain side. Therefore, the second response message may further indicate that the first session is established on the first domain side.

Step S507: The first SMF sends a first response message to the second SMF, where the first response message indicates that the first session is established on the first domain side.

Correspondingly, the second SMF receives the first response message from the first SMF.

The first response message includes one or more of the following information: the identification information of the cross-domain computing-aware network or second inter-domain tunnel information. The second inter-domain tunnel information is used for establishing a tunnel between the first border CA-UPF and the second border CA-UPF. In consideration of a case in which forwarding tunnels in two directions exist between the first border CA-UPF and the second border CA-UPF, the second inter-domain tunnel information herein is specifically used for establishing a tunnel through which the second border CA-UPF sends a packet to the first border CA-UPF, or a forwarding tunnel from the second border CA-UPF to the first border CA-UPF. For clear description, the tunnel is denoted as a second inter-domain forwarding tunnel below.

The first response message may also be understood as being used for indicating that the cross-domain virtual network-level session is established on the first domain side. Therefore, the first response message may be referred to as a cross-domain virtual network-level session establishment response message, or has another name. This is not limited.

Step S508: The second SMF sends a fifth request message to the second border CA-UPF, where the fifth request message requests to establish the first session.

Correspondingly, the second border CA-UPF receives the fifth request message from the second SMF.

The fifth request message may also be understood as being used for requesting to establish an inter-domain virtual network-level session on the second border CA-UPF side. Therefore, the fifth request message may be referred to as an inter-domain virtual network-level session establishment request message, or has another name. This is not limited.

Step S509: The second border CA-UPF establishes the second inter-domain forwarding tunnel with the first border CA-UPF.

In Embodiment 1 of this application, both the first response message and the fifth request message include the second inter-domain tunnel information. In this way, after receiving the fifth request message from the second SMF, the second border CA-UPF may establish the second inter-domain forwarding tunnel based on the second inter-domain tunnel information.

Further, the fifth request message includes the identification information of the first border CA-UPF, namely, the inter-domain announcement neighbor list of the second border CA-UPF. In this way, after receiving the fifth request message from the second SMF, the second border CA-UPF may establish the inter-domain announcement neighbor relationship with the first border CA-UPF based on the inter-domain announcement neighbor list corresponding to the second border CA-UPF, where the inter-domain announcement neighbor relationship is used by the second border CA-UPF to announce domain-level service capability information of the second domain to the first border CA-UPF. To be specific, the second border CA-UPF may determine, based on the identification information that is of the first border CA-UPF and that is included in the inter-domain announcement neighbor list, that the first border CA-UPF is an inter-domain announcement neighbor corresponding to the second border CA-UPF.

Optionally, the fifth request message further includes the identification information of the cross-domain computing-aware network.

Step S510: The second border CA-UPF sends a fifth response message to the second SMF, where the fifth response message indicates that the first session is established on the second border CA-UPF side.

Correspondingly, the second SMF receives the fifth response message from the second border CA-UPF.

Optionally, the fifth response message includes the identification information of the cross-domain computing-aware network.

The fifth response message may also be understood as being used for indicating that the inter-domain virtual network-level session is established on the second border CA-UPF side. Therefore, the fifth response message may be referred to as an inter-domain virtual network-level session establishment response message, or has another name. This is not limited.

It may be understood that, that the first session is established on the second border CA-UPF side indicates that the first session is established on the second domain side. Therefore, the fifth response message may further indicate that the first session is established on the second domain side.

It can be learned that, in Embodiment 1 of this application, after the second SMF receives the second request message from the second CMF, the second SMF may complete an inter-domain session creation procedure by interacting with the first SMF (as shown in step S506 to step S510), to establish the inter-domain forwarding tunnel, the inter-domain forwarding neighbor relationship, and the inter-domain announcement neighbor relationship between the first border CA-UPF and the second border CA-UPF.

It should be noted that, in the inter-domain session creation procedure, the inter-domain tunnel information used for establishing the inter-domain forwarding tunnel between the first border CA-UPF and the second border CA-UPF may be generated by the SMF, or may be generated by the border CA-UPF. Depending on whether the inter-domain tunnel information is generated by the SMF or the border CA-UPF, and considering that corresponding inter-domain tunnel information is required for establishing both the first inter-domain forwarding tunnel and the second inter-domain forwarding tunnel, the inter-domain session creation procedure in Embodiment 1 may have two possible implementations, which are respectively referred to as an implementation 1 and an implementation 2 below.

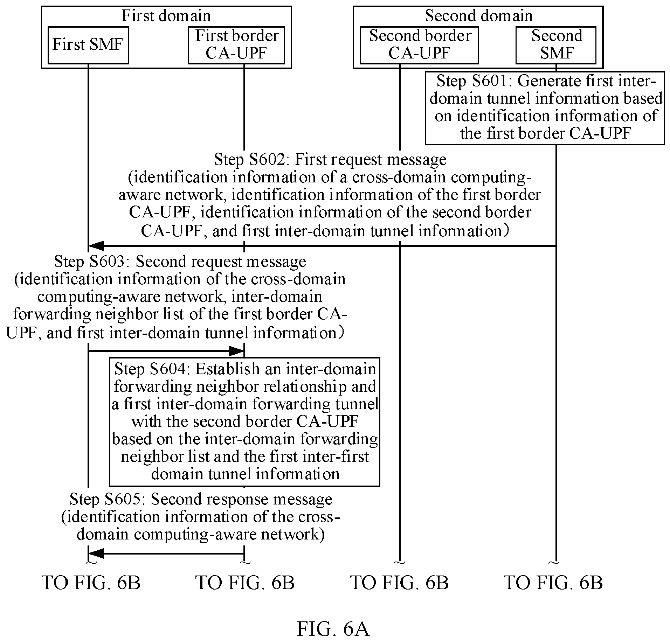

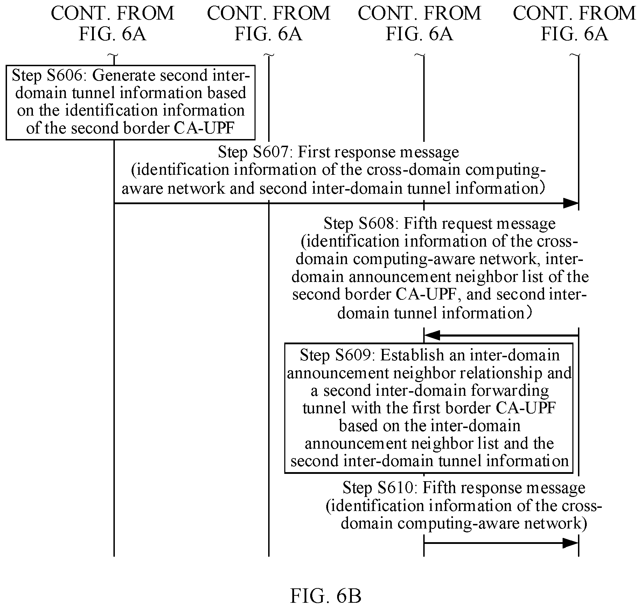

As shown in FIG. 6A and FIG. 6B, the inter-domain session creation procedure corresponding to the implementation 1 may include the following steps.

Step S601: The second SMF generates the first inter-domain tunnel information based on the identification information of the first border CA-UPF, where the first inter-domain tunnel information is used for establishing the first inter-domain forwarding tunnel. For example, the first inter-domain tunnel information includes identification information of the first inter-domain forwarding tunnel and a device IP address of the second border CA-UPF.

Step S602: The second SMF sends a first request message to the first SMF, where the first request message requests to establish the first session, namely, the cross-domain virtual network-level session.

Correspondingly, the first SMF receives the first request message from the second SMF.

The first request message includes the identification information of the cross-domain computing-aware network, the identification information of the first border CA-UPF, the identification information of the second border CA-UPF, and the first inter-domain tunnel information.

Step S603: The first SMF sends a second request message to the first border CA-UPF, where the second request message requests to establish the first session, to be specific, requests to establish the inter-domain virtual network-level session on the first border CA-UPF side.

Correspondingly, the first border CA-UPF receives the second request message from the first SMF.

The second request message includes the identification information of the cross-domain computing-aware network, the inter-domain forwarding neighbor list of the first border CA-UPF, and the first inter-domain tunnel information. The inter-domain forwarding neighbor list includes the identification information of the second border CA-UPF. Optionally, the second request message further includes the identification information of the first border CA-UPF.

Step S604: The first border CA-UPF establishes the inter-domain forwarding neighbor relationship and the first inter-domain forwarding tunnel between the first border CA-UPF and the second border CA-UPF based on the inter-domain forwarding neighbor list and the first inter-domain tunnel information.

Specifically, after receiving the second request message from the first SMF, the first border CA-UPF may create a corresponding internal interface for the cross-domain computing-aware network based on the identification information of the cross-domain computing-aware network, then record or update the inter-domain forwarding neighbor relationship between the first border CA-UPF and the second border CA-UPF based on the inter-domain forwarding neighbor list, and determine, based on the first inter-domain tunnel information, a connection relationship between the internal interface corresponding to the inter-domain computing-aware network and an external interface of the first border CA-UPF, and a corresponding tunnel forwarding rule.

Step S605: The first border CA-UPF sends a second response message to the first SMF, where the second response message indicates that the first session is established on the first border CA-UPF side, to be specific, indicates that the inter-domain virtual network-level session is established on the first border CA-UPF side.

Correspondingly, the first SMF receives the second response message from the first border CA-UPF.

The second response message includes the identification information of the cross-domain computing-aware network.

Step S606: The first SMF generates the second inter-domain tunnel information based on the identification information of the second border CA-UPF, where the second inter-domain tunnel information is used for establishing the second inter-domain forwarding tunnel. For example, the second inter-domain tunnel information includes identification information of the second inter-domain forwarding tunnel and a device IP address of the first border CA-UPF.

Step S607: The first SMF sends a first response message to the second SMF, where the first response message indicates that the first session is established on the first domain side.

Correspondingly, the second SMF receives the first response message from the first SMF.

The first response message includes the identification information of the cross-domain computing-aware network and the second inter-domain tunnel information.

Step S608: The second SMF sends a fifth request message to the second border CA-UPF, where the fifth request message requests to establish the first session, to be specific, requests to establish the inter-domain virtual network-level session on the second border CA-UPF side.

Correspondingly, the second border CA-UPF receives the fifth request message from the second SMF.

The fifth request message includes the identification information of the cross-domain computing-aware network, the inter-domain announcement neighbor list of the second border CA-UPF, and the second inter-domain tunnel information. Optionally, the fifth request message further includes the identification information of the second border CA-UPF.

Step S609: The second border CA-UPF establishes the inter-domain announcement neighbor relationship and the second inter-domain forwarding tunnel between the second border CA-UPF and the first border CA-UPF based on the inter-domain announcement neighbor list and the second inter-domain tunnel information.

Specifically, after receiving the fifth request message from the second SMF, the second border CA-UPF may create a corresponding internal interface for the cross-domain computing-aware network based on the identification information of the cross-domain computing-aware network, record or update the inter-domain announcement neighbor relationship between the second border CA-UPF and the first border CA-UPF based on the inter-domain announcement neighbor list, and establish, based on the second inter-domain tunnel information, a connection relationship between the internal interface corresponding to the inter-domain computing-aware network and an external interface of the second border CA-UPF, and a corresponding tunnel forwarding rule.

Step S610: The second border CA-UPF sends a fifth response message to the second SMF, where the fifth response message indicates that the first session is established on the second border CA-UPF, to be specific, indicates that the inter-domain virtual network-level session is established on the second border CA-UPF side.

Correspondingly, the second SMF receives the fifth response message from the second border CA-UPF.

The fifth response message includes the identification information of the cross-domain computing-aware network.

In the foregoing implementation 1, the first inter-domain tunnel information is generated by the second SMF, and is used by the first SMF to establish the virtual network-level session of the first border CA-UPF; and the second inter-domain tunnel information is generated by the first SMF, and is used by the second SMF to establish the virtual network-level session of the second border CA-UPF.

Step S603 to step S605 describe a process in which the first SMF interacts with the first border CA-UPF to establish the first session on the first border CA-UPF side (namely, the inter-domain virtual network-level session on the first border CA-UPF side). Step S608 to step S610 describe a process in which the second SMF interacts with the second border CA-UPF to establish the first session on the second border CA-UPF side (namely, the inter-domain virtual network-level session of the second border CA-UPF). It may be understood that execution of step S603 to step S605 depends on the first inter-domain tunnel information provided by the second SMF, and execution of step S608 to step S610 depends on the second inter-domain tunnel information provided by the first SMF. Therefore, step S603 to step S605 are performed after step S602, and step S608 to step S610 are performed after step S607. However, it should be noted that an execution sequence of step S603 to step S605 and step S606 is not specifically limited in this application.

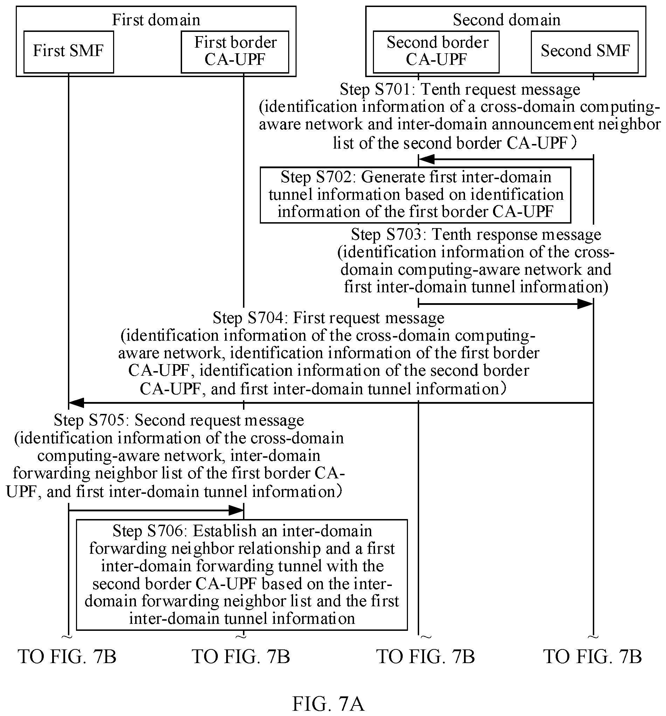

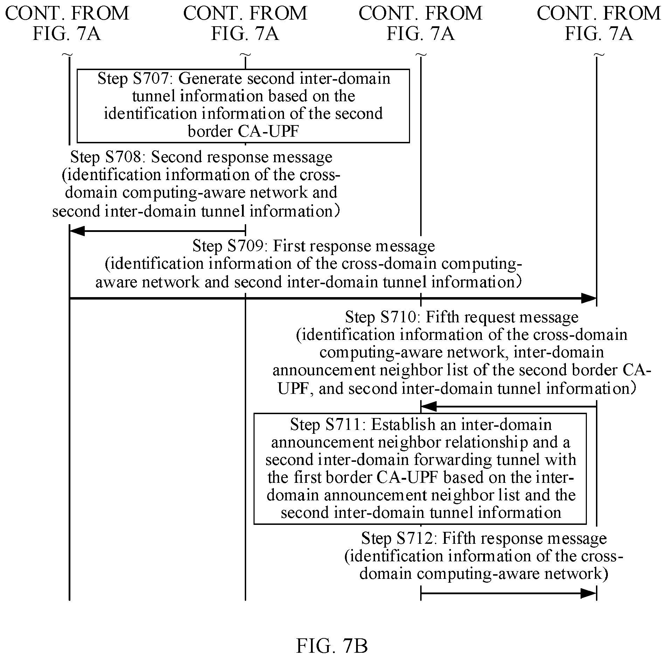

As shown in FIG. 7A and FIG. 7B, the inter-domain session creation procedure corresponding to the implementation 2 includes the following steps.

Step S701: The second SMF sends a tenth request message to the second border CA-UPF, where the tenth request message requests to establish the first session, to be specific, requests to establish the inter-domain virtual network-level session on the second border CA-UPF side.

Correspondingly, the second border CA-UPF receives the tenth request message from the second SMF.

The tenth request message includes the identification information of the cross-domain computing-aware network and the inter-domain announcement neighbor list of the second border CA-UPF. The inter-domain announcement neighbor list includes the identification information of the first border CA-UPF. Optionally, the tenth request message further includes the identification information of the second border CA-UPF.

Step S702: The second border CA-UPF generates the first inter-domain tunnel information based on the identification information of the first border CA-UPF, where the first inter-domain tunnel information is used for establishing the first inter-domain forwarding tunnel. For example, the first inter-domain tunnel information includes identification information of the first inter-domain forwarding tunnel and a device IP address of the second border CA-UPF.

Step S703: The second border CA-UPF sends a tenth response message to the second SMF, where the tenth response message indicates that the first session is established on the second border CA-UPF side, to be specific, indicates that the inter-domain virtual network-level session is established on the second border CA-UPF side.

Correspondingly, the second SMF receives the tenth response message from the second border CA-UPF.

The tenth response message includes the identification information of the cross-domain computing-aware network and the first inter-domain tunnel information.

Step S704: The second SMF sends a first request message to the first SMF, where the first request message requests to establish the first session, to be specific, requests to establish the cross-domain virtual network-level session.

Correspondingly, the first SMF receives the first request message from the second SMF.

The first request message includes the identification information of the cross-domain computing-aware network, the identification information of the first border CA-UPF, the identification information of the second border CA-UPF, and the first inter-domain tunnel information.

Step S705: The first SMF sends a second request message to the first border CA-UPF, where the second request message requests to establish the first session, to be specific, requests to establish the inter-domain virtual network-level session on the first border CA-UPF side.

Correspondingly, the first border CA-UPF receives the second request message from the first SMF.

The second request message includes the identification information of the cross-domain computing-aware network, the inter-domain forwarding neighbor list of the first border CA-UPF, and the first inter-domain tunnel information. The inter-domain forwarding neighbor list includes the identification information of the second border CA-UPF. The second request message includes the identification information of the first border CA-UPF.

Step S706: The first border CA-UPF establishes the inter-domain forwarding neighbor relationship and the first inter-domain forwarding tunnel between the first border CA-UPF and the second border CA-UPF based on the inter-domain forwarding neighbor list and the first inter-domain tunnel information.

Specifically, after receiving the second request message from the first SMF, the first border CA-UPF may create a corresponding internal interface for the cross-domain computing-aware network based on the identification information of the cross-domain computing-aware network, then record or update the inter-domain forwarding neighbor relationship between the first border CA-UPF and the second border CA-UPF based on the inter-domain forwarding neighbor list, and determine, based on the first inter-domain tunnel information, a connection relationship between the internal interface corresponding to the inter-domain computing-aware network and an external interface of the first border CA-UPF, and a corresponding tunnel forwarding rule.

Step S707: The first border CA-UPF generates the second inter-domain tunnel information based on the identification information of the second border CA-UPF. The second inter-domain tunnel information is used for establishing the second inter-domain forwarding tunnel. For example, the second inter-domain tunnel information includes identification information of the second inter-domain forwarding tunnel and a device IP address of the first border CA-UPF.

Step S708: The first border CA-UPF sends a second response message to the first SMF, where the second response message indicates that the first session is established on the first border CA-UPF side, to be specific, indicates that the inter-domain virtual network-level session is established on the first border CA-UPF side.

Correspondingly, the first SMF receives the second response message from the first border CA-UPF.

The second response message includes the identification information of the cross-domain computing-aware network and the second inter-domain tunnel information.

Step S709: The first SMF sends a first response message to the second SMF, where the first response message indicates that the first session is established on the first domain side.

Correspondingly, the second SMF receives the first response message from the first SMF.

The first response message includes the identification information of the cross-domain computing-aware network and the second inter-domain tunnel information.

Step S710: The second SMF sends a fifth request message to the second border CA-UPF, where the fifth request message requests to update the first session, to be specific, requests to update the inter-domain virtual network-level session of the second border CA-UPF.

Correspondingly, the second border CA-UPF receives the fifth request message from the second SMF.

The fifth request message includes the identification information of the cross-domain computing-aware network, the inter-domain forwarding neighbor list of the first border CA-UPF, and the first inter-domain tunnel information. The inter-domain forwarding neighbor list includes the identification information of the second border computing-aware user plane function. Optionally, the fifth request message further includes the identification information of the first border CA-UPF.

Step S711: The second border CA-UPF establishes the inter-domain announcement neighbor relationship and the second inter-domain forwarding tunnel between the second border CA-UPF and the first border CA-UPF based on the inter-domain announcement neighbor list and the second inter-domain tunnel information.

Specifically, after receiving the fifth request message from the second SMF, the second border CA-UPF may create a corresponding internal interface for the cross-domain computing-aware network based on the identification information of the cross-domain computing-aware network, record or update the announcement neighbor relationship between the second border CA-UPF and the first border CA-UPF based on the inter-domain announcement neighbor list, and determine, based on the second inter-domain tunnel information, a connection relationship between the internal interface corresponding to the inter-domain computing-aware network and an external interface of the second border CA-UPF, and a corresponding tunnel forwarding rule.

Step S712: The second border CA-UPF sends a fifth response message to the second SMF, where the fifth response message indicates that the first session is updated, to be specific, indicates that the inter-domain virtual network-level session is updated on the second border CA-UPF side.

Correspondingly, the second SMF receives the fifth response message from the second border CA-UPF.

The fifth response message includes the identification information of the cross-domain computing-aware network.

In the foregoing implementation 2, the first inter-domain tunnel information is generated by the second border CA-UPF, and is used by the first SMF to establish the virtual network-level session of the first border CA-UPF; and the second inter-domain tunnel information is generated by the first border CA-UPF, and is used by the second SMF to establish the virtual network-level session of the second border CA-UPF.

To obtain the first inter-domain tunnel information, the second SMF may send the tenth request message to the second border CA-UPF. After receiving the tenth request message, the second border CA-UPF generates the first inter-domain tunnel information, and returns the first inter-domain tunnel information to the second SMF by using the tenth response message. In this process, because the tenth request message does not include the second inter-domain tunnel information, the second border CA-UPF cannot establish the second inter-domain forwarding tunnel. Therefore, the first session on the second border CA-UPF side (namely, the virtual network-level session on the second border CA-UPF side) is not successfully established. Subsequently, after the second SMF receives the first response message from the first SMF, the second SMF may carry the second inter-domain tunnel information, send the fifth request message to the second border CA-UPF, and update the first session by interacting with the second border CA-UPF again.

It may be understood that step S705 to step S708 are performed after step S704, and step S710 to step S712 are performed after step S709. However, it should be noted that an execution sequence of step S706 and step S707 is not specifically limited in this application.

Step S511: The second SMF sends a sixth response message to the second CMF, where the sixth response message indicates that the first session is established.

Correspondingly, the second CMF receives the sixth response message from the second SMF.

The sixth response message includes the identification information of the cross-domain computing-aware network.

The sixth response message may be understood as being used for indicating that the inter-domain session or the inter-domain forwarding path of the cross-domain computing-aware network is established. Therefore, the sixth response message may be referred to as a request message for establishing an inter-domain session in a cross-domain computing-aware network, or has another name. This is not limited in this application.

It may be understood that the sixth response message indicates that the inter-domain session between the first border CA-UPF in the first domain and the second border CA-UPF in the second domain is established. In this way, after receiving the sixth response message from the second SMF, the second CMF may continue to create or update the intra-domain part of the cross-domain computing-aware network in the second domain.

Step S512: The second CMF creates or updates the intra-domain part of the cross-domain computing-aware network in the second domain.

For an intra-domain creation part, the second CMF may determine intra-domain CA-UPF members (to be specific, determine M intra-domain CA-UPFs) in the second domain of the cross-domain computing-aware network, use the second border CA-UPF as an inter-domain ingress CA-UPF, determine intra-domain forwarding neighbor relationships and/or intra-domain announcement neighbor relationships between the second border CA-UPF and the M intra-domain CA-UPFs, and determine an intra-domain forwarding neighbor relationship and/or an intra-domain announcement neighbor relationship between the M intra-domain CA-UPFs, to establish or update the intra-domain virtual network-level session.

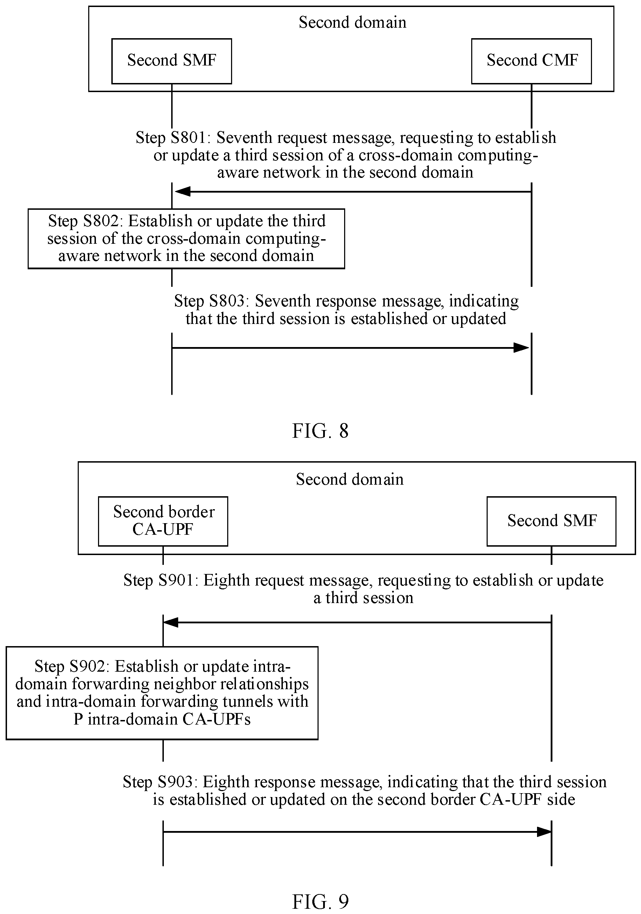

As shown in FIG. 8, a session establishment or update process of the cross-domain computing-aware network in the second domain may include the following steps.

Step S801: The second CMF sends a seventh request message to the second SMF, where the seventh request message requests to establish or update a third session in the second domain of the cross-domain computing-aware network.

Correspondingly, the second SMF receives the seventh request message from the second CMF.

Optionally, the third session is a virtual network-level session.

The seventh request message includes the identification information of the cross-domain computing-aware network, the identification information of the second border CA-UPF and an intra-domain forwarding neighbor list of the second border CA-UPF.

The seventh request message may be understood as being used for requesting to establish/update an intra-domain session or a second intra-domain forwarding path of the cross-domain computing-aware network. Therefore, the seventh request message may be referred to as a request message for establishing/updating an intra-domain session in a cross-domain computing-aware network, or has another name. This is not limited in this application.

In Embodiment 1 of this application, before the second CMF sends the seventh request message to the second SMF, the second CMF may generate the intra-domain forwarding neighbor list of the second border CA-UPF, where the intra-domain forwarding neighbor list includes identification information of P intra-domain CA-UPFs in the M intra-domain CA-UPFs in the second domain of the cross-domain computing-aware network, and P is a positive integer less than or equal to M. Optionally, the second CMF may further generate the intra-domain announcement neighbor list of the second border CA-UPF, where the intra-domain announcement neighbor list includes identification information of Q intra-domain CA-UPFs in the M intra-domain CA-UPFs, and Q is a positive integer less than or equal to M.

The second CMF may further generate a corresponding intra-domain forwarding neighbor list and/or intra-domain announcement neighbor list for each of the M intra-domain CA-UPFs. For example, a second intra-domain CA-UPF is used as an example. The second intra-domain CA-UPF is one of the M intra-domain CA-UPFs, and the second CMF may generate an intra-domain forwarding neighbor list and/or an intra-domain announcement neighbor list of the second intra-domain CA-UPF. It may be understood that, if the second intra-domain CA-UPF is an ingress CA-UPF, the second intra-domain CA-UPF has a corresponding intra-domain forwarding neighbor list; or if the second intra-domain CA-UPF is an egress CA-UPF, the second intra-domain CA-UPF has a corresponding intra-domain announcement neighbor list.

In view of this, the seventh request message includes the identification information of the cross-domain computing-aware network, the identification information of the second border CA-UPF, the intra-domain forwarding neighbor list of the second border CA-UPF, the identification information of the M intra-domain CA-UPFs, and the intra-domain forwarding neighbor list and/or the intra-domain announcement neighbor list that correspond/corresponds to each of the M intra-domain CA-UPFs, for example, the intra-domain forwarding neighbor list and/or the intra-domain announcement neighbor list corresponding to the second intra-domain CA-UPF.

Optionally, the seventh request message further includes an intra-domain announcement neighbor list of the second border CA-UPF.

It may be understood that, if no intra-domain computing-aware network exists in the second domain before the cross-domain computing-aware network is created, the seventh request message may request to establish the third session in the second domain of the cross-domain computing-aware network. If the second CMF has created the intra-domain computing-aware network by using the second SMF before the cross-domain computing-aware network is created, the seventh request message may request to update the third session in the second domain of the cross-domain computing-aware network. In this case, the intra-domain forwarding neighbor list and the intra-domain announcement neighbor list carried in the seventh request message may be an updated intra-domain forwarding neighbor list and an updated intra-domain announcement neighbor list.

Step S802: The second SMF establishes or updates the third session in the second domain of the cross-domain computing-aware network.

As shown in FIG. 9, a process in which the second SMF establishes or updates the third session on the second border CA-UPF side may include the following steps.

Step S901: The second SMF sends an eighth request message to the second border CA-UPF, where the eighth request message requests to establish or update the third session, to be specific, requests to establish or update the intra-domain virtual network-level session on the second border CA-UPF side. The eighth request message includes the identification information of the cross-domain computing-aware network and the intra-domain forwarding neighbor list of the second border CA-UPF. Optionally, the eighth request message further includes the intra-domain announcement neighbor list of the second border CA-UPF. Step S902: The second border CA-UPF establishes or updates intra-domain forwarding neighbor relationships and intra-domain forwarding tunnels between the second border CA-UPF and the P intra-domain CA-UPFs based on the intra-domain forwarding neighbor list corresponding to the second border CA-UPF. The P intra-domain CA-UPFs are egress CA-UPFs corresponding to the second border CA-UPF in the second domain, and the identification information of the P intra-domain CA-UPFs is included in the intra-domain forwarding neighbor list of the second border CA-UPF. Optionally, the second border CA-UPF may further establish intra-domain announcement neighbor relationships with the Q intra-domain CA-UPFs based on the intra-domain announcement neighbor list corresponding to the second border CA-UPF. The Q intra-domain CA-UPFs are ingress CA-UPFs corresponding to the second border CA-UPF in the second domain, and the identification information of the Q intra-domain CA-UPFs is included in the intra-domain announcement neighbor list of the second border CA-UPF. Step S903: The second border CA-UPF sends an eighth response message to the second SMF, where the eighth response message indicates that the third session is established or updated, to be specific, indicates that the intra-domain virtual network-level session of the second border CA-UPF is established or updated, and the eighth response message includes the identification information of the cross-domain computing-aware network.

It should be noted that the process in which the second SMF establishes or updates the third session may further include establishment or update on each of the M intra-domain CA-UPF sides, to be specific, establishment or update of the intra-domain virtual network-level session on each of the M intra-domain CA-UPF sides.

For example, a second intra-domain CA-UPF is used as an example. A process in which the second SMF establishes or updates the third session on the second intra-domain CA-UPF side may include the following steps.

Step S1001: The second SMF sends an eleventh request message to the second intra-domain CA-UPF, where the eleventh request message requests to establish or update the third session, to be specific, requests to establish or update the intra-domain virtual network-level session on the second CA-UPF side. The eleventh request message includes the identification information of the cross-domain computing-aware network, and the intra-domain forwarding neighbor list and/or the intra-domain announcement neighbor list of the second intra-domain CA-UPF.

Step S1002: The second intra-domain CA-UPF establishes, based on the intra-domain forwarding neighbor list corresponding to the second intra-domain CA-UPF, an intra-domain forwarding neighbor relationship and an intra-domain forwarding tunnel between the second intra-domain CA-UPF and an egress CA-UPF corresponding to the second intra-domain CA-UPF. Optionally, the second intra-domain CA-UPF may further establish, based on the intra-domain announcement neighbor list corresponding to the second intra-domain CA-UPF, an intra-domain announcement neighbor relationship between the second intra-domain CA-UPF and an ingress CA-UPF corresponding to the second intra-domain CA-UPF.

Step S1003: The second intra-domain CA-UPF sends an eleventh response message to the second SMF, where the eleventh response message indicates that the third session is established or updated on the second intra-domain CA-UPF side, to be specific, indicates that the intra-domain virtual network-level session of the second CA-UPF is established or updated, and the eleventh response message includes the identification information of the cross-domain computing-aware network.

Step S803: The second SMF sends a seventh response message to the second CMF, where the seventh response message indicates that the third session is established or updated.

Correspondingly, the second CMF receives the seventh response message from the second SMF.

The seventh response message includes the identification information of the cross-domain computing-aware network.

In Embodiment 1 of this application, the second SMF may send the seventh response message to the second CMF after establishing or updating the intra-domain virtual network-level session of the second border CA-UPF and establishing or updating the intra-domain virtual network-level session of each of the M CA-UPFs, to indicate that the forwarding path of the cross-domain computing-aware network in the second domain is established or updated.

The seventh response message may be understood as being used for indicating that the intra-domain session or the second intra-domain forwarding path of the cross-domain computing-aware network is established or updated. Therefore, the seventh response message may be referred to as an intra-domain session establishment/update response message of the cross-domain computing-aware network, or has another name. This is not limited in this application.

Step S513: The second CMF sends a ninth response message to the first CMF, where the ninth response message indicates that the cross-domain computing-aware network is created on the second domain side.

Correspondingly, the first CMF receives the ninth response message from the second CMF.

The ninth response message includes the identification information of the cross-domain computing-aware network.

The ninth response message may be referred to as a cross-domain computing-aware network creation response message, or has another name. This is not limited in this application.

In Embodiment 1 of this application, the second CMF may send the ninth response message to the first CMF after creating or updating the intra-domain part of the cross-domain computing-aware network in the second domain.

The ninth response message indicates that the inter-domain part of the cross-domain computing-aware network is created, and the intra-domain part of the cross-domain computing-aware network in the second domain is created (or updated). Alternatively, it may be understood that, it indicates that the inter-domain virtual network-level session between the first border CA-UPF in the first domain and the second border CA-UPF in the second domain is established or updated, and the intra-domain virtual network-level session between the second border CA-UPF and the corresponding egress CA-UPF in the second domain is established or updated. In this way, after receiving the ninth response message from the second CMF, the first CMF may continue to create or update an intra-domain part in the first domain of the cross-domain computing-aware network.

Step S514: The first CMF creates or updates the intra-domain part of the cross-domain computing-aware network in the first domain.

For the intra-domain creation part, the first CMF may determine specific CA-UPFs that are ingress CA-UPFs and specific CA-UPFs that are egress CA-UPFs in the N intra-domain CA-UPFs and the first border CA-UPF in the first domain of the cross-domain computing-aware network, and then generate a corresponding intra-domain forwarding neighbor list/intra-domain announcement neighbor list for each CA-UPF (including the intra-domain CA-UPF and the first border CA-UPF, where the first border CA-UPF is used as an intra-domain egress CA-UPF). In this way, the intra-domain virtual network-level session is established or updated.

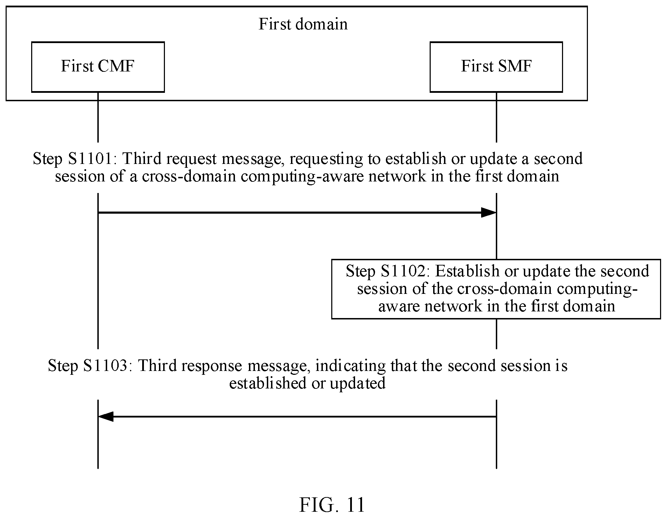

As shown in FIG. 11, a session creation or update process of the cross-domain computing-aware network in the first domain may include the following steps.

Step S1101: The first CMF sends a third request message to the first SMF, where the third request message requests to establish or update a second session in the first domain of the cross-domain computing-aware network.

Correspondingly, the first SMF receives the third request message from the first CMF.

Optionally, the second session is a virtual network-level session.

The third request message includes the identification information of the cross-domain computing-aware network, the identification information of the first border CA-UPF and an intra-domain announcement neighbor list of the first border CA-UPF.

The third request message may be understood as being used for requesting to establish/update an intra-domain session or a first intra-domain forwarding path of the cross-domain computing-aware network. Therefore, the third request message may be referred to as an intra-domain session establishment/update request message of the cross-domain computing-aware network, or has another name. This is not limited in this application.

In Embodiment 1 of this application, before the first CMF sends the third request message to the first SMF, the first CMF may generate the intra-domain announcement neighbor list of the first border CA-UPF, where the intra-domain announcement neighbor list includes identification information of L intra-domain CA-UPFs of the N intra-domain CA-UPFs in the first domain ofthe cross-domain computing-aware network, and L is a positive integer less than or equal to N. Optionally, the first CMF may further generate an intra-domain forwarding neighbor list of the first border CA-UPF, where the intra-domain forwarding neighbor list includes identification information of K intra-domain CA-UPFs of the N intra-domain CA-UPFs, and K is a positive integer less than or equal to N.

The first CMF may further generate a corresponding intra-domain forwarding neighbor list and/or intra-domain announcement neighbor list for each of the N intra-domain CA-UPFs. For example, a first intra-domain CA-UPF is used as an example. The first intra-domain CA-UPF is one of the N CA-UPFs, and the first CMF may generate an intra-domain forwarding neighbor list and/or an intra-domain announcement neighbor list of the first intra-domain CA-UPF. It may be understood that, if the first intra-domain CA-UPF is an ingress CA-UPF, the first intra-domain CA-UPF has a corresponding intra-domain forwarding neighbor list; or if the first intra-domain CA-UPF is an egress CA-UPF, the first intra-domain CA-UPF has a corresponding intra-domain announcement neighbor list.

In view of this, the third request message includes the identification information of the cross-domain computing-aware network, the identification information of the first border CA-UPF and the intra-domain announcement neighbor list of the first border CA-UPF, the identification information of the N intra-domain CA-UPFs, and the intra-domain forwarding neighbor list and/or the intra-domain announcement neighbor list that correspond/corresponds to each of the N intra-domain CA-UPFs, for example, the intra-domain forwarding neighbor list and/or the intra-domain announcement neighbor list corresponding to the first intra-domain CA-UPF.

Optionally, the third request message further includes the intra-domain forwarding neighbor list of the first border CA-UPF.

It may be understood that, if no intra-domain computing-aware network exists in the first domain before the cross-domain computing-aware network is created, the third request message may request to establish the second session in the first domain of the cross-domain computing-aware network. If the first CMF has created the intra-domain computing-aware network by using the first SMF before the cross-domain computing-aware network is created, the third request message may request to update the second session in the first domain of the cross-domain computing-aware network. In this case, the intra-domain forwarding neighbor list and the intra-domain announcement neighbor list carried in the third request message may be an updated intra-domain forwarding neighbor list and an updated intra-domain announcement neighbor list.

Step S 1102: The first SMF establishes or updates the second session in the first domain of the cross-domain computing-aware network.

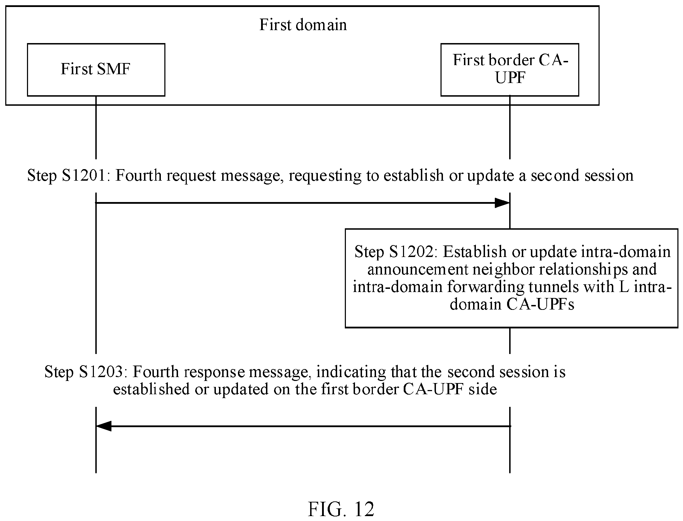

As shown in FIG. 12, a process in which the first SMF establishes or updates the second session on the first border CA-UPF side may include the following steps.

Step S1201: The first SMF sends a fourth request message to the first border CA-UPF, where the fourth request message requests to establish or update the second session, to be specific, requests to establish or update an intra-domain virtual network-level session on the first border CA-UPF side. The fourth request message includes the identification information of the cross-domain computing-aware network and the intra-domain announcement neighbor list of the first border CA-UPF. Optionally, the fourth request message may further include the intra-domain forwarding neighbor list of the first border CA-UPF. Step S1202: The first border CA-UPF establishes or updates intra-domain announcement neighbor relationships with the L intra-domain CA-UPFs based on the intra-domain announcement neighbor list corresponding to the first border CA-UPF. The L intra-domain CA-UPFs are ingress CA-UPFs corresponding to the first border CA-UPF in the first domain, and the identification information of the L intra-domain CA-UPFs is included in the intra-domain announcement neighbor list of the first border CA-UPF. Optionally, the first border CA-UPF may further establish intra-domain forwarding neighbor relationships and intra-domain forwarding tunnels between the first border CA-UPF and the K intra-domain CA-UPFs based on the intra-domain forwarding neighbor list corresponding to the first border CA-UPF. The K intra-domain CA-UPFs are egress CA-UPFs corresponding to the first border CA-UPF in the first domain, and the identification information of the K intra-domain CA-UPFs is included in the intra-domain forwarding neighbor list of the first border CA-UPF. Step S 1203: The first border CA-UPF sends a fourth response message to the first SMF, where the fourth response message indicates that the second session is established or updated on the first border CA-UPF side, to be specific, indicates that the intra-domain virtual network-level session is established or updated on the first border CA-UPF side, and the fourth response message includes the identification information of the cross-domain computing-aware network.

It should be noted that the process in which the first SMF establishes or updates the second session may further include establishment or update on each of the N intra-domain CA-UPF sides, to be specific, establishment or update of the intra-domain virtual network-level session on each of the N intra-domain CA-UPF sides.

For example, a first intra-domain CA-UPF is used as an example. A process in which the first SMF establishes or updates the second session on the first intra-domain CA-UPF side may include the following steps. Step S1301: The first SMF sends a twelfth request message to the first CA-UPF, where the twelfth request message requests to establish or update the second session, to be specific, requests to establish or update the intra-domain virtual network-level session on the first intra-domain CA-UPF side. The twelfth request message includes the identification information of the cross-domain computing-aware network, and an intra-domain forwarding neighbor list and/or an intra-domain announcement neighbor list of the first intra-domain CA-UPF. Step S1302: The first intra-domain CA-UPF establishes, based on the intra-domain forwarding neighbor list corresponding to the first intra-domain CA-UPF, an intra-domain forwarding neighbor relationship and an intra-domain forwarding tunnel between the first intra-domain CA-UPF and an egress CA-UPF corresponding to the first intra-domain CA-UPF. Optionally, the first intra-domain CA-UPF may further establish, based on the intra-domain announcement neighbor list corresponding to the first intra-domain CA-UPF, an intra-domain announcement neighbor relationship between the first intra-domain CA-UPF and the ingress CA-UPF corresponding to the first intra-domain CA-UPF. Step S1303: The first intra-domain CA-UPF sends a twelfth response message to the first SMF, where the twelfth response message indicates that the second session is established or updated on the first intra-domain CA-UPF side, to be specific, indicates that the intra-domain virtual network-level session is established on the first intra-domain CA-UPF side, and the twelfth response message includes the identification information of the cross-domain computing-aware network.

Step S1103: The first SMF sends a third response message to the first CMF, where the third response message indicates that the second session in the first domain of the cross-domain computing-aware network is established or updated.

Correspondingly, the first CMF receives the tenth response message from the first SMF.

The third response message includes the identification information of the cross-domain computing-aware network.

The third response message may be understood as being used for indicating that the intra-domain session or the first intra-domain forwarding path of the cross-domain computing-aware network is established or updated. Therefore, the third response message may be referred to as a request message for establishing/updating an intra-domain session in a cross-domain computing-aware network, or has another name. This is not limited in this application.

It should be noted that, as described above, the first domain is used as a local domain, and may create the cross-domain computing-aware network with one or more confederation domains. In this case, after determining that an inter-domain session between the first CMF and each confederation domain is created or updated, the first CMF may perform the method shown in step S1101 to step S1103, to create or update an intra-domain computing-aware network.

Optionally, after creating or updating the intra-domain part of the cross-domain computing-aware network in the first domain, the first CMF may further send, to the first OAM or the first UDM in the first domain, a response message indicating that the cross-domain computing-aware network is successfully created.

It can be learned from the foregoing content that, in this application, a border CA-UPF is introduced into a basic architecture of a computing-aware network to implement computing-aware routing between a plurality of operator networks, so as to implement mutual sharing of operator edge computing power, resolve a problem that coverage and a user group of an edge application of a single-operator computing-aware network, help aggregate infrastructure capabilities of a plurality of operators, provide a unified capability exposure interface for an application provider and an enterprise user, and implement consistent and seamless edge service experience across operators.

### Embodiment 2

Embodiment 2 of this application provides a session management method for a cross-domain computing-aware network. The method is specifically a method for creating a cross-domain computing-aware network between a first domain and a second domain, and corresponds to the solution 2 mentioned above.

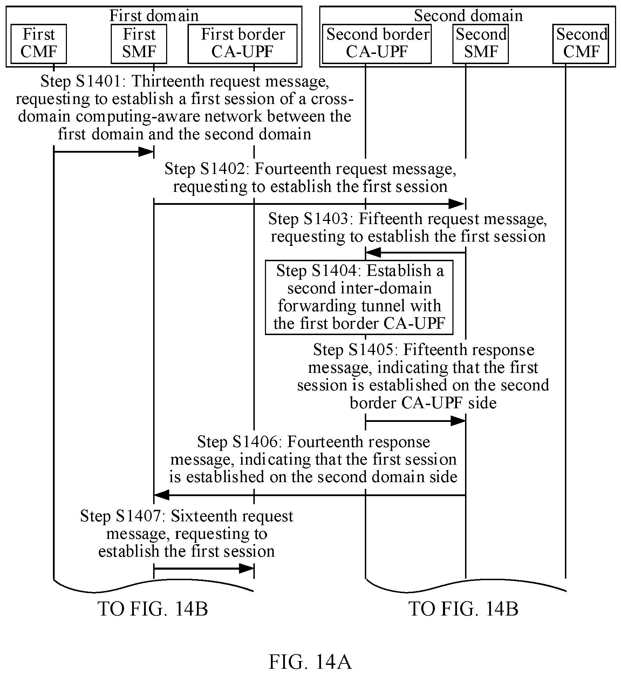

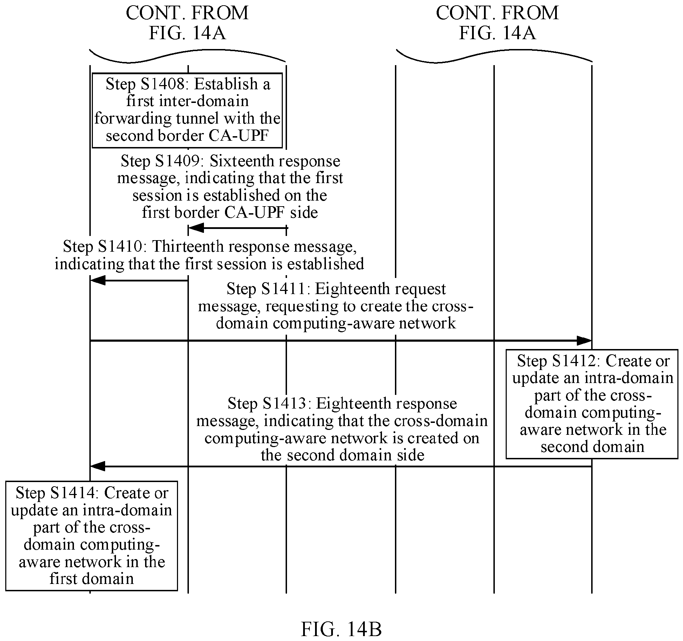

FIG. 14A and FIG. 14B are a schematic flowchart of the session management method for a cross-domain computing-aware network according to Embodiment 2 of this application. The method includes the following steps.

Step S1401: A first CMF sends a thirteenth request message to a first SMF, where the thirteenth request message requests to establish a first session between the first domain and the second domain of the cross-domain computing-aware network, one end of the first session is connected to a first border CA-UPF in the first domain, and the other end is connected to a second border CA-UPF in the second domain.

Correspondingly, the first SMF receives the thirteenth request message from the first CMF.

The thirteenth request message includes one or more of the following information: identification information of the cross-domain computing-aware network, identification information of the first border CA-UPF, identification information of the second border CA-UPF, or identification information of a second SMF.

The thirteenth request message may be understood as being used for requesting to establish an inter-domain session or an inter-domain forwarding path of the cross-domain computing-aware network. Therefore, the thirteenth request message may be referred to as a request message for establishing an inter-domain session in a cross-domain computing-aware network, or has another name. This is not limited in this application.

Optionally, the first session (namely, the inter-domain session is a virtual network-level session.

In Embodiment 2 of this application, the first CMF may receive, from a first OAM or a first UDM in the first domain, a request message for creating the cross-domain computing-aware network, determine, based on the request message, that the cross-domain computing-aware network needs to be created, and determine CA-UPF members in the first domain of the cross-domain computing-aware network, for example, including N intra-domain CA-UPFs and the first border CA-UPF. The request message may include the identification information of the to-be-created cross-domain computing-aware network, an intra-domain member list of the local domain, and a border member list of the local domain. For descriptions of the identification information of the cross-domain computing-aware network, the intra-domain member list of the local domain, and the border member list of the local domain, refer to related descriptions in Embodiment 1, and details are not described herein again.

It should be noted that, if the border member list of the local domain further includes identification information of one or more other border CA-UPFs, for a confederation domain corresponding to each border CA-UPF, the first CMF may send, to the first SMF, a request message requesting to establish an inter-domain session between the first domain and the confederation domain, and repeatedly perform the steps of the method shown in FIG. 14A and FIG. 14B, so as to create a cross-domain computing-aware network with each confederation domain.

Further, for an inter-domain creation part, the first CMF may generate an inter-domain forwarding neighbor list of the first border CA-UPF, where the inter-domain forwarding neighbor list includes the identification information of the second border CA-UPF. It may be understood that, in a process in which the first CMF generates the corresponding inter-domain forwarding neighbor list for the first border CA-UPF, the first CMF may determine that an inter-domain forwarding neighbor relationship exists between the first border CA-UPF and the second border CA-UPF that is in the second domain and that corresponds to the first border CA-UPF.

The first CMF may further determine identification information of the second CMF, the second SMF, and the second border CA-UPF in the confederation domain (namely, the second domain) connected to the first border CA-UPF, so as to send the thirteenth request message to the first SMF, to request the first SMF to initiate an inter-domain session creation procedure of the cross-domain computing-aware network.

Optionally, the first CMF may further determine an inter-domain announcement neighbor list of the second border CA-UPF, where the inter-domain announcement neighbor list includes the identification information of the first border CA-UPF.

In this way, the thirteenth request message may include the identification information of the cross-domain computing-aware network, the identification information of the first border CA-UPF, the inter-domain forwarding neighbor list of the first border CA-UPF, the identification information of the second border CA-UPF, the inter-domain announcement neighbor list of the second border CA-UPF, and the identification information of the second SMF.

It may be understood that, if the first domain is used as a local domain and has direct connection relationships with a plurality of confederation domains (that is, there are a plurality of border CA-UPFs in the first domain), the first CMF may determine identification information of a CMF, an SMF, and a border CA-UPF that are in a peer confederation domain and that are connected to each border CA-UPF in the first domain. Correspondingly, the thirteenth request message may include the identification information and inter-domain forwarding neighbor lists of the plurality of border CA-UPFs in the first domain, and identification information and an inter-domain announcement neighbor list of a border CA-UPF in a confederation domain corresponding to each border CA-UPF.

Step S1402: The first SMF sends a fourteenth request message to the second SMF, where the fourteenth request message requests to establish the first session.

Correspondingly, the second SMF receives the fourteenth request message from the first SMF.

In Embodiment 2 of this application, after receiving the thirteenth request message from the first CMF, the first SMF may determine, based on the identification information of the cross-domain computing-aware network, the identification information of the first border CA-UPF, and the identification information of the second border CA-UPF in the thirteenth request message, that the first session between the first border CA-UPF of the cross-domain computing-aware network in the first domain and the second border CA-UPF in the second domain needs to be established, then determine the second SMF based on the identification information of the second SMF in the thirteenth request message, and send a fourteenth request message to the second SMF.

The fourteenth request message includes one or more of the following information: the identification information of the cross-domain computing-aware network, the identification information of the first border CA-UPF, the identification information of the second border CA-UPF, or second inter-domain tunnel information.

The second inter-domain tunnel information is used for establishing a second inter-domain forwarding tunnel between the first border CA-UPF and the second border CA-UPF. In consideration of a case in which forwarding tunnels in two directions exist between the first border CA-UPF and the second border CA-UPF, the second inter-domain tunnel information herein is specifically used for establishing a tunnel through which the second border CA-UPF sends a packet to the first border CA-UPF, or a forwarding tunnel from the second border CA-UPF to the first border CA-UPF. For clear description, the tunnel is denoted as the second inter-domain forwarding tunnel below.

It may be understood that, because the first border CA-UPF and the second border CA-UPF are in the inter-domain forwarding neighbor relationship and an announcement neighbor relationship, the inter-domain forwarding neighbor list of the first border CA-UPF includes the identification information of the second border CA-UPF, and the inter-domain announcement neighbor list of the second border CA-UPF includes the identification information of the first border CA-UPF. Therefore, it may also be considered that the fourteenth request message includes the identification information of the first border CA-UPF, the inter-domain forwarding neighbor list of the first border CA-UPF, and/or the identification information and the inter-domain announcement neighbor list of the second border CA-UPF.

The fourteenth request message may also be understood as a request for establishing the cross-domain virtual network-level session. Therefore, the fourteenth request message may be referred to as a cross-domain virtual network-level session establishment request message, or has another name. This is not limited.

Step S1403: The second SMF sends a fifteenth request message to the second border CA-UPF, where the fifteenth request message requests to establish the first session.

Correspondingly, the second border CA-UPF receives the fifteenth request message from the second SMF.

In Embodiment 2 of this application, after receiving the fourteenth request message from the second SMF, the second SMF may determine, based on the identification information of the cross-domain computing-aware network, the identification information of the first border CA-UPF, and the identification information of the second border CA-UPF in the fourteenth request message, that the first session between the first border CA-UPF of the cross-domain computing-aware network in the first domain and the second border CA-UPF in the second domain needs to be established, then determine the second border CA-UPF based on the identification information of the second border CA-UPF, and send the fifteenth request message to the second border CA-UPF.

The fifteenth request message may also be understood as being used for requesting to establish an inter-domain virtual network-level session on the second border CA-UPF side. Therefore, the fifteenth request message may be referred to as an inter-domain virtual network-level session establishment request message, or has another name. This is not limited.

Step S1404: The second border CA-UPF establishes the second inter-domain forwarding tunnel with the first border CA-UPF.

In Embodiment 2 of this application, both the fourteenth request message and the fifteenth request message include the second inter-domain tunnel information. In this way, after receiving the fifteenth request message from the second SMF, the second border CA-UPF may establish the second inter-domain forwarding tunnel based on the second inter-domain tunnel information.

Further, both the fourteenth request message and the fifteenth request message include the identification information of the first border CA-UPF, namely, the inter-domain announcement neighbor list of the second border CA-UPF. In this way, after receiving the fifteenth request message from the second SMF, the second border CA-UPF may establish the inter-domain announcement neighbor relationship with the first border CA-UPF based on the inter-domain announcement neighbor list corresponding to the second border CA-UPF, where the inter-domain announcement neighbor relationship is used by the second border CA-UPF to announce domain-level service capability information of the second domain to the first border CA-UPF. To be specific, the second border CA-UPF may determine, based on the identification information that is of the first border CA-UPF and that is included in the inter-domain announcement neighbor list, that the first border CA-UPF is an inter-domain announcement neighbor corresponding to the second border CA-UPF.

Optionally, the fifteenth request message further includes the identification information of the cross-domain computing-aware network.

Step S1405: The second border CA-UPF sends a fifteenth response message to the second SMF, where the fifteenth response message indicates that the first session is established on the second border CA-UPF side.

Correspondingly, the second SMF receives the fifteenth response message from the second border CA-UPF.

Optionally, the fifteenth response message includes the identification information of the cross-domain computing-aware network.

The fifteenth response message may also be understood as being used for indicating that the inter-domain virtual network-level session is established on the second border CA-UPF side. Therefore, the fifteenth response message may be referred to as an inter-domain virtual network-level session establishment response message, or has another name. This is not limited.

It may be understood that, that the first session is established on the second border CA-UPF side indicates that the first session is established on the second domain side. Therefore, the fifteenth response message may further indicate that the first session is established on the second domain side.

Step S1406: The second SMF sends a fourteenth response message to the first SMF, where the fourteenth response message indicates that the first session is established on the second domain side.

Correspondingly, the first SMF receives the fourteenth response message from the second SMF.

The fourteenth response message includes one or more of the following information: the identification information of the cross-domain computing-aware network or first inter-domain tunnel information. The first inter-domain tunnel information is used for establishing a tunnel between the first border CA-UPF and the second border CA-UPF. In consideration of a case in which forwarding tunnels in two directions exist between the first border CA-UPF and the second border CA-UPF, the first inter-domain tunnel information herein is specifically used for establishing a tunnel through which the first border CA-UPF sends a packet to the second border CA-UPF, or a forwarding tunnel from the first border CA-UPF to the second border CA-UPF. For clear description, the tunnel is denoted as a first inter-domain forwarding tunnel below.

The fourteenth response message may also be understood as being used for indicating that the cross-domain virtual network-level session is established on the second domain side. Therefore, the fourteenth response message may be referred to as a cross-domain virtual network-level session establishment response message, or has another name. This is also not limited.

Step S1407: The first SMF sends a sixteenth request message to the first border CA-UPF, where the sixteenth request message requests to establish the first session.

Correspondingly, the first border CA-UPF receives the sixteenth request message from the first SMF.

The sixteenth request message may also be understood as being used for requesting to establish an inter-domain virtual network-level session on the first border CA-UPF side. Therefore, the sixteenth request message may be referred to as an inter-domain virtual network-level session establishment request message, or has another name. This is not limited.

Step S1408: The first border CA-UPF establishes the first inter-domain forwarding tunnel with the second border CA-UPF.

In Embodiment 2 of this application, both the fourteenth response message and the sixteenth request message include the first inter-domain tunnel information. In this way, after receiving the sixteenth request message from the first SMF, the first border CA-UPF may establish the first inter-domain tunnel forwarding tunnel based on the first inter-domain tunnel information.

Further, the sixteenth request message includes the identification information of the second border CA-UPF, namely, the inter-domain forwarding neighbor list of the first border CA-UPF. In this way, after receiving the sixteenth request message from the first SMF, the first border CA-UPF may establish an inter-domain forwarding neighbor relationship with the second border CA-UPF based on the inter-domain forwarding neighbor list corresponding to the first border CA-UPF, where the inter-domain forwarding neighbor relationship is used by the first border CA-UPF to send an inter-domain service request packet to the second border CA-UPF. To be specific, the first border CA-UPF may determine, based on the identification information that is of the second border CA-UPF and that is included in the inter-domain forwarding neighbor list, that the second border CA-UPF is an inter-domain forwarding neighbor corresponding to the first border CA-UPF.

Optionally, the sixteenth request message further includes the identification information of the cross-domain computing-aware network.

Step S1409: The first border CA-UPF sends a sixteenth response message to the first SMF, where the sixteenth response message indicates that the first session is established on the first border CA-UPF side.

Correspondingly, the first SMF receives the sixteenth response message from the first border CA-UPF.

Optionally, the sixteenth response message includes the identification information of the cross-domain computing-aware network.

The sixteenth response message may also be understood as being used for indicating that the inter-domain virtual network-level session is established on the first border CA-UPF side. Therefore, the sixteenth response message may be referred to as an inter-domain virtual network-level session establishment response message, or has another name. This is not limited.

It may be understood that, that the first session is established on the first border CA-UPF side indicates that the first session is established on the first domain side. Therefore, the sixteenth response message may further indicate that the first session is established on the first domain side.

It can be learned that, in Embodiment 2 of this application, after the first SMF receives the thirteenth request message from the first CMF, the first SMF may complete an inter-domain session creation procedure by interacting with the second SMF (as shown in step S1403 to step S1407), to establish the inter-domain forwarding tunnel, the inter-domain forwarding neighbor relationship, and the inter-domain announcement neighbor relationship between the first border CA-UPF and the second border CA-UPF.

It should be noted that, depending on whether the inter-domain tunnel information is generated by the SMF or the border CA-UPF, and considering that corresponding inter-domain tunnel information is required for establishing both the first inter-domain forwarding tunnel and the second inter-domain forwarding tunnel, the inter-domain session creation procedure in Embodiment 2 may also have two possible implementations, which are respectively referred to as an implementation 3 and an implementation 4 below.

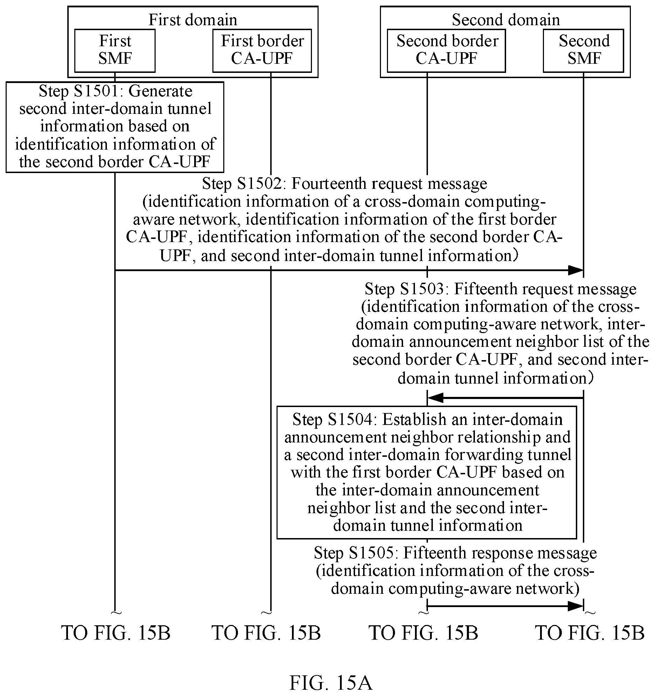

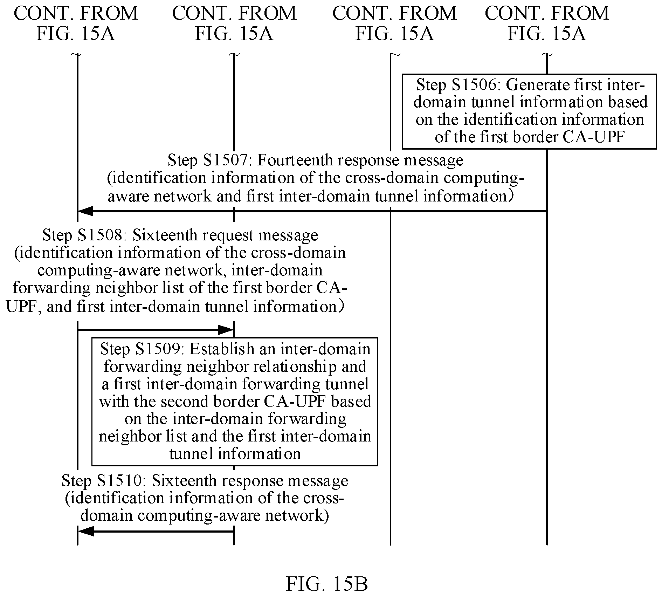

As shown in FIG. 15A and FIG. 15B, the inter-domain session creation procedure corresponding to the implementation 3 may include the following steps.

Step S1501: The first SMF generates the second inter-domain tunnel information based on the identification information of the second border CA-UPF, where the second inter-domain tunnel information is used for establishing the second inter-domain forwarding tunnel. For example, the second inter-domain tunnel information includes identification information of the second inter-domain forwarding tunnel and a device IP address of the first border CA-UPF.

Step S1502: The first SMF sends a fourteenth request message to the second SMF, where the fourteenth request message requests to establish the first session, to be specific, requests to establish a cross-domain virtual network-level session.

Correspondingly, the second SMF receives the fourteenth request message from the first SMF.

The fourteenth request message includes the identification information of the cross-domain computing-aware network, the identification information of the first border CA-UPF, the identification information of the second border CA-UPF, and the second inter-domain tunnel information.

Step S1503: The second SMF sends a fifteenth request message to the second border CA-UPF, where the fifteenth request message requests to establish the first session, to be specific, requests to establish the inter-domain virtual network-level session on the second border CA-UPF side.

Correspondingly, the second border CA-UPF receives the fifteenth request message from the second SMF.

The fifteenth request message includes the identification information of the cross-domain computing-aware network, the inter-domain announcement neighbor list of the second border CA-UPF, and the second inter-domain tunnel information. The inter-domain announcement neighbor list includes the identification information of the first border CA-UPF. Optionally, the fifteenth request message further includes the identification information of the second border CA-UPF.

Step S1504: The second border CA-UPF establishes the inter-domain announcement neighbor relationship and the second inter-domain forwarding tunnel between the second border CA-UPF and the first border CA-UPF based on the inter-domain announcement neighbor list and the second inter-domain tunnel information.

Step S1505: The second border CA-UPF sends a fifteenth response message to the second SMF, where the fifteenth response message indicates that the first session is established on the second border CA-UPF side, to be specific, indicates that the inter-domain virtual network-level session is established on the second border CA-UPF side.

Correspondingly, the second SMF receives the fifteenth response message from the second border CA-UPF.

The fifteenth response message includes the identification information of the cross-domain computing-aware network.

Step S1506: The second SMF generates the first inter-domain tunnel information based on the identification information of the first border CA-UPF, where the first inter-domain tunnel information is used for establishing the first inter-domain forwarding tunnel. For example, the first inter-domain tunnel information includes identification information of the first inter-domain forwarding tunnel and a device IP address of the second border CA-UPF.

Step S1507: The second SMF sends a fourteenth response message to the first SMF, where the fourteenth response message indicates that the first session is established on the first domain side.

Correspondingly, the first SMF receives the fourteenth response message from the second SMF.

The fourteenth response message includes the identification information of the cross-domain computing-aware network and the first inter-domain tunnel information.

Step S1508: The first SMF sends a sixteenth request message to the first border CA-UPF, where the sixteenth request message requests to establish the first session, to be specific, requests to establish the inter-domain virtual network-level session on the first border CA-UPF side.

Correspondingly, the first border CA-UPF receives the sixteenth request message from the first SMF.

The sixteenth request message includes the identification information of the cross-domain computing-aware network, the inter-domain forwarding member list of the first border CA-UPF, and the first inter-domain tunnel information.

Step S1509: The first border CA-UPF establishes the inter-domain forwarding neighbor relationship and the first inter-domain forwarding tunnel between the first border CA-UPF and the second border CA-UPF based on the inter-domain forwarding neighbor list and the first inter-domain tunnel information.

Step S1510: The first border CA-UPF sends a sixteenth response message to the first SMF, where the sixteenth response message indicates that the first session is established, to be specific, indicates that the inter-domain virtual network-level session is established on the first border CA-UPF side.

Correspondingly, the first SMF receives the sixteenth response message from the first border CA-UPF.

The sixteenth response message includes the identification information of the cross-domain computing-aware network.

In the foregoing implementation 3, the first inter-domain tunnel information is generated by the second SMF, and is used by the first SMF to establish the virtual network-level session of the first border CA-UPF; and the second inter-domain tunnel information is generated by the first SMF, and is used by the second SMF to establish the virtual network-level session of the second border CA-UPF.

Step S1503 to step S1505 describe a process in which the second SMF interacts with the second border CA-UPF to establish the first session on the second border CA-UPF side (namely, the inter-domain virtual network-level session on the second border CA-UPF side). Step S1508 to step S1510 describe a process in which the first SMF interacts with the first border CA-UPF to establish the first session on the first border CA-UPF side (namely, the inter-domain virtual network-level session on the first border CA-UPF side). It may be understood that execution of step S1503 to step S1505 depends on the second inter-domain tunnel information provided by the first SMF, and execution of step S1508 to step S1510 depends on the first inter-domain tunnel information provided by the second SMF. Therefore, step S1503 to step S1505 are performed after step S1502, and step S1508 to step S1510 are performed after step S1507. However, it should be noted that an execution sequence of step S1503 to step S1505 and step S1506 is not specifically limited in this application.

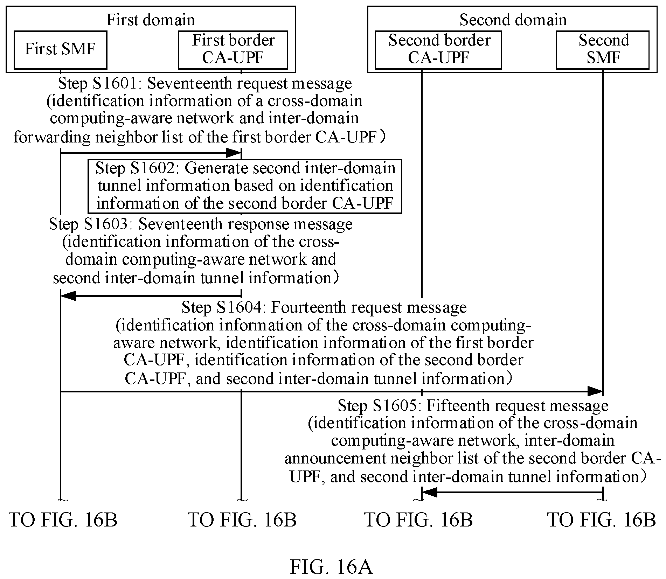

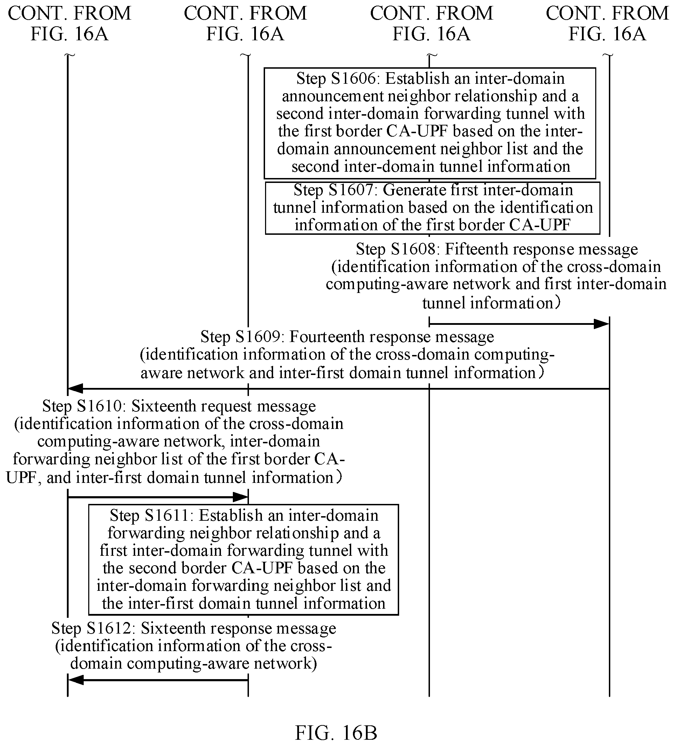

As shown in FIG. 16A and FIG. 16B, the inter-domain session creation procedure corresponding to the implementation 4 may include the following steps.

Step S1601: The first SMF sends a seventeenth request message to the first border CA-UPF, where the seventeenth request message requests to establish the first session, to be specific, requests to establish the inter-domain virtual network-level session on the first border CA-UPF side.

Correspondingly, the first border CA-UPF receives the seventeenth request message from the first SMF.

The seventeenth request message includes the identification information of the cross-domain computing-aware network and the inter-domain forwarding neighbor list of the first border CA-UPF. The inter-domain forwarding neighbor list includes the identification information of the second border CA-UPF. Optionally, the seventeenth request message further includes the identification information of the first border CA-UPF.

Step S1602: The first border CA-UPF generates the second inter-domain tunnel information based on the identification information of the second border CA-UPF, where the second inter-domain tunnel information is used for establishing the second inter-domain forwarding tunnel. For example, the second inter-domain tunnel information includes identification information of the second inter-domain forwarding tunnel and a device IP address of the first border CA-UPF.

Step S1603: The first border CA-UPF sends a seventeenth response message to the first SMF, where the seventeenth response message indicates that the first session is established on the first border CA-UPF side, to be specific, indicates that the inter-domain virtual network-level session is established on the first border CA-UPF side.

Correspondingly, the first SMF receives the seventeenth response message from the first border CA-UPF.

The seventeenth response message includes the identification information of the cross-domain computing-aware network and the second inter-domain tunnel information.

Step S1604: The first SMF sends a fourteenth request message to the second SMF, where the fourteenth request message requests to establish the first session, to be specific, requests to establish a cross-domain virtual network-level session.

Correspondingly, the second SMF receives the fourteenth request message from the first SMF.

The fourteenth request message includes the identification information of the cross-domain computing-aware network, the identification information of the first border CA-UPF, the identification information of the second border CA-UPF, and the second inter-domain tunnel information.

Step S1605: The second SMF sends a fifteenth request message to the second border CA-UPF, where the fifteenth request message requests to establish the first session, to be specific, requests to establish the inter-domain virtual network-level session on the second border CA-UPF side.

Correspondingly, the second border CA-UPF receives the fifteenth request message from the second SMF.

The fifteenth request message includes the identification information of the cross-domain computing-aware network, the inter-domain announcement neighbor list of the second border CA-UPF, and the second inter-domain tunnel information. The inter-domain announcement neighbor list includes the identification information of the first border CA-UPF. Optionally, the fifteenth request message further includes the identification information of the second border CA-UPF.

Step S1606: The second border CA-UPF establishes the inter-domain announcement neighbor relationship and the second inter-domain forwarding tunnel between the second border CA-UPF and the first border CA-UPF based on the inter-domain announcement neighbor list and the second inter-domain tunnel information.

Step S1607: The second border CA-UPF generates the first inter-domain tunnel information based on the identification information of the first border CA-UPF, where the first inter-domain tunnel information is used for establishing the first inter-domain forwarding tunnel. For example, the first inter-domain tunnel information includes identification information of the first inter-domain forwarding tunnel and a device IP address of the second border CA-UPF.

Step S1608: The second border CA-UPF sends a fifteenth response message to the second SMF, where the fifteenth response message indicates that the first session is established on the second border CA-UPF side, to be specific, indicates that the inter-domain virtual network-level session of the second border CA-UPF is established.

Correspondingly, the second SMF receives the fifteenth response message from the second border CA-UPF.

The fifteenth response message includes the identification information of the cross-domain computing-aware network and the first inter-domain tunnel information.

Step S1609: The second SMF sends a fourteenth response message to the first SMF, where the fourteenth response message indicates that the first session is established on the first domain side.

Correspondingly, the first SMF receives the fourteenth response message from the second SMF.

The fourteenth response message includes the identification information of the cross-domain computing-aware network and the first inter-domain tunnel information.

Step S1610: The first SMF sends a sixteenth request message to the first border CA-UPF, where the sixteenth request message requests to update the first session, to be specific, requests to update the inter-domain virtual network-level session on the first border CA-UPF side.

Correspondingly, the first border CA-UPF receives the sixteenth request message from the first SMF.

The sixteenth request message includes the identification information of the cross-domain computing-aware network, the inter-domain forwarding neighbor list of the first border CA-UPF, and the first inter-domain tunnel information. The inter-domain forwarding neighbor list includes the identification information of the second border computing-aware user plane function. Optionally, the sixteenth request message further includes the identification information of the first border CA-UPF.

Step S1611: The first border CA-UPF establishes the inter-domain forwarding neighbor relationship and the first inter-domain forwarding tunnel between the first border CA-UPF and the second border CA-UPF based on the inter-domain forwarding neighbor list and the first inter-domain tunnel information.

Step S 1612: The first border CA-UPF sends a sixteenth response message to the first SMF, where the sixteenth response message indicates that the first session is updated on the first border CA-UPF side, to be specific, indicates that the inter-domain virtual network-level session is updated on the first border CA-UPF side.

Correspondingly, the first SMF receives the sixteenth response message from the first border CA-UPF.

The sixteenth response message includes the identification information of the cross-domain computing-aware network.

In the foregoing implementation 4, the second inter-domain tunnel information is generated by the first border CA-UPF, and is used by the second SMF to establish the virtual network-level session of the second border CA-UPF; and the first inter-domain tunnel information is generated by the second border CA-UPF, and is used by the first SMF to establish the virtual network-level session of the first border CA-UPF.

To obtain the second inter-domain tunnel information, the first SMF may send the seventeenth request message to the second border CA-UPF. After receiving the seventeenth request message, the first border CA-UPF generates the second inter-domain tunnel information, and returns the second inter-domain tunnel information to the first SMF by using the seventeenth response message. In this process, because the seventeenth request message does not include the first inter-domain tunnel information, the first border CA-UPF cannot establish the first inter-domain forwarding tunnel. Therefore, the first session on the first border CA-UPF side (namely, the virtual network-level session on the second border CA-UPF side) is not successfully established. Subsequently, after the first SMF receives the fourteenth response message from the second SMF, the first SMF may include the first inter-domain tunnel information, and update the first session by interacting with the first border CA-UPF again.

It may be understood that step S1605 to step S 1608 are performed after step S1604, and step S 1610 to step S 1612 are performed after step S1609. However, it should be noted that an execution sequence of step S 1606 and step S 1607 is not specifically limited in this application.

Step S1410: The first SMF sends a thirteenth response message to the first CMF, where the thirteenth response message indicates that the first session is established.

Correspondingly, the first CMF receives the thirteenth response message from the first SMF.

The thirteenth response message includes the identification information of the cross-domain computing-aware network.

The thirteenth response message may be understood as being used for indicating that the inter-domain session or the inter-domain forwarding path of the cross-domain computing-aware network is established. Therefore, the thirteenth response message may be referred to as an inter-domain session establishment response message of the cross-domain computing-aware network, or has another name. This is not limited in this application.

It may be understood that the thirteenth response message indicates that the inter-domain session between the first border CA-UPF in the first domain and the second border CA-UPF in the second domain is established. In this way, after receiving the sixth response message from the first SMF, the first CMF may continue to create or update an intra-domain part of the cross-domain computing-aware network in the first domain, or request the second CMF to create or update an intra-domain part of the cross-domain computing-aware network in the second domain.

Step S1411: The first CMF sends an eighteenth request message to the second CMF, where the eighteenth request message requests to create the cross-domain computing-aware network.

Correspondingly, the second CMF receives the eighteenth request message from the first CMF.

The eighteenth request message includes the identification information of the cross-domain computing-aware network and the identification information of the second border CA-UPF.

The eighteenth request message may be referred to as a cross-domain computing-aware network creation request message, or has another name. This is not limited in this application.

The eighteenth request message may also be understood as being used for requesting to create or update a third session in the second domain of the cross-domain computing-aware network, to be specific, requesting to create or update an intra-domain session or an intra-domain forwarding path of the cross-domain computing-aware network in the second domain.

Step S1412: The second CMF creates or updates the intra-domain part of the cross-domain computing-aware network in the second domain.

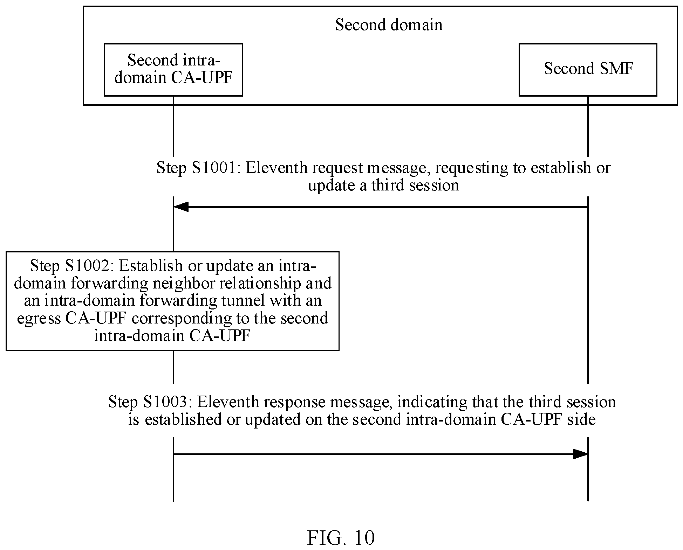

For a specific implementation of step S1410, refer to related descriptions of step S512 and FIG. 8 to FIG. 10 in Embodiment 1. Details are not described herein again.

Step S1413: The second CMF sends an eighteenth response message to the first CMF, where the eighteenth response message indicates that the cross-domain computing-aware network is created on the second domain side.

Correspondingly, the first CMF receives the eighteenth response message from the second CMF.

The eighteenth response message includes the identification information of the cross-domain computing-aware network.

The eighteenth response message may be referred to as a cross-domain computing-aware network creation response message, or has another name. This is not limited in this application.

The eighteenth response message may also be understood as being used for indicating that the third session in the second domain of the cross-domain computing-aware network is created or updated, to be specific, indicating that the intra-domain session or the intra-domain forwarding path of the cross-domain computing-aware network in the second domain is created or updated.

Step S1414: The first CMF creates or updates the intra-domain part of the cross-domain computing-aware network in the first domain.

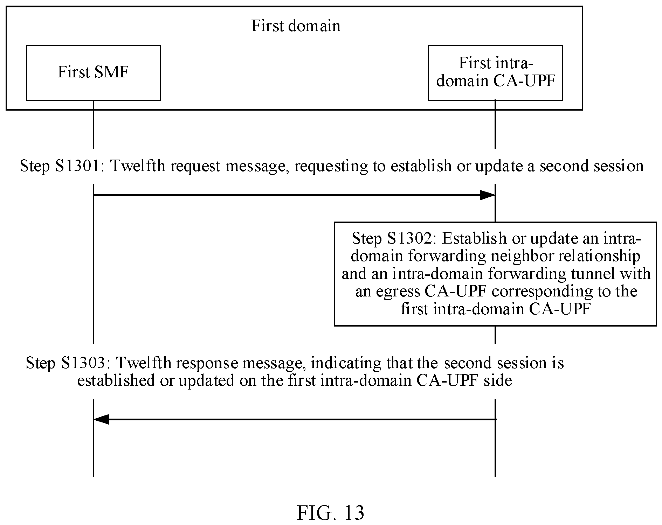

For a specific implementation of step S1414, refer to related descriptions of step S514 and FIG. 11 to FIG. 13 in Embodiment 1. Details are not described herein again.

It should be noted that an execution sequence of step S1411 to step S1413 and step S1414 is not specifically limited in Embodiment 2 of this application. To be specific, the first CMF may first request the second CMF to create or update the intra-domain part of the cross-domain computing-aware network in the second domain, or may first create or update the intra-domain part of the cross-domain computing-aware network in the first domain.

Optionally, after creating or updating the intra-domain part of the cross-domain computing-aware network in the first domain, the first CMF may further send, to the first OAM or the first UDM in the first domain, a response message indicating that the cross-domain computing-aware network is successfully created.

It should be noted that, if the first domain is used as a local domain and has direct connection relationships with a plurality of confederation domains (that is, there are a plurality of border CA-UPFs in the first domain), the first SMF needs to interact with an SMF in each confederation domain, to separately complete an inter-domain session creation procedure. Correspondingly, after the inter-domain session creation process ends, the first CMF further needs to send a cross-domain computing-aware network creation/update request to a CMF in each confederation domain, so as to create or update an intra-domain part of the cross-domain computing-aware network in each confederation domain.

### Embodiment 3

Embodiment 3 of this application provides a session management method for a cross-domain computing-aware network. The method is specifically a method for announcing cross-domain information and constructing cross-operator network computing-aware routing information in the cross-domain computing-aware network.

It should be noted that in Embodiment 3 of this application, an example in which a first intra-domain CA-UPF is an ingress CA-UPF in a first domain, and a second intra-domain CA-UPF is an egress CA-UPF in a second domain is used for description.

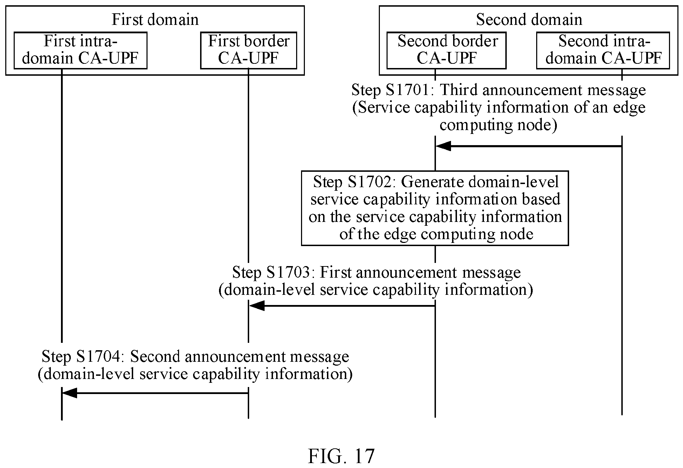

FIG. 17 is a schematic flowchart of the session management method for a cross-domain computing-aware network according to Embodiment 3 of this application. The method includes the following steps.

Step S1701: The second intra-domain CA-UPF sends a third announcement message to a second border CA-UPF, where the third announcement message includes service capability information of an edge computing node associated with the second intra-domain CA-UPF, and the service capability information indicates a capability of the edge computing node to provide a first computing service to the outside.

Correspondingly, the second border CA-UPF receives the third announcement message from the second intra-domain CA-UPF.

Optionally, the third announcement message further includes identification information of the second intra-domain CA-UPF.

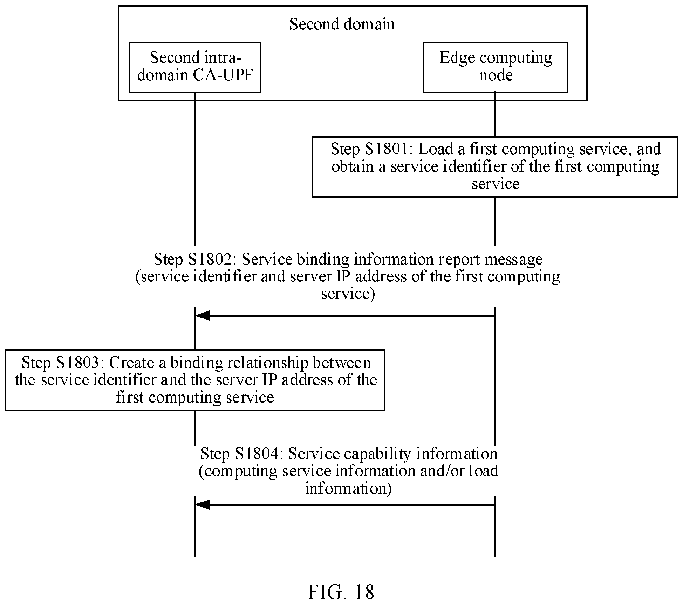

In Embodiment 3 of this application, before the second intra-domain CA-UPF sends the third announcement message to the second border CA-UPF, the second intra-domain CA-UPF may interact with the edge computing node associated with the second intra-domain CA-UPF, to perform a procedure shown in FIG. 18.

Step S1801: The edge computing node in the second domain loads the first computing service, and obtains a service identifier of the first computing service.

Step S1802: The edge computing node sends a service binding information report message to the associated second intra-domain CA-UPF, where the service binding information report message includes the service identifier (service ID) of the first computing service and a server IP address (server IP) of the first computing service.

Step S1803: The second intra-domain CA-UPF creates a binding relationship between the service identifier and the server IP address of the first computing service, to subsequently perform conversion between the service identifier and the server IP address.

Step S1804: The edge computing node reports the service capability information to the associated second intra-domain CA-UPF, where the service capability information indicates the capability of the edge computing node to provide the first computing service to the outside.

The service capability information includes computing service information of the first computing service corresponding to the edge computing node and/or load information of the edge computing node. The computing service information includes the service identifier, a service attribute, a running status, and computing resource information of the first computing service deployed on the edge computing node, to indicate a computing service supported by the edge computing node. The load information indicates an overall load status of the edge computing node, and the load information of the edge computing node may also be referred to as site load information. The service attribute indicates whether a computing service is stateless or stateful. The running status is a current status indication of the computing service corresponding to the service identifier in the server, and includes a status such as loaded, unloaded, running, suspended, available, and unavailable. The computing resource information is a computing resource type used by the computing service corresponding to the service identifier in an EAS and related information used for a computing resource. The computing resource type may be a central processing unit (central processing unit, CPU), a graphics processing unit (graphics processing unit, GPU), a neural network processing unit (neural network processing unit, NPU), or the like. The related information may be, for example, specific indicator information such as CPU/GPU occupation load, memory occupation information, a quantity of used service sessions, a quantity of requests per second, and a computing latency, or may be a comprehensive indicator calculated by using the specific indicators.

For example, an MEC platform on the edge computing node may load a microservice or function instance on the EAS, and obtain a service ID of the microservice or function instance. Further, the MEC platform sends a service binding information report message to the associated second intra-domain CA-UPF. The service binding information report message includes the service ID of the microservice or function instance, and an IP address of the EAS that runs the microservice or function instance, namely, a server IP address. After receiving the service binding information report message, the second intra-domain CA-UPF may create a binding relationship between the service ID and the server IP address by using an internal computing-aware processing unit. Then, the MEC platform reports service capability information to the associated second intra-domain CA-UPF. The service capability information includes computing service information such as the service ID, a service attribute, a running status, and computing resource information of the microservice or function instance corresponding to the service ID, and site load information.

In this way, after the second intra-domain CA-UPF receives the service capability information from the edge computing node, the second intra-domain CA-UPF may send the third announcement message to the second border CA-UPF based on an intra-domain announcement neighbor list corresponding to the second intra-domain CA-UPF. The third announcement message includes the service capability information, and optionally further includes the identification information of the second intra-domain CA-UPF. The identification information of the second intra-domain CA-UPF indicates that the service capability information is from the edge computing node associated with the second intra-domain CA-UPF.

It may be understood that in the cross-domain computing-aware network, the second border CA-UPF may be used as an ingress CA-UPF in the second domain, and the second intra-domain CA-UPF may be used as an egress CA-UPF in the second domain. There is an intra-domain announcement forwarding relationship between the two CA-UPFs. Therefore, the intra-domain announcement neighbor list of the second intra-domain CA-UPF includes the identification information of the second border CA-UPF. Correspondingly, an intra-domain forwarding neighbor list of the second border CA-UPF includes the identification information of the second intra-domain CA-UPF.

Step S1702: The second border CA-UPF generates domain-level service capability information based on the service capability information, where the domain-level service capability information indicates a capability of the second domain to provide the first computing service to the outside.

Step S1703: The second border CA-UPF sends a first announcement message to the first border CA-UPF, where the first announcement message includes the domain-level service capability information.

Correspondingly, the first border CA-UPF receives the inter-domain announcement message from the second border CA-UPF.

Optionally, the first announcement message further includes the identification information of the second border CA-UPF.

In Embodiment 3 of this application, after the second border CA-UPF receives the third announcement message from the second intra-domain CA-UPF, the second border CA-UPF may generate the corresponding domain-level service capability information for the first computing service based on the service capability information that is related to the first computing service and that is provided by the second intra-domain CA-UPF, and then send the domain-level service capability information and the identification information of the second border CA-UPF to the first border CA-UPF in the first domain at the peer end by using the first announcement message. The domain-level service capability information includes computing service information of the first computing service corresponding to the second domain and/or load information of the second domain, and indicates the capability of the second domain to provide the first computing service to the outside. The identification information of the second border CA-UPF indicates that the domain-level service capability information comes from the second border CA-UPF in the second domain (or from a regional computing power group using the second border CA-UPF as an ingress CA-UPF in the second domain).

In addition, the second border CA-UPF may further generate or update the computing-aware routing information of the first computing service based on the service capability information that is related to the first computing service and that is provided by the second intra-domain CA-UPF, and record the computing-aware routing information in a database of the second border CA-UPF, to subsequently route a request for accessing the first computing service. It should be noted that, in the computing-aware routing information that is of the first computing service and that is recorded by the second border CA-UPF, from the perspective of the second border CA-UPF, the second intra-domain CA-UPF exists as an egress CA-UPF, in the second domain, that can provide the first computing service.

More generally, after the second border CA-UPF receives the third announcement message from the second intra-domain CA-UPF, the second border CA-UPF may generate or update, based on the service capability information in the third announcement message and the identification information of the second intra-domain CA-UPF, an intra-domain computing-aware routing information base between the second border CA-UPF and an egress CA-UPF corresponding to the second border CA-UPF in the second domain. The intra-domain computing-aware routing information base includes computing-aware routing information of one or more computing services. The computing-aware routing information of each computing service includes a service identifier of the computing service, identification information of one or more egress CA-UPFs in the second domain that can provide the computing service, computing service information such as a service attribute, a running status, and computing resource information of the computing service corresponding to each egress CA-UPF, load information and network cost information of an edge computing node corresponding to each egress CA-UPF, and the like. The network cost information may include specific indicators such as a latency, bandwidth, and jitter between the second border CA-UPF and the egress CA-UPF; or may include a comprehensive indicator determined based on specific indicators such as a latency, bandwidth, and jitter.

Based on the intra-domain computing-aware routing information base, the second border CA-UPF may generate, modify, or delete intra-domain packet forwarding rules of some service flows. In addition, the second border CA-UPF may further construct domain-level service capability information for each computing service based on the generated intra-domain computing-aware routing information base, and then send the domain-level service capability information corresponding to each computing service and the identification information of the second border CA-UPF to the first border CA-UPF in the first domain at the peer end by using an inter-domain announcement message (for example, the first announcement message).

It should be noted that, the domain-level service capability information is a capability of abstracting, as a computing station, one or more edge computing nodes associated with an egress CA-UPF that has a forwarding neighbor relationship with the second border CA-UPF in the second domain, and indicating the computing station to provide a computing service to the outside. The domain-level service capability information may also be understood as a capability of providing a computing service to the outside by the second domain as a whole when the second border CA-UPF is used as an inter-domain ingress CA-UPF.

Specifically, the domain-level service capability information includes domain-level computing service information and/or domain-level load information. Domain-level computing service information constructed for the first computing service is used as an example. The domain-level computing service information includes a service identifier, a service attribute, a running status, and computing resource information of the first computing service deployed in the second domain, to indicate a computing service supported by the second domain as a whole. The domain-level load information is overall load information of the second domain, and indicates an overall load status of the second domain. It should be noted that the running status and the computing resource information in the domain-level computing service information may be obtained through evaluation based on an overall usage status of a same computing service deployed on a plurality of related edge computing nodes in the second domain, and an evaluation method is not unique. This is not specifically limited in this application.

Step S1704: The first border CA-UPF sends a second announcement message to the first intra-domain CA-UPF, where the second announcement message includes the domain-level service capability information.

Correspondingly, the first CA-UPF receives the second announcement message from the first border CA-UPF.

Optionally, the second announcement message further includes identification information of the first border CA-UPF.

In Embodiment 3 of this application, after the first border CA-UPF receives the first announcement message from the second border CA-UPF, the first border CA-UPF may announce the domain-level service capability information in the first announcement message to each ingress CA-UPF (for example, the first intra-domain CA-UPF) corresponding to the first border CA-UPF in the first domain, and include the identification information of the first border CA-UPF.

In addition, the first border CA-UPF may generate or update computing-aware routing information of the first computing service based on the domain-level service capability information that is related to the first computing service and that is provided by the second border CA-UPF, and record the computing-aware routing information in a database of the first border CA-UPF, to subsequently route a request, initiated in the first domain, for accessing the first computing service. It should be noted that, in the computing-aware routing information that is of the first computing service and that is recorded by the first border CA-UPF, from the perspective of the first border CA-UPF, the second border CA-UPF exists as an egress CA-UPF that can provide the first computing service.

More generally, after receiving the first announcement message from the second border CA-UPF, the first border CA-UPF may generate or update, based on the domain-level service capability information in the first announcement message and the identification information of the second border CA-UPF, an inter-domain computing-aware routing information base between the first border CA-UPF and a border CA-UPF in a confederation domain corresponding to the first border CA-UPF. The first border CA-UPF may generate, modify, or delete an inter-domain packet forwarding rule of some service flows based on the inter-domain computing-aware routing information base. The inter-domain computing-aware routing information base includes computing-aware routing information of one or more computing services. The computing-aware routing information of a computing service includes a service identifier of the computing service, identification information of a border CA-UPF in one or more peer confederation domains that can provide the computing service, domain-level service capability information and network cost information of the computing service corresponding to each border CA-UPF, and the like. The domain-level service capability information includes domain-level computing service information and/or domain-level load information.

Further, the first border CA-UPF may send the second announcement message to an ingress CA-UPF in the first domain (for example, the first intra-domain CA-UPF) based on an intra-domain announcement neighbor list corresponding to the first border CA-UPF, where the second announcement message includes the domain-level service capability information and the identification information of the first border CA-UPF. In this way, after receiving the second announcement message, the first intra-domain CA-UPF may generate or update an intra-domain computing-aware routing information base of the first intra-domain CA-UPF based on the domain-level service capability information of the first border CA-UPF, and generate, modify, or delete intra-domain packet forwarding rules of some service flows based on the intra-domain computing-aware routing information base.

It can be learned from the foregoing content that, different from existing construction of a computing power route in a single-domain computing-aware network, in a cross-domain computing-aware network, a border CA-UPF in a confederation domain may aggregate service capability information announced by an adjacent egress CA-UPF into domain-level service capability information, and announce the aggregated domain-level service capability information to a border CA-UPF in a local domain, to effectively avoid leakage of specific resource information in an operator network.

### Embodiment 4

Embodiment 4 of this application provides a session management method for a cross-domain computing-aware network. The method is specifically a method for implementing cross-domain forwarding of a user packet through a border CA-UPF in the cross-domain computing-aware network.

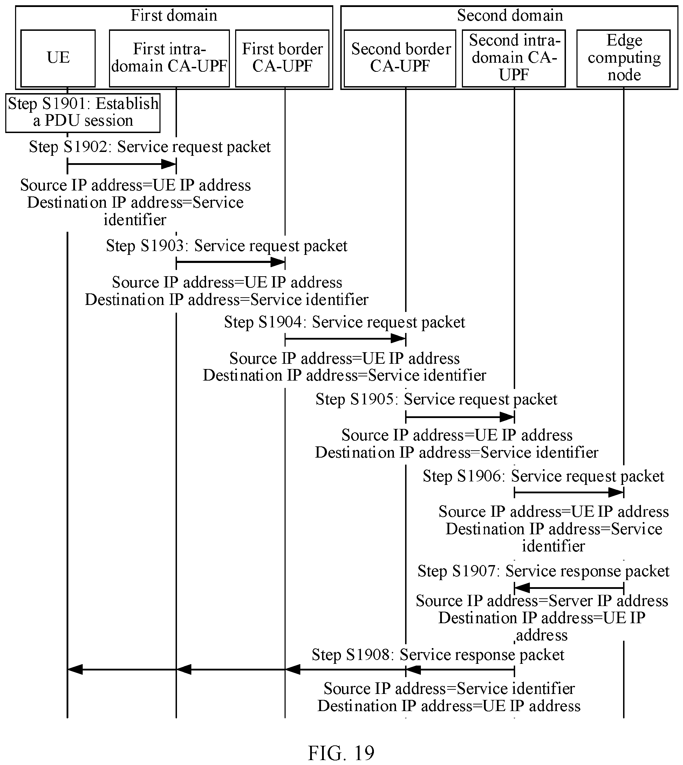

FIG. 19 is a schematic flowchart of the session management method for a cross-domain computing-aware network according to Embodiment 4 of this application. The method includes the following steps.

Step S1901: UE in a first domain establishes, based on a 3GPP standard procedure, a PDU session connected to a DNN. The session is selected to a first intra-domain CA-UPF based on information such as the DNN, a location of the UE, and a user route selection policy (UE route selection policy, URSP) rule that is delivered by a policy control function (policy control function, PCF), and the PDU session is associated with a CA-VN virtual interface in the first intra-domain CA-UPF, where the first intra-domain CA-UPF is an ingress CA-UPF in the first domain.

Step S1902: An application layer of the UE sends a service request packet by using the PDU session, where a source IP address of the service request packet is an IP address of the UE, and a destination IP address of the service request packet is a service identifier (Service ID). The service identifier is also an IP anycast address in a special address segment, and corresponds oneto-one to a specific type of edge application, service, or function.

Step S1903: The first intra-domain CA-UPF receives the service request packet from the UE by using the PDU session; and if determining, based on an intra-domain computing-aware routing information base, that a second domain can provide a better service than the first domain, the first intra-domain CA-UPF selects an appropriate border CA-UPF in the first domain, for example, a first border CA-UPF, determines uplink and downlink packet matching and forwarding rules of a service data flow corresponding to the service request packet, performs tunnel encapsulation on the service request packet, and forwards the service request packet to the first border CA-UPF through an external interface (for example, an N19 interface).

Step S1904: The first border CA-UPF receives the service request packet from the first intra-domain CA-UPF, selects a border CA-UPF in the second domain at the peer end, for example, a second border CA-UPF, based on an inter-domain computing-aware routing information base, determines uplink and downlink packet matching and forwarding rules of a service data flow corresponding to the service request packet, performs tunnel encapsulation on the service request packet, and forwards the service request packet to the selected second border CA-UPF through an external interface (for example, an N19 interface).

Step S1905: The second border CA-UPF receives the service request packet from the first border CA-UPF in the first domain, selects, based on an intra-domain computing-aware routing information base, an egress CA-UPF corresponding to an edge computing node that can provide a service, for example, a second intra-domain CA-UPF, determines uplink and downlink packet matching and forwarding rules of a service data flow corresponding to the service request packet, performs tunnel encapsulation on the service request packet, and forwards the service request packet to the second intra-domain CA-UPF through an external interface (for example, an N19 interface).

Step S1906: The second intra-domain CA-UPF receives the service request packet from the second border CA-UPF, determines uplink and downlink packet matching and forwarding rules of a service data flow corresponding to the service request packet, and sends the packet to an interface (for example, an N6 interface) on which a computing service is located. Optionally, an address translation unit in the second intra-domain CA-UPF first replaces a destination address of the packet with an IP address of a server (Server) in which the computing service is located, and then sends the packet to an edge application server through the N6 interface.

Step S1907: The edge application server completes the computing service, and sends a service response packet back to the second intra-domain CA-UPF. A source IP address of the service response packet is the server IP address, and the destination IP address is the UE IP address.

Step S1908: The second intra-domain CA-UPF receives the service response packet returned by the edge computing node, and if the source IP address of the packet is the server IP address, the internal address translation unit translates the source IP address of the service response packet into the service identifier based on a buffered mapping relationship between the service identifier (Service ID) and the server IP address (Server IP). Then, according to the previously determined packet matching and forwarding rules, the edge computing node finally returns the service response packet to the UE through the second border CA-UPF, the first border CA-UPF, and the first intra-domain CA-UPF along an original path.

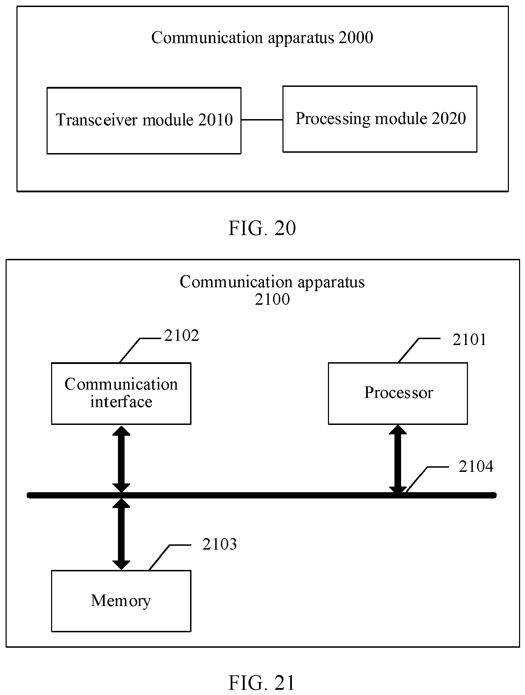

An embodiment of this application further provides a communication apparatus. FIG. 20 is a schematic diagram of a structure of a communication apparatus according to this embodiment of this application. The communication apparatus 2000 includes a transceiver module 2010 and a processing module 2020. The communication apparatus may be configured to implement a function of the first session management function network element, the second session management function network element, the first computing management function network element, the second computing management function network element, the first computing-aware user plane function network element, or the second computing-aware user plane function network element in any one of the foregoing method embodiments. For example, the communication apparatus may be a network device; or may be a chip included in a network device.

For example, when the communication apparatus performs an operation or a step corresponding to the first session management function network element in the method embodiment shown in FIG. 5A and FIG. 5B, the transceiver module 2010 is configured to: receive a first request message from a second session management function network element in a second domain, where the first request message requests to establish a first session between a first domain and the second domain of a cross-domain computing-aware network; send a second request message to a first border computing-aware user plane function network element in the first domain, where the second request message requests to establish the first session, one end of the first session is connected to the first border computing-aware user plane function network element in the first domain, and the other end is connected to a second border computing-aware user plane function network element in the second domain; receive a second response message from the first border computing-aware user plane function network element, where the second response message indicates that the first session is established on the first border computing-aware user plane function network element side; and send a first response message to the second session management function network element, where the first response message indicates that the first session is established on the first domain side.

In a possible design, the first request message includes first inter-domain tunnel information, and the second request message includes the first inter-domain tunnel information, where the first inter-domain tunnel information is used for establishing a tunnel through which the first border computing-aware user plane function network element sends a packet to the second border computing-aware user plane function network element.

In a possible design, the first request message includes identification information of the second border computing-aware user plane function network element, and the second request message includes the identification information of the second border computing-aware user plane function network element.

In a possible design, the first response message includes second inter-domain tunnel information, and the second inter-domain tunnel information is used for establishing a tunnel through which the second border computing-aware user plane function network element sends a packet to the first border computing-aware user plane function network element.

In a possible design, the processing module 2020 is configured to generate the second inter-domain tunnel information; or determine that the second response message includes the second inter-domain tunnel information.

In a possible design, the transceiver module 2010 is further configured to: receive a third request message from a first computing management function network element in the first domain, where the third request message requests to establish a second session in the first domain of the cross-domain computing-aware network; send a fourth request message to the first border computing-aware user plane function network element, where the fourth request message requests to establish the second session; receive a fourth response message from the first border computing-aware user plane function network element, where the fourth response message indicates that the second session is established on the first border computing-aware user plane function network element side; and send a third response message to the first computing management function network element, where the third response message indicates that the second session is established.

When the communication apparatus performs an operation or a step corresponding to the second session management function network element in the method embodiment shown in FIG. 5A and FIG. 5B, the transceiver module 2010 is configured to: send a first request message to a first session management function network element in a first domain, where the first request message requests to establish a first session between the first domain and a second domain of a cross-domain computing-aware network; receive a first response message from the first session management function network element, where the first response message indicates that the first session is established on the first domain side; send a fifth request message to a second border computing-aware user plane function network element in the second domain, where the fifth request message requests to establish the first session, one end of the first session is connected to the second border computing-aware user plane function network element in the second domain, and the other end is connected to a first border computing-aware user plane function network element in the first domain; and receive a fifth response message from the second border computing-aware user plane function network element, where the fifth response message indicates that the first session is established on the second border computing-aware user plane function network element side.

In a possible design, the first request message includes first inter-domain tunnel information, and the first inter-domain tunnel information is used for establishing a tunnel through which the first border computing-aware user plane function network element sends a packet to the second border computing-aware user plane function network element.

In a possible design, the processing module 2020 is configured to generate the first inter-domain tunnel information; or the transceiver module 2010 is further configured to receive the first inter-domain tunnel information from the second border computing-aware user plane function network element.

In a possible design, the first request message includes identification information of the second border computing-aware user plane function network element.

In a possible design, the first response message includes second inter-domain tunnel information, and the fifth request message includes the second inter-domain tunnel information; and the second inter-domain tunnel information is used for establishing a tunnel through which the second border computing-aware user plane function network element sends a packet to the first border computing-aware user plane function network element.

In a possible design, the fifth request message includes identification information of the first border computing-aware user plane function network element.

In a possible design, the transceiver module 2010 is further configured to: receive a sixth request message from a second computing management function network element in the second domain, where the sixth request message requests to establish the first session; and send a sixth response message to the second computing management function network element, where the sixth response message indicates that the first session is established.

In a possible design, the sixth request message includes one or more of the following information: identification information of the first session management function network element, the identification information of the first border computing-aware user plane function network element, the identification information of the second border computing-aware user plane function network element, and identification information of the cross-domain computing-aware network.

In a possible design, the transceiver module 2010 is further configured to: receive a seventh request message from the second computing management function network element in the second domain, where the seventh request message requests to establish a third session in the second domain of the cross-domain computing-aware network; send an eighth request message to the second border computing-aware user plane function network element, where the eighth request message requests to establish the third session; receive an eighth response message from the second border computing-aware user plane function network element, where the eighth response message indicates that the third session is established on the second border computing-aware user plane function network element side; and send a seventh response message to the second computing management function network element, where the seventh response message indicates that the third session is established.

When the communication apparatus performs an operation or a step corresponding to the first computing management function network element in the method embodiment shown in FIG. 5A and FIG. 5B, the transceiver module 2010 is configured to: send a ninth request message to a second computing management function network element in a second domain, where the ninth request message requests to create a cross-domain computing-aware network, and the cross-domain computing-aware network includes a first domain and the second domain; and receive a ninth response message from the second computing management function network element, where the ninth response message indicates that the cross-domain computing-aware network is created on the second domain side.

In a possible design, the ninth request message includes one or more of the following information: identification information of a first session management function network element in the first domain, identification information of a first border computing-aware user plane function network element in the first domain, and identification information of the cross-domain computing-aware network.

In a possible design, the transceiver module 2010 is further configured to: send a third request message to the first session management function network element in the first domain, where the third request message requests to establish a second session in the first domain of the cross-domain computing-aware network; and receive a third response message from the first session management function network element, where the third response message indicates that the second session is established.

When the communication apparatus performs an operation or a step corresponding to the second computing management function network element in the method embodiment shown in FIG. 5A and FIG. 5B, the transceiver module 2010 is configured to: receive a ninth request message from a first computing management function network element in a first domain, where the ninth request message requests to create a cross-domain computing-aware network, and the cross-domain computing-aware network includes the first domain and a second domain; send a sixth request message to a second session management function network element in the second domain, where the sixth request message requests to establish a first session between the first domain and the second domain of the cross-domain computing-aware network, one end of the first session is connected to a second border computing-aware user plane function network element in the second domain, and the other end is connected to a first border computing-aware user plane function network element in the first domain; receive a sixth response message from the second session management function network element, where the sixth response message indicates that the first session is established; and send a ninth response message to the first computing management function network element, where the ninth response message indicates that the cross-domain computing-aware network is created on the second domain side.

In a possible design, the ninth request message includes one or more of the following information: identification information of a first session management function network element in the first domain, identification information of the first border computing-aware user plane function network element in the first domain, and identification information of the cross-domain computing-aware network.

In a possible design, the sixth request message includes one or more of the following information: the identification information of the first session management function network element in the first domain, the identification information of the first border computing-aware user plane function network element in the first domain, identification information of the second border computing-aware user plane function network element, and the identification information of the cross-domain computing-aware network.

In a possible design, the transceiver module 2010 is further configured to: send a seventh request message to the second session management function network element, where the seventh request message requests to establish a third session in the second domain of the cross-domain computing-aware network; and receive a seventh response message from the second session management function network element, where the seventh response message indicates that the third session is established.

When the communication apparatus performs an operation or a step corresponding to the first computing-aware user plane function network element in the method embodiment shown in FIG. 5A and FIG. 5B, the transceiver module 2010 is configured to: receive a second request message from a first session management function network element in a first domain, where the second request message requests to establish a first session between the first domain and a second domain of a cross-domain computing-aware network, one end of the first session is connected to a first border computing-aware user plane function network element in the first domain, and the other end is connected to a second border computing-aware user plane function network element in the second domain, and the second request message includes first inter-domain tunnel information; the processing module 2020 is configured to establish, based on the first inter-domain tunnel information, a tunnel through which the first border computing-aware user plane function network element sends a packet to the second border computing-aware user plane function network element; and the transceiver module 2010 is further configured to send a second response message to the first session management function network element, where the second response message indicates that the first session is established on the first border computing-aware user plane function network element side.

In a possible design, the processing module 2020 is further configured to establish an inter-domain forwarding neighbor relationship with the second border computing-aware user plane function network element; and the transceiver module 2010 is further configured to send a service request packet to the second border computing-aware user plane function network element based on the inter-domain forwarding neighbor relationship.

In a possible design, the second request message includes identification information of the second border computing-aware user plane function network element.

In a possible design, the processing module 2020 is further configured to generate second inter-domain tunnel information, where the second inter-domain tunnel information is used for establishing a tunnel through which the second border computing-aware user plane function network element sends a packet to the first border computing-aware user plane function network element, and the second response message includes the second inter-domain tunnel information.

In a possible design, the transceiver module 2010 is further configured to: receive a fourth request message from the first session management function network element, where the fourth request message requests to establish a second session in the first domain of the cross-domain computing-aware network; and send a fourth response message to the first session management function network element, where the fourth response message indicates that the second session is established on the first border computing-aware user plane function network element side.

When the communication apparatus performs an operation or a step corresponding to the second computing-aware user plane function network element in the method embodiment shown in FIG. 5A and FIG. 5B, the transceiver module 2010 is configured to: receive a fifth request message from a second session management function network element in a second domain, where the fifth request message requests to establish a first session between a first domain and the second domain of a cross-domain computing-aware network, one end of the first session is connected to a second border computing-aware user plane function network element in the second domain, and the other end is connected to a first border computing-aware user plane function network element in the first domain; and the fifth request message includes second inter-domain tunnel information; the processing module 2020 is configured to establish, based on the second inter-domain tunnel information, a tunnel through which the second border computing-aware user plane function network element sends a packet to the first border computing-aware user plane function network element; and the transceiver module 2010 is further configured to send a fifth response message to the second session management function network element, where the fifth response message indicates that the first session is established on the second border computing-aware user plane function network element side.

In a possible design, the processing module 2020 is further configured to establish an inter-domain announcement neighbor relationship with the first border computing-aware user plane function network element; and the transceiver module 2010 is further configured to send domain-level service capability information of the second domain to the first border computing-aware user plane function network element based on the inter-domain announcement neighbor relationship.

In a possible design, the fifth request message includes identification information of the first border computing-aware user plane function network element.

In a possible design, the processing module 2020 is further configured to generate first inter-domain tunnel information, where the first inter-domain tunnel information is used for establishing a tunnel through which the first border computing-aware user plane function network element sends a packet to the second border computing-aware user plane function network element; and the transceiver module 2010 is further configured to send the first inter-domain tunnel information to the second session management function network element.

In a possible design, the transceiver module 2010 is further configured to: receive an eighth request message from the second session management function network element, where the eighth request message requests to establish a third session in the second domain of the cross-domain computing-aware network; and send an eighth response message to the second session management function network element, where the eighth response message indicates that the third session is established on the second border computing-aware user plane function network element side.

When the communication apparatus performs an operation or a step corresponding to the first computing-aware user plane function network element in the method embodiment shown in FIG. 17, the transceiver module 2010 is configured to: receive a first announcement message from a second border computing-aware user plane function network element in a second domain, where the first announcement message includes domain-level service capability information, and the domain-level service capability information indicates a capability of the second domain to provide a first computing service to the outside; and
send a second announcement message to a first intra-domain computing-aware user plane function network element in a first domain, where the second announcement message includes the domain-level service capability information.

In a possible design, the first announcement message includes identification information of the second border computing-aware user plane function network element; and the processing module 2020 is configured to generate or update computing-aware routing information of the first computing service in a first border computing-aware user plane function network element based on the domain-level service capability information and the identification information of the second border computing-aware user plane function network element.

In a possible design, the second announcement message includes identification information of the first border computing-aware user plane function network element.

In a possible design, the domain-level service capability information includes computing service information of the first computing service corresponding to the second domain and/or load information of the second domain.

In a possible design, the transceiver module 2010 is configured to: receive a service request packet from the first intra-domain computing-aware user plane function network element, where the service request packet requests the first computing service, and the service request packet includes a service identifier of the first computing service; and send the service request packet to the second border computing-aware user plane function network element based on the computing-aware routing information of the first computing service.

When the communication apparatus performs an operation or a step corresponding to the second computing-aware user plane function network element in the method embodiment shown in FIG. 17, the transceiver module 2010 is configured to: receive a third announcement message from a second intra-domain computing-aware user plane function network element in a second domain, where the third announcement message includes service capability information of an edge computing node associated with the second intra-domain computing-aware user plane function network element, and the service capability information indicates a capability of the edge computing node to provide a first computing service to the outside; the processing module 2020 is configured to generate domain-level service capability information based on the service capability information of the edge computing node, where the domain-level service capability information indicates a capability of the second domain to provide the first computing service to the outside; and the transceiver module 2010 is further configured to send a first announcement message to a first border computing-aware user plane function network element in a first domain, where the first announcement message includes the domain-level service capability information.

In a possible design, the third announcement message includes identification information of the second intra-domain computing-aware user plane function network element; and the processing module 2020 is further configured to generate or update computing-aware routing information of the first computing service in a second border computing-aware user plane function network element based on the service capability information of the edge computing node and the identification information of the second intra-domain computing-aware user plane function network element.

In a possible design, the first announcement message includes identification information of the second border computing-aware user plane function network element.

In a possible design, the service capability information of the edge computing node includes computing service information of the first computing service corresponding to the edge computing node and/or load information of the edge computing node; and the domain-level service capability information includes computing service information of the first computing service corresponding to the second domain and/or load information of the second domain.

In a possible design, the transceiver module 2010 is configured to: receive a service request packet from the first border computing-aware user plane function network element, where the service request packet requests the first computing service, and the service request packet includes a service identifier of the first computing service; and send the service request packet to the second intra-domain computing-aware user plane function network element based on the computing-aware routing information of the first computing service.

The processing module 2020 in the communication apparatus may be implemented by at least one processor or a processor-related circuit component, and the transceiver module 2010 may be implemented by at least one transceiver, a transceiver-related circuit component, or a communication interface. An operation and/or a function of each module in the communication apparatus is used for implementing a corresponding procedure of the method shown in FIG. 5A and FIG. 5B or FIG. 19. For brevity, details are not described herein again. Optionally, the communication apparatus may further include a storage module. The storage module may be configured to store data and/or instructions. The transceiver module 2010 and/or the processing module 2020 may read the data and/or the instructions in the storage module, so that the communication apparatus implements the corresponding method. The storage module may be implemented, for example, by using at least one memory.

The storage module, the processing module, and the transceiver module may exist separately, or all or some of the modules may be integrated. For example, the storage module and the processing module are integrated, or the processing module and the transceiver module are integrated.

FIG. 21 is a schematic diagram of another structure of a communication apparatus according to an embodiment of this application. The communication apparatus may be configured to implement a function corresponding to the first session management function network element, the second session management function network element, the first computing management function network element, the second computing management function network element, the first computing-aware user plane function network element, or the second computing-aware user plane function network element in the foregoing method embodiments. The communication apparatus may be a network device, an apparatus that can support the network device in implementing a corresponding function in the foregoing method embodiments, or the like.

The communication apparatus 2100 may include a processor 2101, a communication interface 2102, and a memory 2103. The communication interface 2102 is configured to communicate with another device through a transmission medium. The communication interface 2102 may be a transceiver, or may be an interface circuit such as a transceiver circuit or a transceiver chip. The memory 2103 is configured to store program instructions and/or data. The processor 2101 is configured to execute the program instructions stored in the memory 2103, to implement the method in the foregoing method embodiments. Optionally, the memory 2103 is coupled to the processor 2101. The coupling is indirect coupling or a communication connection between apparatuses, units, or modules, may be in an electrical form, a mechanical form, or another form, and is used for exchanging information between the apparatuses, the units, or the modules.

In an embodiment, the communication interface 2102 may be specifically configured to perform an action of the transceiver module 2010, and the processor 2101 may be specifically configured to perform an action of the processing module 2020. Details are not described herein again in this application.

A specific connection medium between the communication interface 2102, the processor 2101, and the memory 2103 is not limited in this embodiment of this application. In this embodiment of this application, the memory 2103, the processor 2101, and the communication interface 2102 are connected through a bus 2104 in FIG. 21. The bus is represented by a bold line in FIG. 21. A connection manner between other components is merely an example for description, and is not limited thereto. The bus may be classified into an address bus, a data bus, a control bus, and the like. For ease of representation, only one bold line is used for representation in FIG. 21, but this does not mean that there is only one bus or only one type of bus.

An embodiment of this application further provides a chip system, including a processor. The processor is coupled to a memory. The memory is configured to store a program or instructions. When the program or the instructions is/are executed by the processor, the chip system is enabled to implement the method corresponding to the terminal device or the method corresponding to the network device in any one of the foregoing method embodiments.

Optionally, there may be one or more processors in the chip system. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory (read-only memory, ROM). The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a computer-readable storage medium. The computer-readable storage medium stores computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

An embodiment of this application further provides a communication system. The communication system includes one or more of the following communication apparatuses: a first session management function network element in a first domain, a first computing management function network element in the first domain, a first border computing-aware user plane function network element in the first domain, a second session management function network element in a second domain, a second computing management function network element in the second domain, or a second border computing-aware user plane function network element in the second domain.

The first session management function network element, the first computing management function network element, the first border computing-aware user plane function network element, the second session management function network element, the second computing management function network element, and the second border computing-aware user plane function network element may cooperate with each other to perform the method in any one of the foregoing method embodiments, create a cross-domain computing-aware network, and implement session management in the cross-domain computing-aware network.

Optionally, the communication system further includes a first intra-domain computing-aware user plane function network element in the first domain and a second intra-domain computing-aware user plane function network element in the second domain.

Optionally, the communication system further includes a terminal device and an edge computing node associated with one or more computing-aware user plane functions of the first border computing-aware user plane function network element, the second border computing-aware user plane function network element, the first intra-domain computing-aware user plane function network element, and the second intra-domain computing-aware user plane function network element.

An embodiment of this application further provides another communication system. The communication system includes a first border computing-aware user plane function network element in a first domain and a second border computing-aware user plane function network element in a second domain. The first border computing-aware user plane function network element may cooperate with the second border computing-aware user plane function network element to perform the method in any one of the foregoing method embodiments, to implement cross-domain information announcement and packet forwarding in a cross-domain computing-aware network.

Optionally, the communication system further includes a first intra-domain computing-aware user plane function network element in the first domain and a second intra-domain computing-aware user plane function network element in the second domain.

Optionally, the communication system further includes a terminal device and an edge computing node associated with one or more computing-aware user plane functions of the first border computing-aware user plane function network element, the second border computing-aware user plane function network element, the first intra-domain computing-aware user plane function network element, and the second intra-domain computing-aware user plane function network element.

It should be understood that, the processor in embodiments of this application may be a CPU, or may be another general-purpose processor, a DSP, an ASIC, an FPGA or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that numbers in various embodiments of this application are merely used for differentiation for ease of description. Sequence numbers of the foregoing processes or steps do not mean execution sequences. The execution sequences of the processes or steps should be determined based on functions and internal logic of the processes or steps, and should not constitute any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A session management method for a cross-domain computing-aware network, wherein the method comprises:
receiving, by a first session management function network element in a first domain, a first request message from a second session management function network element in a second domain, wherein the first request message requests to establish a first session between the first domain and the second domain of a cross-domain computing-aware network;
sending, by the first session management function network element, a second request message to a first border computing-aware user plane function network element in the first domain, wherein the second request message requests to establish the first session, one end of the first session is connected to the first border computing-aware user plane function network element in the first domain, and the other end is connected to a second border computing-aware user plane function network element in the second domain;
receiving, by the first session management function network element, a second response message from the first border computing-aware user plane function network element, wherein the second response message indicates that the first session is established on the first border computing-aware user plane function network element side; and
sending, by the first session management function network element, a first response message to the second session management function network element, wherein the first response message indicates that the first session is established on the first domain side.

2. The method according to claim 1, wherein the first request message comprises first inter-domain tunnel information, and the second request message comprises the first inter-domain tunnel information, wherein
the first inter-domain tunnel information is used for establishing a tunnel through which the first border computing-aware user plane function network element sends a packet to the second border computing-aware user plane function network element.

3. The method according to claim 1 or 2, wherein the first request message comprises identification information of the second border computing-aware user plane function network element, and the second request message comprises the identification information of the second border computing-aware user plane function network element.

4. The method according to any one of claims 1 to 3, wherein the first response message comprises second inter-domain tunnel information, and the second inter-domain tunnel information is used for establishing a tunnel through which the second border computing-aware user plane function network element sends a packet to the first border computing-aware user plane function network element.

5. The method according to claim 4,
wherein the method further comprises: generating, by the first session management function network element, the second inter-domain tunnel information;
or
wherein the second response message comprises the second inter-domain tunnel information.

6. The method according to any one of claims 1 to 5, wherein the method further comprises:
receiving, by the first session management function network element, a third request message from a first computing management function network element in the first domain, wherein the third request message requests to establish a second session in the first domain of the cross-domain computing-aware network;
sending, by the first session management function network element, a fourth request message to the first border computing-aware user plane function network element, wherein the fourth request message requests to establish the second session;
receiving, by the first session management function network element, a fourth response message from the first border computing-aware user plane function network element, wherein the fourth response message indicates that the second session is established on the first border computing-aware user plane function network element side; and
sending, by the first session management function network element, a third response message to the first computing management function network element, wherein the third response message indicates that the second session is established.

7. A session management method for a cross-domain computing-aware network, wherein the method comprises:
sending, by a second session management function network element in a second domain, a first request message to a first session management function network element in a first domain, wherein the first request message requests to establish a first session between the first domain and the second domain of a cross-domain computing-aware network;
receiving, by the second session management function network element, a first response message from the first session management function network element, wherein the first response message indicates that the first session is established on the first domain side;
sending, by the second session management function network element, a fifth request message to a second border computing-aware user plane function network element in the second domain, wherein the fifth request message requests to establish the first session, one end of the first session is connected to the second border computing-aware user plane function network element in the second domain, and the other end is connected to a first border computing-aware user plane function network element in the first domain; and
receiving, by the second session management function network element, a fifth response message from the second border computing-aware user plane function network element, wherein the fifth response message indicates that the first session is established on the second border computing-aware user plane function network element side.

8. The method according to claim 7, wherein the first request message comprises first inter-domain tunnel information, and the first inter-domain tunnel information is used for establishing a tunnel through which the first border computing-aware user plane function network element sends a packet to the second border computing-aware user plane function network element.

9. The method according to claim 8, wherein the method further comprises:
generating, by the second session management function network element, the first inter-domain tunnel information; or
receiving, by the second session management function network element, the first inter-domain tunnel information from the second border computing-aware user plane function network element.

10. The method according to any one of claims 7 to 9, wherein the first request message comprises identification information of the second border computing-aware user plane function network element.

11. The method according to any one of claims 7 to 10, wherein the first response message comprises second inter-domain tunnel information, and the fifth request message comprises the second inter-domain tunnel information; and
the second inter-domain tunnel information is used for establishing a tunnel through which the second border computing-aware user plane function network element sends a packet to the first border computing-aware user plane function network element.

12. The method according to any one of claims 7 to 11, wherein the fifth request message comprises identification information of the first border computing-aware user plane function network element.

13. The method according to any one of claims 7 to 12, wherein the method further comprises:
receiving, by the second session management function network element, a sixth request message from a second computing management function network element in the second domain, wherein the sixth request message requests to establish the first session; and
sending, by the second session management function network element, a sixth response message to the second computing management function network element, wherein the sixth response message indicates that the first session is established.

14. The method according to claim 13, wherein the sixth request message comprises one or more of the following information:
identification information of the first session management function network element, identification information of the first border computing-aware user plane function network element, identification information of the second border computing-aware user plane function network element, and identification information of the cross-domain computing-aware network.

15. The method according to any one of claims 7 to 14, wherein the method further comprises:
receiving, by the second session management function network element, a seventh request message from the second computing management function network element in the second domain, wherein the seventh request message requests to establish a third session in the second domain of the cross-domain computing-aware network;
sending, by the second session management function network element, an eighth request message to the second border computing-aware user plane function network element, wherein the eighth request message requests to establish the third session;
receiving, by the second session management function network element, an eighth response message from the second border computing-aware user plane function network element, wherein the eighth response message indicates that the third session is established on the second border computing-aware user plane function network element side; and
sending, by the second session management function network element, a seventh response message to the second computing management function network element, wherein the seventh response message indicates that the third session is established.

16. A session management method for a cross-domain computing-aware network, wherein the method comprises:
sending, by a first computing management function network element in a first domain, a ninth request message to a second computing management function network element in a second domain, wherein the ninth request message requests to create a cross-domain computing-aware network, and the cross-domain computing-aware network comprises the first domain and the second domain; and
receiving, by the first computing management function network element, a ninth response message from the second computing management function network element, wherein the ninth response message indicates that the cross-domain computing-aware network is created on the second domain side.

17. The method according to claim 16, wherein the ninth request message comprises one or more of the following information:
identification information of a first session management function network element in the first domain, identification information of a first border computing-aware user plane function network element in the first domain, and identification information of the cross-domain computing-aware network.

18. The method according to claim 16 or 17, wherein the method further comprises:
sending, by the first computing management function network element, a third request message to the first session management function network element in the first domain, wherein the third request message requests to establish a second session in the first domain of the cross-domain computing-aware network; and
receiving, by the first computing management function network element, a third response message from the first session management function network element, wherein the third response message indicates that the second session is established.

19. A session management method for a cross-domain computing-aware network, wherein the method comprises:
receiving, by a second computing management function network element in a second domain, a ninth request message from a first computing management function network element in a first domain, wherein the ninth request message requests to create a cross-domain computing-aware network, and the cross-domain computing-aware network comprises the first domain and the second domain;
sending, by the second computing management function network element, a sixth request message to a second session management function network element in the second domain, wherein the sixth request message requests to establish a first session between the first domain and the second domain of the cross-domain computing-aware network, one end of the first session is connected to a second border computing-aware user plane function network element in the second domain, and the other end is connected to a first border computing-aware user plane function network element in the first domain;
receiving, by the second computing management function network element, a sixth response message from the second session management function network element, wherein the sixth response message indicates that the first session is established; and
sending, by the second computing management function network element, a ninth response message to the first computing management function network element, wherein the ninth response message indicates that the cross-domain computing-aware network is created on the second domain side.

20. The method according to claim 19, wherein the sixth request message comprises one or more of the following information:
identification information of a first session management function network element in the first domain, identification information of the first border computing-aware user plane function network element in the first domain, identification information of the second border computing-aware user plane function network element, and identification information of the cross-domain computing-aware network.

21. The method according to claim 19 or 20, wherein the method further comprises:
sending, by the second computing management function network element, a seventh request message to the second session management function network element, wherein the seventh request message requests to establish a third session in the second domain of the cross-domain computing-aware network; and
receiving, by the second computing management function network element, a seventh response message from the second session management function network element, wherein the seventh response message indicates that the third session is established.

22. A session management method for a cross-domain computing-aware network, wherein the method comprises:
receiving, by a first border computing-aware user plane function network element in a first domain, a second request message from a first session management function network element in the first domain, wherein the second request message requests to establish a first session between the first domain and a second domain of a cross-domain computing-aware network, one end of the first session is connected to the first border computing-aware user plane function network element in the first domain, and the other end is connected to a second border computing-aware user plane function network element in the second domain, and the second request message comprises first inter-domain tunnel information;
establishing, by the first border computing-aware user plane function network element based on the first inter-domain tunnel information, a tunnel through which the first border computing-aware user plane function network element sends a packet to the second border computing-aware user plane function network element; and
sending, by the first border computing-aware user plane function network element, a second response message to the first session management function network element, wherein the second response message indicates that the first session is established on the first border computing-aware user plane function network element side.

23. The method according to claim 22, wherein the method further comprises:
establishing, by the first border computing-aware user plane function network element, an inter-domain forwarding neighbor relationship with the second border computing-aware user plane function network element, wherein the inter-domain forwarding neighbor relationship is used by the first border computing-aware user plane function network element to send a service request packet to the second border computing-aware user plane function network element.

24. The method according to claim 22 or 23, wherein the second request message comprises identification information of the second border computing-aware user plane function network element.

25. The method according to any one of claims 22 to 24, wherein the method further comprises:
generating, by the first border computing-aware user plane function network element, second inter-domain tunnel information, wherein the second inter-domain tunnel information is used for establishing a tunnel through which the second border computing-aware user plane function network element sends a packet to the first border computing-aware user plane function network element, and the second response message comprises the second inter-domain tunnel information.

26. The method according to any one of claims 22 to 25, wherein the method further comprises:
receiving, by the first border computing-aware user plane function network element, a fourth request message from the first session management function network element, wherein the fourth request message requests to establish a second session in the first domain of the cross-domain computing-aware network; and
sending, by the first border computing-aware user plane function network element, a fourth response message to the first session management function network element, wherein the fourth response message indicates that the second session is established on the first border computing-aware user plane function network element side.

27. A session management method for a cross-domain computing-aware network, wherein the method comprises:
receiving, by a second border computing-aware user plane function network element in a second domain, a fifth request message from a second session management function network element in the second domain, wherein the fifth request message requests to establish a first session between a first domain and the second domain of a cross-domain computing-aware network, one end of the first session is connected to the second border computing-aware user plane function network element in the second domain, and the other end is connected to a first border computing-aware user plane function network element in the first domain; and the fifth request message comprises second inter-domain tunnel information;
establishing, by the second border computing-aware user plane function network element based on the second inter-domain tunnel information, a tunnel through which the second border computing-aware user plane function network element sends a packet to the first border computing-aware user plane function network element; and
sending, by the second border computing-aware user plane function network element, a fifth response message to the second session management function network element, wherein the fifth response message indicates that the first session is established on the second border computing-aware user plane function network element side.

28. The method according to claim 27, wherein the method further comprises:
establishing, by the second border computing-aware user plane function network element, an inter-domain announcement neighbor relationship with the first border computing-aware user plane function network element, wherein the inter-domain announcement neighbor relationship is used by the second border computing-aware user plane function network element to announce domain-level service capability information of the second domain to the first border computing-aware user plane function network element.

29. The method according to claim 27 or 28, wherein the fifth request message comprises identification information of the first border computing-aware user plane function network element.

30. The method according to any one of claims 27 to 29, wherein the method further comprises:
generating, by the second border computing-aware user plane function network element, first inter-domain tunnel information, wherein the first inter-domain tunnel information is used for establishing a tunnel through which the first border computing-aware user plane function network element sends a packet to the second border computing-aware user plane function network element; and
sending, by the second border computing-aware user plane function network element, the first inter-domain tunnel information to the second session management function network element.

31. The method according to any one of claims 27 to 30, wherein the method further comprises:
receiving, by the second border computing-aware user plane function network element, an eighth request message from the second session management function network element, wherein the eighth request message requests to establish a third session in the second domain of the cross-domain computing-aware network; and
sending, by the second border computing-aware user plane function network element, an eighth response message to the second session management function network element, wherein the eighth response message indicates that the third session is established on the second border computing-aware user plane function network element side.

32. A session management method for a cross-domain computing-aware network, wherein the method comprises:
receiving, by a first border computing-aware user plane function network element in a first domain, a first announcement message from a second border computing-aware user plane function network element in a second domain, wherein the first announcement message comprises domain-level service capability information, and the domain-level service capability information indicates a capability of the second domain to provide a first computing service to the outside; and
sending, by the first border computing-aware user plane function network element, a second announcement message to an intra-first domain computing-aware user plane function network element in the first domain, wherein the second announcement message comprises the domain-level service capability information.

33. The method according to claim 32, wherein the first announcement message comprises identification information of the second border computing-aware user plane function network element; and
the method further comprises:
generating or updating, by the first border computing-aware user plane function network element, computing-aware routing information of the first computing service in the first border computing-aware user plane function network element based on the domain-level service capability information and the identification information of the second border computing-aware user plane function network element.

34. The method according to claim 32 or 33, wherein the second announcement message comprises identification information of the first border computing-aware user plane function network element.

35. The method according to any one of claims 32 to 34, wherein the domain-level service capability information comprises computing service information that is of the first computing service and that corresponds to the second domain and/or load information of the second domain.

36. The method according to any one of claims 32 to 35, wherein the method further comprises:
receiving, by the first border computing-aware user plane function network element, a service request packet from the intra-first domain computing-aware user plane function network element, wherein the service request packet requests the first computing service, and the service request packet comprises a service identifier of the first computing service; and
sending, by the first border computing-aware user plane function network element, the service request packet to the second border computing-aware user plane function network element based on the computing-aware routing information of the first computing service.

37. A session management method for a cross-domain computing-aware network, wherein the method comprises:
receiving, by a second border computing-aware user plane function network element in a second domain, a third announcement message from an intra-second domain computing-aware user plane function network element in the second domain, wherein the third announcement message comprises service capability information of an edge computing node associated with the intra-second domain computing-aware user plane function network element, and the service capability information indicates a capability of the edge computing node to provide a first computing service to the outside;
generating, by the second border computing-aware user plane function network element, domain-level service capability information based on the service capability information of the edge computing node, wherein the domain-level service capability information indicates a capability of the second domain to provide the first computing service to the outside; and
sending, by the second border computing-aware user plane function network element, a first announcement message to a first border computing-aware user plane function network element in a first domain, wherein the first announcement message comprises the domain-level service capability information.

38. The method according to claim 37, wherein the third announcement message comprises identification information of the intra-second domain computing-aware user plane function network element; and
the method further comprises:
generating or updating, by the second border computing-aware user plane function network element, computing-aware routing information of the first computing service in the second border computing-aware user plane function network element based on the service capability information of the edge computing node and the identification information of the intra-second domain computing-aware user plane function network element.

39. The method according to claim 37 or 38, wherein the first announcement message comprises identification information of the second border computing-aware user plane function network element.

40. The method according to any one of claims 37 to 39, wherein the service capability information of the edge computing node comprises computing service information that is of the first computing service and that corresponds to the edge computing node and/or load information of the edge computing node; and
the domain-level service capability information comprises computing service information that is of the first computing service and that corresponds to the second domain and/or load information of the second domain.

41. The method according to any one of claims 37 to 40, wherein the method further comprises:
receiving, by the second border computing-aware user plane function network element, a service request packet from the first border computing-aware user plane function network element, wherein the service request packet requests the first computing service, and the service request packet comprises a service identifier of the first computing service; and
sending, by the second border computing-aware user plane function network element, the service request packet to the intra-second domain computing-aware user plane function network element based on the computing-aware routing information of the first computing service.

42. A communication apparatus, wherein the apparatus comprises at least one processor, and the at least one processor is coupled to at least one memory, wherein
the at least one processor is configured to execute a computer program or instructions stored in the at least one memory, to enable the apparatus to perform the method according to any one of claims 1 to 41.

43. A communication apparatus, comprising a processor and an interface circuit, wherein
the interface circuit is configured to exchange code instructions or data with the processor; and
the processor is configured to perform the method according to any one of claims 1 to 41.

44. A computer-readable storage medium, configured to store instructions, wherein when the instructions are executed, the method according to any one of claims 1 to 41 is implemented.

45. A computer program product, wherein the computer program product comprises instructions; and when the instructions are run, the method according to any one of claims 1 to 41 is implemented.

46. A communication system, wherein the communication system comprises one or more of the following communication apparatuses:
a first session management function network element, a second session management function network element, a first computing management function network element, a second computing management function network element, a first border computing-aware user plane function network element, and a second border computing-aware user plane function network element, wherein
the first session management function network element is configured to perform the method according to any one of claims 1 to 6;
the second session management function network element is configured to perform the method according to any one of claims 7 to 15;
the first computing management function network element is configured to perform the method according to any one of claims 16 to 18;
the second computing management function network element is configured to perform the method according to any one of claims 19 to 21;
the first border computing-aware user plane function network element is configured to perform the method according to any one of claims 22 to 26; and
the second border computing-aware user plane function network element is configured to perform the method according to any one of claims 27 to 31.

47. A communication system, wherein the communication system comprises a first border computing-aware user plane function network element and a second border computing-aware user plane function network element, wherein
the first border computing-aware user plane function network element is configured to perform the method according to any one of claims 32 to 36; and
the second border computing-aware user plane function network element is configured to perform the method according to any one of claims 37 to 41.
